(19) Europäisches Patentamt

European Patent Office

Office européen des brevets

(11) **EP 1 125 136 B1**

(12) **EUROPEAN PATENT SPECIFICATION**

(45) Date of publication and mention
of the grant of the patent:
**31.05.2006 Bulletin 2006/22**

(51) Int Cl.:
***G01N 35/00*** (2006.01)   ***G11B 7/007*** (2006.01)
***B01L 3/00*** (2006.01)

(21) Application number: **99956696.1**

(22) Date of filing: **26.10.1999**

(86) International application number:
**PCT/US1999/025136**

(87) International publication number:
**WO 2000/026677 (11.05.2000 Gazette 2000/19)**

(54) **TRACKABLE OPTICAL DISCS WITH CONCURRENTLY READABLE ANALYTE MATERIAL**

SPURFOLGE-FÄHIGE OPTISCHE PLATTEN MIT GLEICHZEITIG LESBAREM
ANALYTENMATERIAL

DISQUES OPTIQUES LISIBLES PORTANT UN MATERIAU ANALYTE POUVANT ETRE LU
SIMULTANEMENT

(84) Designated Contracting States:
**AT BE CH CY DE DK ES FI FR GB GR IE IT LI LU
MC NL PT SE**

(30) Priority: **30.10.1998 US 183842**
**11.05.1999 US 311329**
**14.05.1999 US 134368 P**

(43) Date of publication of application:
**22.08.2001 Bulletin 2001/34**

(72) Inventors:
• **WORTHINGTON, Mark, O.**
**Tustin, CA 92780 (US)**
• **VIRTANEN, Jorma**
**Irvine, CA 92612 (US)**

(74) Representative: **Smaggasgale, Gillian Helen et al**
**W.P. Thompson & Co,**
**55 Drury Lane**
**London WC2B 5SQ (GB)**

(73) Proprietors:
• **Burstein Technologies, Inc.**
**Irvine, CA 92618 (US)**
• **Nagaoka & Co., Ltd.**
**Hyogo 662-0934 (JP)**

(56) References cited:
**EP-A- 0 417 305**     **WO-A-96/09548**
**WO-A-98/01533**     **WO-A-98/28623**

**Description**

Field of the Invention

The present invention relates to the design and manufacture of optical discs and their use in optical disc readers and reader/writers. Specifically, the invention relates to the design, manufacture and use of optical discs that permit the concurrent and discriminable acquisition of signals from nonoperational structures of the disc, such as analyte-specific signal elements, and from operational structures of the disc, such as tracking structures.

Background of the Invention

Over the past decade, scanning confocal laser microscopy (SCLM) has revolutionized life science imaging. In scanning confocal laser microscopy, laser light is scanned across a specimen at a precisely chosen focal plane. Light reflected back from the specimen is collected, excluding light from all but the specifically-illuminated confocal plane. By excluding light reflected from all but the chosen image plane, glare is eliminated, producing crisp sectional images from full-thickness, unfixed tissues and cells. In addition, the reproducible spatial precision of the computer-driven scanning process permits the exact spatial registration of the individually-acquired sectional images, allowing the tomographic reconstruction of a three-dimensional image by overlay of the severally-acquired sectional images. Wiesendanger, Scanning Probe Microscopy and Spectroscopy : Methods and Applications, Cambridge Univ. Press (July 1995); Cullander, *J. Investig. Dermatol. Symp. Proc.* 3:166 - 171 (1998); Paddock, *Proc. Soc. Exp. Biol. Med.* 213:24-31 (1996); Ockleford, J. Pathol. 176:1-2 (1995); Laurent *et al., Biol. Cell.* 80:229-240 (1994).

The use of laser-excitable fluorescent dyes and proteins as ligand-specific probes has permitted scanning laser microscopy to be adapted beyond standard cell and tissue imaging to a wide variety of assays. Thus, laser scanning cytometers have proven particularly useful in fluorescence-based cytometric assays of cell cycle events. Juan *et al., Methods Mol Biol.,* 91: 67-75 (1996); Juan *et al., Cell Biol.* 2: 261-273 (1998); Juan *et al., Cell Biol.* 2: 341-350 (1998); Catch *et al., Cytometry* 34: 36-38 (1998); Luther *et al., Microscopy & Micro analysis,* 3: 235-236 (1997).

Ashby *et al.,* U.S. Patent No. 5,549,588, describes scanning laser microscopic assay of "genome reporter matrices." In these genome reporter matrices, each element of a spatially-addressable matrix contains cells in which expression of a common fluorescent reporter is driven from a distinct transcriptional regulatory element. The strength of the fluorescence signal acquired during scanning identifies the level of gene expression driven by each spatially-identifiable transcriptional regulatory element.

Scanning laser microscopy has also been adapted to scanning of nucleic acid microarrays built on silicon chips, Lashkari *et al., Proc. Natl. Acad. Sci. USA* 94: 13057-62 (1997); DeRisi *et al.,* Science, 278:680-86 (1997); Wodicka *et al.*, *Nature* Biotechnology, 15:1359-67 (1997); to measurement of ionic fluxes in cells, Schild, *Cell. Calcium* 19:281-296 (1996); Turner *et al., J. Investig. Dermatol. Symp. Proc.* 3:136-142 (1998); and to measurement of the subcellular distribution of various cellular components, Takubo *et al., Haematologica* 82:643-647 (1997).

Yet each of these applications of SCLM demands a specialized piece of computer-controlled optical equipment. There thus exists a need in the art for an inexpensive generic device that permits computer-driven confocal laser scanning of a microscopic sample.

The minimum mechanical requirements for such a device - laser, focusing and detection optics, precision scanning means, and computer interface - may all be found in standard optical disc readers or writers. Optical disc readers and reader/writers, such as for CD and DVD, focus light from a solid state laser on a surface of a spinning disc and scan the disc to detect information that is encoded digitally in spatially-addressable patterns of submicron structures.

Adaptation of optical discs and optical disc readers/writers to laser scanning microscopic applications would present marked advantages over existing approaches. Principal among these are widespread availability and low cost. The worldwide installed base of CD and DVD-ROM readers is estimated at present to be about 300 million units, and is expected within the next 5 years to rise to over 500 million units. *Optical Publishing Industry Assessment,* 9th ed. (Infotech, Inc., Woodstock, Vermont) (1998). The devices are ubiquitous, inexpensive, and reliable.

Other advantages of using optical discs for detection and characterization of microscopic structures are discussed in WO 96/09548 (Gordon), EP A 392475 (Idemitsu), EP A 417 305 (Idemitsu), EP A 504432 (Idemitsu), WO 98/28623 (Gamera), and WO 98/12559 (Demers), all of which are incorporated herein by reference. Further advantages are set forth in international applications published as WO 98/38510, WO 98/38510, and WO 98/01533, the disclosures of which are incorporated herein by reference.

However, although optical disc readers possess the mechanical prerequisites for effective confocal laser microscopic scanning, operational requirements of existing disc readers present significant impediments to the successful detection and characterization of microscopic structures disposed upon the surface of an optical disc.

There are at least four basic operational requirements that must be satisfied for an optical drive correctly to read and decode the data present within an optical disc: the reader must focus correctly on the disc plane encoding the data, it must control the radial positioning of its optical pickup, it must control the tangential positioning of its optical pickup, and it must control the speed of disc rotation. The most common optical disc systems use elements of the optical medium itself to satisfy at least some of these requirements.

Thus, in a typical pressed CD, the disc substrate is impressed with a spiral track made up of a series of embossed pits, the signals from which are used by the optical disc reader to maintain proper focus and tracking. In CD-R, the data-encoding dye marks written by the user provide the requisite tracking structures during subsequent reading. More generally, in each of the existing optical disc standards, the structures used to encode data serve simultaneously to provide operational signals that the reader requires to control its operations. Although efficient, such standards make no provision for acquiring data from nonoperational structures disposed upon the disc.

For example, because the tracking structures are obligately embedded within the information layer of the disc, structures applied to the laser-proximal surface of the disc may interfere with detection of such operational structures, and thus interfere with correct operation of the reader. Furthermore, such nonoperational structures may lie sufficiently outside the focal plane of the disc's operational structures as to prevent their concurrent and discriminable detection by the reader's optical pickup.

One solution to this problem is to use nonstandard drives. One such proposed drive uses two optical pickups, one to detect tracking information, the other to detect surface structures, EP A 392475 (Idemitsu), EP A 417 305 (Idemitsu), EP A 504432 (Idemitsu), and EP A 417 305 (Idemitsu). However, such modification moots a principal advantage of using optical disc readers for laser microscopic detection, which is the ecumenical distribution of such devices.

There thus exists a need in the art for optical discs that permit a standard optical disc reader or reader/writer to acquire signals from nonoperational structures of the disc, such as analyte-specific signal elements disposed thereon, concurrently and discriminably with signals generated by operational structures of the disc, such as tracking structures.

Summary of the Invention

The present invention solves these and other problems in the art by providing a trackable optical disc with the features of claim 1. Such discs permit an optical disc reader or reader/writer to acquire signals from nonoperational structures of the disc, such as analyte-specific signal elements disposed thereon, concurrently and discriminably with signals generated by operational structures of the disc, such as tracking structures.

The present invention is based in part upon the novel discovery that nonoperational structures can be disposed confocally with the operational structures of an optical disc, and yet laser-proximal to a previously-applied reflective layer, thus solving the optical problem of maintaining focus simultaneously on operational and nonoperational structures. This geometry is achieved by manufacturing novel discs in which the patterned surface of the disc's solid substrate (that is, the substrate surface that contributes to the disc's information layer) is presented as the substrate's most laser-proximal surface ("inverted discs"). Because the beam radius at the operational focal plane is substantially smaller than that at the disc's first surface, these inverted discs newly make possible the use of nonoperational features of submicron dimension.

Such discs can be manufactured by using a conventional mother part as stamper, thus generating forward image inverted discs with operational structures presented in positive relief. A second manufacturing process, in which a father or son part is used as stamper, can also be used. In this second process of manufacture, the master has an image reversed from convention; the resulting forward image inverted discs have operational structures presented in negative relief.

Thus, in a first aspect, the instant invention presents optical discs comprising at least one nonoperational structure that is readable concurrently with the operational (and particularly, tracking) structure. In certain of these embodiments, the nonoperational structure, which may be an analyte-specific signal element, is disposed confocally with the disc's operational structure.

In another aspect, the present invention provides an optical disc assembly having readable nonoperational structures, comprising: a trackable optical disc according to the invention and cover, wherein the cover further focuses an incident laser on the disc's information layer. In some embodiments, the cover is nonintegral to the disc and attachable thereto. In other embodiments, the cover is integral to the disc. In some embodiments, the cover consists essentially of plastic, essentially of glass, or essentially of silicon.'

The invention provides additional approaches for achieving confocal disposition of the operational and nonoperational features.

Thus, in yet another aspect, an image of the operational structures of the disc, particularly an image of the trackable structure, is holographically-projected to a plane confocal with the nonoperational structures. In preferred embodiments, a reflection hologram is used. Advantages of holograms include physical segregation of the operational structures and nonoperational structures on the disc.

An additional approach for such physical segregation takes advantage of multilayer DVD technology.

Thus, in another aspect, the present invention provides an optical disc having a readable nonoperational structure, comprising a reflective layer; an additional reflective layer; and a nonoperational structure, wherein either the reflective layer or said additional reflective layer has a structure trackable by an optical disc reader, and wherein the nonoperational structure is disposed readably with the trackable structure. In typical embodiments compatible with DVD standards, one of the reflective layers is semireflective, and the nonoperational structure is disposed confocally with a surface of either the reflective layer or the semireflective layer.

Although the above-described novel approaches solve the optical problem of establishing focus concurrently on the operational and nonoperational structures, they do not of themselves necessarily permit the concurrent detection of such structures. First, these approaches do not necessarily solve the problem of maintaining tracking, focus and synch (speed control) in the presence of such confocally disposed nonoperational structures. Second, nonoperational structures that are disposed confocally with the operational features (e.g., pits) may cause signals that are insufficiently distinguishable from the operational (and data-encoding) signals as to prevent their discrimination therefrom.

The present invention is thus further based upon the additional discovery that the electrical signals generated during disc reading have a far greater informational content than has previously been understood. That is, the electrical signals that were designed to provide two specific types of information - the information necessary for disc operation and the information that is digitally encoded on the disc - may in fact be queried and measured in a variety of ways to reveal a previously untapped wealth of information about the physical structure of the disc.

Additionally, the present invention demonstrates that the required operational components of these electrical signals can affirmatively be segregated, thus freeing the remainder of the signal to be used for such nonoperational measurements without interference with successful drive operation.

Thus, in yet another aspect, the invention provides discs designed to permit segregation of the portion of the electrical signals required for disc operation, particularly that portion of the signal required for disc tracking, from those portions of the signal used to report the response by nonoperational structures on the disc. In one series of exemplified embodiments, discs are presented that allow a frequency segregation of tracking-signals from nonoperational signals in the HF (RF, quad-sum) signal; this permits the HF signal to be used to report information on nonoperational structures disposed thereon. This purposive segregation of tracking signals from the HF signal is accomplished using a tracking scheme that occasions only low frequency signals in the HF, a tracking scheme that is intended by existing disc standards to be ignored during disc reading, the wobble groove specified in CD and DVD writeable and rewriteable standards.

In conjunction with the inverted discs of the present invention, these latter disc geometries allow the purposive, concurrent and discriminable detection of nonoperational structures on an inverted optical disc.

The present invention thus provides inverted optical discs, as above described, wherein the operational structure includes a wobble groove. According to the manufacturing process, the wobble "groove" is presented as a forward image in positive relief (process 1) or as a forward image in negative relief. The latter orientation facilitates centering of nonoperational structures, such as analyte-specific signal elements, over the structure tracked during reading. Nonoperational structures disposed confocally with and laser-proximal to disc's information layer are concurrently detectable with, and their signals discriminable from, the wobble groove.

Examples 2 - 3 presented herein demonstrate the successful use of single data-layer, forward image wobble groove, positive relief inverted discs of the present invention to (1) detect IgG in human blood by immunoassay, and (2) detect and characterize human erythrocytes captured upon the surface of an optical disc by specific immunologic reaction, using a minimally-modified optical disc reader. Example 7 demonstrates the adaptation of a nucleic acid-based assay to the detection principles herein described.

Brief Description of the Drawings

The above and other objects and advantages of the present invention will be apparent upon consideration of the following detailed description taken in conjunction with the accompanying drawings, not drawn to scale, in which like characters refer to like parts throughout, and in which:

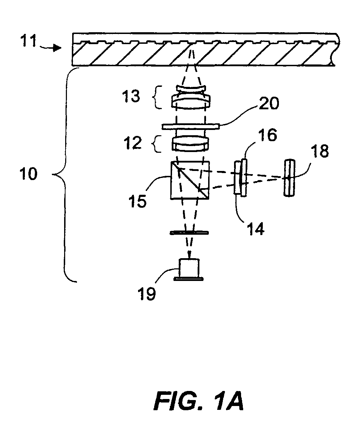

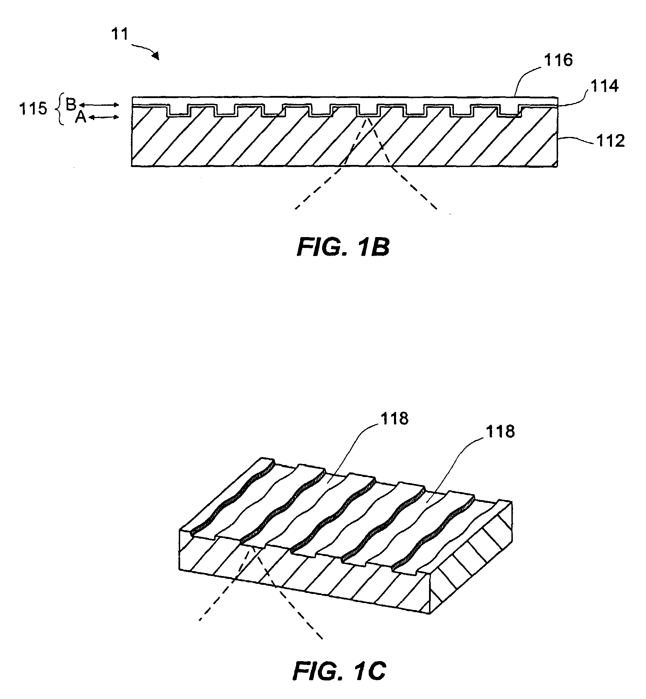

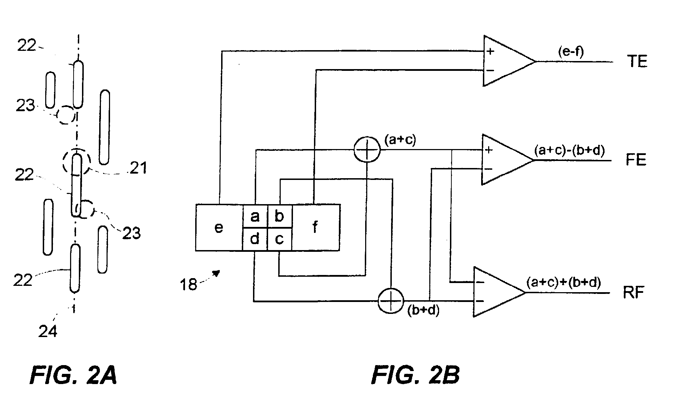

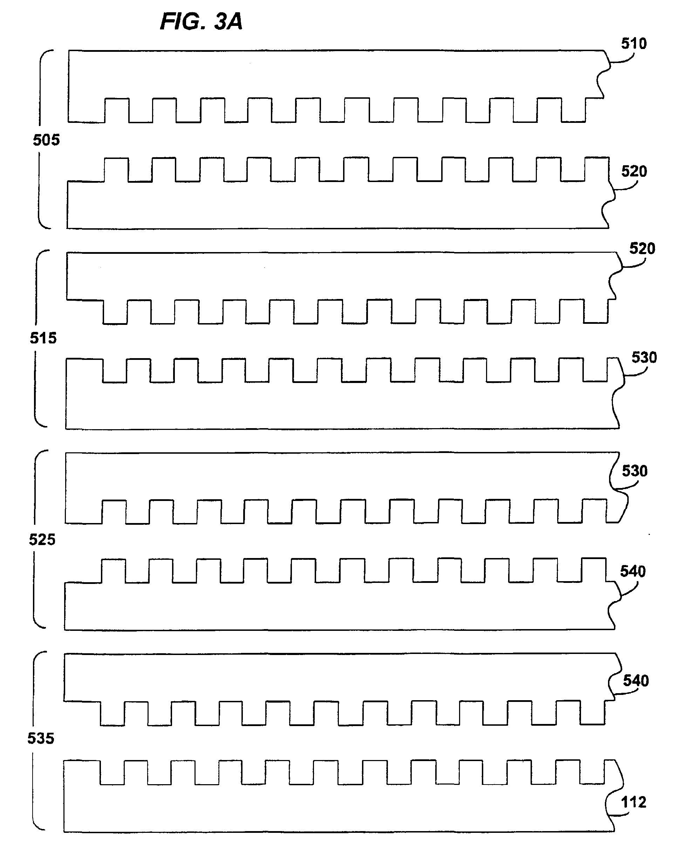

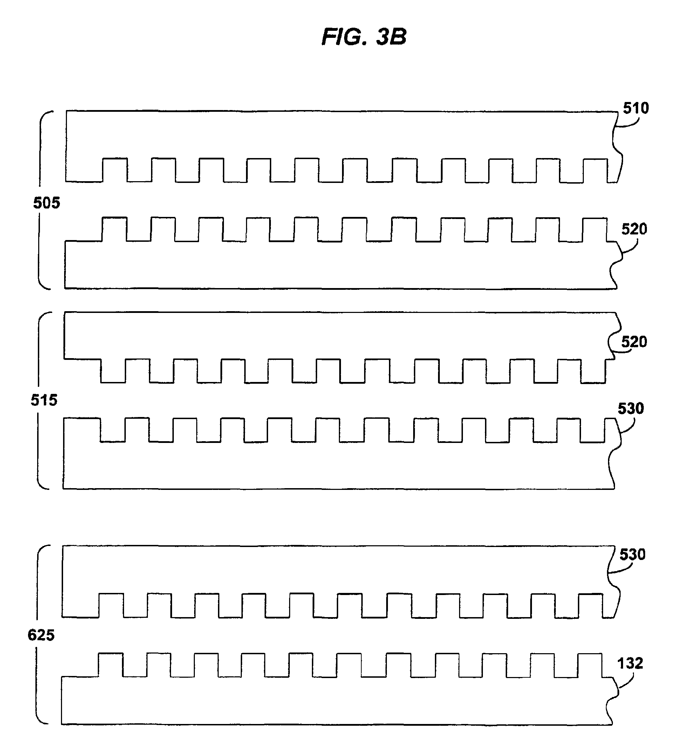

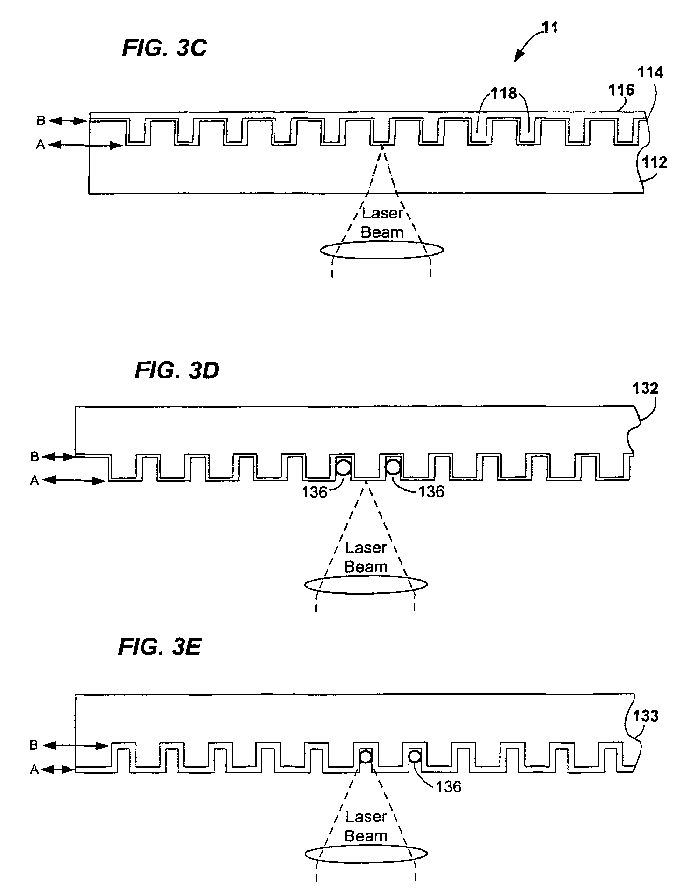

FIG. 1 shows a typical single-layer CD type disc and reader, with FIG. 1A presenting a side view of the reader's optical pickup oriented to read a CD disc which is shown in side cross-sectional view, with the laser optical path indicated by lines; with FIG. 1B showing a side cross-sectional view in the same orientation of the disc at greater magnification; and with FIG. 1C showing a perspective view of the surface of a CD-R disc with wobble groove; FIGS. 2A and 2B show, respectively, the position of beams from a typical three-beam pickup relative to a track on an optical disc, and an exemplary optical disc detector and associated electronics that use the three beams for tracking, focusing, and reading; FIG. 3 shows processes for creating single data layer discs, with FIG. 3A showing a standard electroforming and matrixing process; with FIG. 3B showing a modified process according to the present invention in which a mother part is used as stamper, creating a forward image, positive relief inverted disc according to the present invention; with FIG. 3C showing the conventional CD-R disc substrate stamped in FIG. 3A as completed with reflective layer and protective layer, oriented with respect to a conventional interrogating laser; with FIG. 3D showing the forward image/positive relief inverted disc substrate stamped in FIG. 3B as completed with reflective layer and nonoperational structures, oriented with respect to a conventional interrogating laser; and with FIG. 3E showing a forward image/ negative relief disc of the present invention as obtained by using a reverse image master disc in a standard electroforming and matrixing process;

FIG. 4 shows structures applied to the air-incident, laser-proximal first surface of a conventional single layer CD-type optical disc shown in side cross-sectional view, demonstrating interruption in the optical path to and from the reader's optical pickup;

FIG. 5 demonstrates the two types of reversals occasioned by inverting a conventional single data layer CD-type disc, with FIGS. 5A and 5B demonstrating in side view the reversal of the physical structure, with laser-distal structures brought laser-proximal and laser-proximal structures sent laser-distal, and with FIGS. 5C and 5D demonstrating reversal of the image of the tracking structure, here a spiral;

FIG. 6 is a side view of an optical pickup positioned to read a single layer, first surface, trackable analyte-specific disc of the present invention shown in side cross-sectional view, with the laser optical path indicated by lines, with FIG. 6A demonstrating the focus before addition of a further focusing lens to the optical pickup, and FIG. 6B demonstrating the change in focus with addition of a further focusing lens to the optical pickup;

FIG. 7 schematizes the molecular components an IgG-specific immunoassay site constructed on the reflective surface of a first surface, trackable analyte-specific optical disc of the present invention, with FIG. 7A showing the assay site prior to addition of sample and FIG. 7B showing the immunospecific adherence of a latex sphere mediated by IgG in a human blood sample following addition of a human blood sample and "development" thereafter by further addition of anti-IgG conjugated latex spheres;

FIG. 8 is a video image captured from a light microscopic examination of a portion of the IgG-specific first surface analyte-specific trackable assay disc after application of human blood and antibody-conjugated latex spheres;

FIGS. 9 and 10 are atomic force microscope (AFM) images of a single latex sphere immunospecifically adherent to a first-surface trackable human-IgG specific disc, at somewhat higher magnification than that used in FIG. 8, with summaries quantitating dimensions observed by the AFM during image acquisition;

FIG. 11 is an atomic force microscope image of two latex spheres immunospecifically adherent to a first-surface trackable human-IgG specific disc and present in the same AFM field, with summary quantitating dimensions observed by the AFM during image acquisition;

FIG. 12 is an AFM image and quantitative dimensional summary of a red blood cell (RBC) immunospecifically adherent to the surface of a first surface trackable human RBC-specific disc;

FIG. 13 is a digital oscilloscope tracing showing the analyte-specific perturbation in HF (quad-sum) signal obtained by an optical disc reader's trackable scanning over a red blood cell immunospecifically adherent to the surface of a first surface trackable RBC-specific disc, with X axis displaying time and Y axis displaying the magnitude of the quad sum signal;

FIGS. 14 - 17 present digital oscilloscope tracings showing the analyte-specific perturbation in HF (quad-sum) signal obtained by an optical disc reader's trackable scanning over several distinct red blood cells immunospecifically adherent to the surface of a first surface trackable RBC-specific disc, with X axis displaying time and Y axis displaying the magnitude of the quad sum signal;

FIG. 18 is a digital superimposition of multiple events acquired from the same disc, demonstrating the reproducibility of the size and shape measurements over several different red blood cells immunospecifically adherent to the disc;

FIG. 19 is a side cross sectional view of a single layer trackable analyte-specific disc assembled with a nonintegral laser-proximal, laser-refractive cover;

FIG. 20 shows a preferred embodiment of the single layer trackable analyte-specific optical disc of the present invention, with the disc's operational structures encoded in a reflective hologram reflecting an image of the disc's tracking structures in a plane confocal with nonoperational structures disposed upon the first surface of the disc;

FIG. 21 shows a simplified top side view of the physical organization of a disc constructed to the zoned constant linear velocity (ZCLV) standard;

FIG. 22 shows an enlarged perspective view of one of the sectors of the ZCLV disc of FIG. 21;

FIG. 23 shows nonoperational structures disposed upon wobbled land and groove area of the sectors on a ZCLV first surface analyte-specific disc;

FIG. 24 shows a side cross-sectional view of a typical dual layer DVD format disc;

FIG. 25 shows an exploded side perspective view of an assemblable dual data layer analyte-specific assay disc;

FIG. 26 shows a side cross-sectional view of a dual layer analyte-specific assay disc embodiment containing internal channels;

FIG. 27 shows a side cross-sectional view of a dual layer analyte-specific assay disc with internal assay-facilitating structures;

FIG. 28 shows a side cross-sectional view of yet another dual-layer analyte-specific assay disc of the present invention;

FIG. 29 shows another alternative embodiment of a two-layer analyte-specific disc;

FIG. 30 shows a side cross-sectional view of a spherical signaling moiety engaged in a disc groove, with various dimensions labeled;

FIG. 31 presents data from atomic force microscopic examination of the inner diameter of a single data layer disc of the present invention, the disc further optimized for first surface detection relative to those shown in FIGS. 8 - 12, and having a reported groove depth of approximately 100 nm;

FIG. 32 presents data from atomic force microscopic examination of the outer diameter of a single data layer disc of the present invention, the disc further optimized for first surface detection relative to those shown in FIGS. 8 - 12, and having a reported groove depth of approximately 101 nm;

FIG. 33 presents data from atomic force microscopic examination of the inner diameter of the "mother" part used to stamp the discs measured in FIGS. 32 and 33;

FIG. 34 presents data from atomic force microscopic examination of the outer diameter of the "mother" part used to stamp the discs measured in FIGS. 32 and 33;

FIG. 35 is a top perspective view of a polycarbonate laser-refracting cover, as used with the discs of FIGS. 31 and 32 to generate the data shown in FIG. 40;

FIG. 36 schematizes a nucleic acid-based analyte-specific assay site constructed on a trackable disc of the present invention, in which specific adherence of a single 2.8 $\mu$m sphere to the disc surface is driven by nucleic acid sequence complementarity;

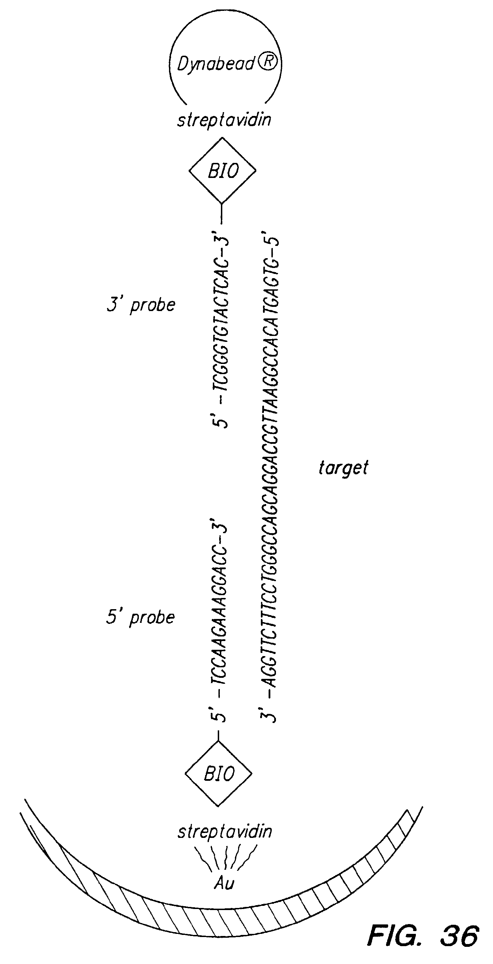

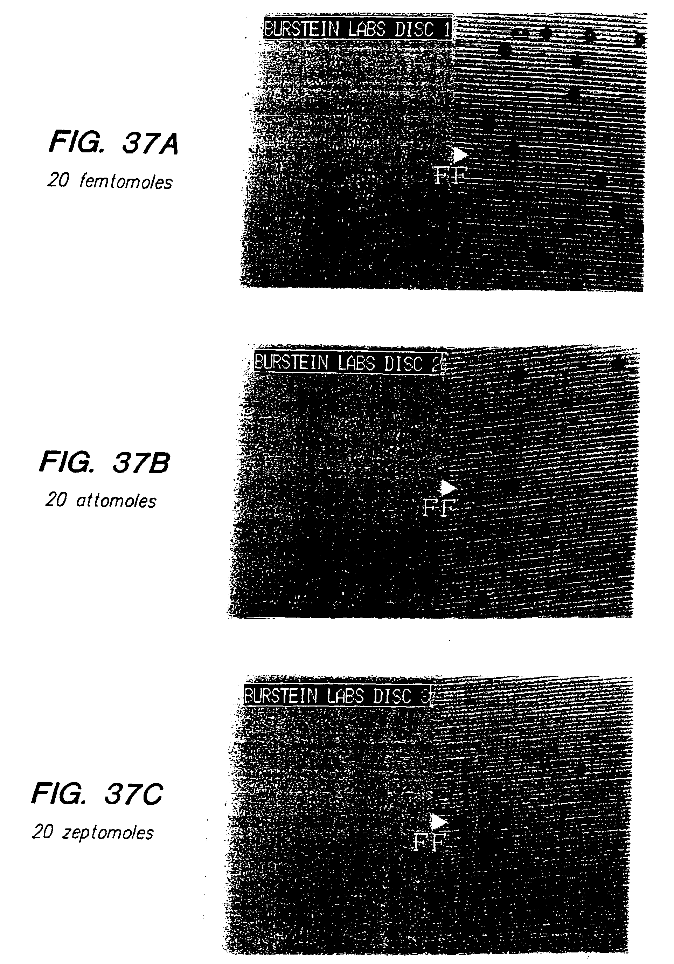

FIG. 37 presents light microscopic images of three discs, each at two magnifications, constructed using the assay geometry shown in FIG. 36, with FIG. 37A showing nucleic acid sequence complementarity-driven adherence of spheres to the disc surface at 20 femtomoles (20 x $10^{-15}$ moles) target nucleic acid; with FIG. 37B showing nucleic acid sequence complementarity-driven adherence of spheres to the disc surface at 20 attomoles (20 x $10^{-18}$ moles) target nucleic acid; and FIG. 37C showing nucleic acid sequence complementarity-driven adherence of spheres to the disc surface at 20 zeptomoles (20 x $10^{-21}$ moles) target nucleic acid;

FIG. 38 is a two-dimensional composite of light microscopic images acquired at 300 X magnification of the laser proximal surface of a disc identical in dimension to those measured by AFM in FIGS. 32 and 33, with 2.8$\mu$m spheres electrostatically adherent to the metalized surface and manually aligned substantially along a groove;

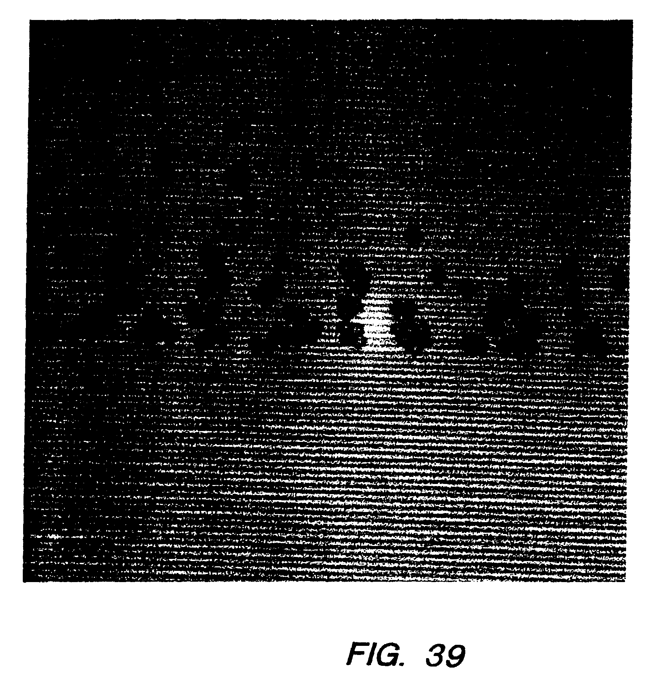

FIG. 39 is a higher magnification of a portion of the same disc as shown in FIG. 38;

FIG. 40 shows the electrical response reported in the HF signal along a single one of the tracks that passes through the area of the disc shown in FIG. 39; and

FIG. 41 presents the mold settings used in the manufacture of the discs described in Example 5, and shown in FIGS. 31, 32, 37, 38 and 39.

Detailed Description of the Invention

In order that the invention herein described may be fully understood, the following detailed description is set forth. In the description, the following terms are employed.

As used herein, the term "radial" denotes, in the plane of one or more of a disc's data-encoding surfaces (i.e., an optically detectable surface of a disc's information layer), the direction forward or backward along a tracking spiral. A disc surface, according to this invention, can be an internal or external surface.

As used herein, the term "tangential" denotes, in the plane of one or more of a disc's data-encoding surfaces, the direction inward or outward along a line drawn from the disc's physical center to its outer circumference.

As used herein, the phrase "radial plane" refers to the plane in which a disc's trackable (e.g., spiral tracking) structures are disposed, and is the plane of one or more of the disc's data-encoding surfaces.

As used herein, the term "nonoperational structure" means any structure disposed on a surface or within an optical disc that is capable of producing a signal when the disc is read by an optical disc reader, the signal of which is not required, however (although possibly useful), for drive operation during reading. Nonoperational structures include, for example, analyte-specific signal elements, as are described immediately below.

As used herein, the term "analyte-specific signal element" II refers to any nonoperational structure that may be used to signal the presence of a specific analyte in a sample applied to an optical disc. The term thus includes, inter alia, such signal elements as are exemplified herein - including beads and cells. The term includes both those structures that are alone detectable by an optical disc reader and those that require additional components to be rendered detectable.

To provide some background for further discussion of the present invention, salient structures of a conventional optical disc are described briefly in connection with FIG. 1.

FIG. 1A depicts the reader's optical pickup (objective assembly) 10 and a standard CD-type optical disc 11 with the light path therebetween indicated as dashed lines. For clarity, FIG. 1A depicts a minimal complement of the reader's optical pickup components. FIG. 1B provides a side cross-sectional enlarged view of disc 11 in the same orientation relative to the incident laser.

With reference to FIGS. 1A and 1B, the reader's optical pickup 10 includes laser source 19, lenses 12-14, beam splitter 15, quarter wave plate 20, and detector 18. Laser source 19, typically a laser diode, emits a laser beam which is transmitted through beam splitter 15 and then collimated by lens 12. The collimated beam is then reflected toward optical disc 11 by beam splitter 15. Objective lens 13 focuses the laser beam onto a small spot on the laser-proximal, or first, surface of optical disc 11.

The laser beam is reflected from the surface of reflective layer 114 (in a conventional CD-type disc, the second surface) of the disc and returned through objective lens 13 and quarter wave plate 20 to beam splitter 15. Beam splitter 15 directs the reflected laser beam through lens 14, which focuses the reflected laser beam onto detector 18. Astigmatic element 16 can be included between beam splitter 15 and detector 18 to introduce astigmatism in the reflected laser beam.

As shown in greater detail in FIG. 1B, CD type disc 11 comprises three physical layers: from laser-proximal to laser-distal, the layers are transparent substrate 112, reflective layer 114, and protective layer 116. The total depth of the layers combined is nominally 1.2 mm. The figure is not drawn to scale.

Transparent substrate 112 makes up most of the 1.2 mm thickness of a typical CD-type disc, as measured along the optical axis, and serves both optical and structural functions. These dual roles dictate that substrate 112 have a planar surface and a patterned surface: with a conventional disc during conventional reading, the planar surface is presented as the laser-proximal of the substrate's two surfaces, and the patterned surface is presented laser distal thereto.

With respect to its optical function, the refractive properties of transparent substrate 112 serve to shorten the optical path in this monochromatic system; in essence, transparent substrate 112 serves further to focus the incident laser light on reflective layer 114: on the laser-proximal, or first, surface of a CD-type disc, the laser spot has a diameter of approximately 800 $\mu$m; transparent substrate 112 further focuses the beam, achieving a diameter of approximately 1.7 $\mu$m at reflective surface 114, the second surface of the disc. In a typical CD, transparent substrate 112 is composed principally of polycarbonate, and has an index of refraction of 1.55. It will be apparent to one skilled in the relevant arts that materials other than polycarbonate may be used, as long as the thickness and index of refraction of the materials provide sufficient assistance to the focusing system of the optical disc reader to ensure focus on reflective layer 114.

Transparent substrate 112 also provides the principal structural integrity of disc 11. Reflective layer 114 is approximately 0.05 to 0.1 microns in thickness, and protective layer 116 typically comprises a lacquer material that hardens when exposed to UV light, with a thickness between 10 and 30 microns. Thus, transparent substrate 112 makes up the major physical layer of the disc, and is the only layer capable of imparting sufficient rigidity to the disc to retain the shape of the disc's operational structures.

Substrate layer 112 is typically pressed with a spiral track that starts at the innermost readable portion of the disc and that spirals out to the outermost readable portion of the disc. In a non-recordable disc, this track is made up of a series of pits, each having a depth of approximately 1/4 the wavelength of the light that is used to read the disc. The pits have varying lengths, the length and spacing of the pits encoding the data. As further discussed below, a standard CD-R recordable disc contains a spiral groove rather than spiral of pits. Several partial cross-sections of such a wobble groove 118 are shown schematically in the perspective view of FIG. 1C.

Reflective layer 114 is approximately 0.05 to 0.1 microns in thickness, and typically comprises a reflective metallic material, such as aluminum, silver, gold, or copper. Reflective layer 114 is typically applied to the patterned surface of substrate 112 through a magnetron sputtering process. An alternative process, vapor deposition, can be used, but is much slower. A chemical wet "silvering" process (using silver, nickel, or other metal) can also be used to form reflective layer 114 on the patterned surface of transparent substrate 112.

Protective layer 116 typically comprises a lacquer material that hardens when exposed to UV light, a process called "curing", and has a thickness between 10 and 30 microns. Protective layer 116 serves to protect reflective layer 114 from scratches and oxidation, and provides a convenient surface on which a label may be printed. Protective layer 116 is typically applied to transparent substrate 112 and reflective layer 114 through a spin-coating process, whereby a small amount of a material that hardens when exposed to UV light is sprayed on the disc near the inner diameter of reflective layer 114, and the disc is spun at high speed, causing a thin layer of the material to cover the surface of the disc. The disc is then exposed to UV light, causing the laquer material to harden.

Although comprising three physical layers, disc 11 may also be considered to have an "information layer" (also "data layer") 115 to which at least transparent substrate 112 and reflective layer 114 physically contribute.

The "information layer" is delimited by two planes. For purposes herein, "plane A" is the most laser-proximal radial plane and "plane B" is the most laser-distal radial plane to which the operational structures extend. In a standard CD or single layer DVD, there is only a single information layer, and the disc is thus conventionally described as a single data-layer (or "single layer") disc.

The various CD and DVD standards contemplate discs having a nominal depth (in the direction defined by the optical axis) of 1.2 mm and a nominal diameter in the radial dimension of 120 mm.

Although the nominal thickness is 1.2 mm, the senior standard for compact disc technology (colloquially, the "Red Book"), republished as IEC 908, permits physical thickness of 1.1 - 1.5 mm (for all layers combined). Readers are capable of accommodating some additional variance, however, and discs suitable for reading by CD and DVD drives may have a depth maximally of about 2.4 mm and minimally of about 0.8 mm, preferably 1.0 - 1.4 mm, more preferably 1.1 - 1.3 mm, most preferably 1.2 mm.

With respect to the diameter of CD and DVD discs, the standard sets a nominal diameter of 120 mm. However, disc readers may accommodate discs of radial diameter of 100 - 140 mm, preferably 110 - 130 mm, more preferably 115 - 125 mm, most preferably 120 mm. Furthermore, the standard also provides for a disc with a diameter of 8 cm (80 mm): the dimensions of the mounting and clamping rings remains the same as that for 120 mm discs, as does disc depth; only the outer diameter is reduced, reducing the data area of the disc. Commercially available CD and DVD readers and reader/writers accommodate discs of this diameter in their disc tray. Such discs present certain advantages in the practice of the present invention, among which are a commensurate reduction in assay sample volume required to effect contact with the entire disc surface, as well as the ability to package such a disc in a sleeve dimensioned identically to the sleeve of a 3 1/2" magnetic floppy disc.

Furthermore, various additional standards, such as those defining a (magnetooptical) "minidisc" or analogue laser disc have been developed, and additional standards will no doubt be developed in the future. Thus, the discs of the present invention may have a radial diameter as small as 50 mm and as large as that for a standard laser disc, and may be adapted to such size standards as are developed in the future. One skilled in the art would further recognize that the term "disc" contemplates any suitably rotatable media, whether or not perfectly circular.

As a general principle, there are four operational requirements that must be met for a typical optical disc system to function correctly: the reader must adequately monitor and control focus, radial position, tangential position, and speed. Control of radial and tangential position are together collectively termed tracking.

As discussed above and schematized in FIG. 1B, transparent substrate layer 112 of the optical disc is required to focus the reader's laser properly upon the reflective surface layer 114 of the disc. Failure to maintain correct thickness, transparency, and refractive index of transparent substrate layer 112 may render reflective surface 114 unreadable.

And as further discussed above, operational structures encoded in layer 115 are typically read to maintain correct tracking. In standard pressed CDs, for example, the reader tracks a pitted spiral that is impressed upon transparent substrate 112. In recordable CDs, the reader tracks a spiral groove (during writing, see below).

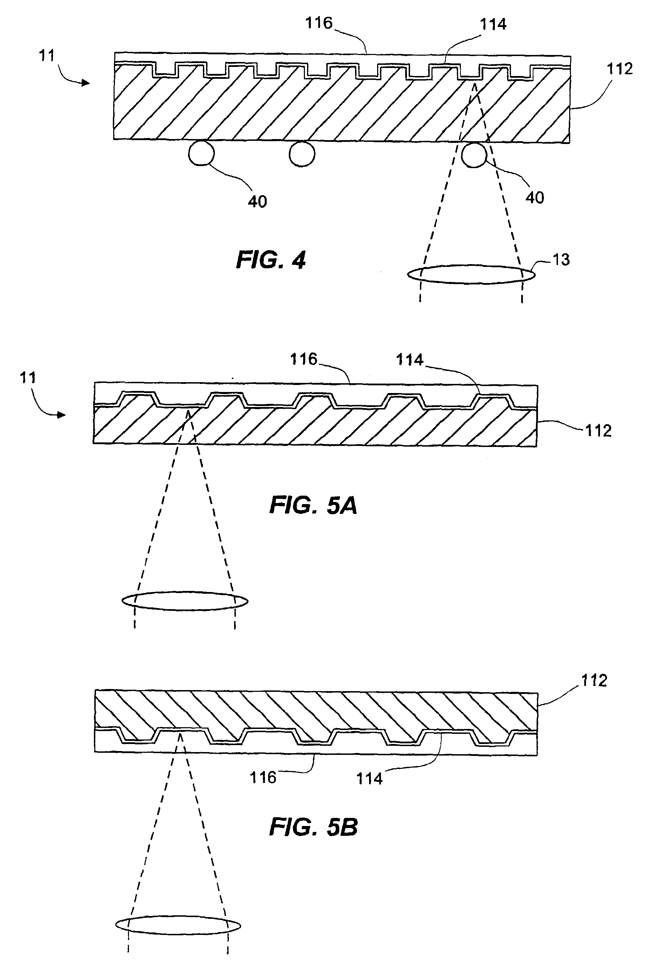

FIG. 4 schematizes nonoperational structures 40 applied to the air-incident, laser-proximal first surface of a typical CD-type optical disc; the figure makes clear that such nonoperational structures would lie laser-proximal to the default focal plane of the incident laser, which is reflective surface 114.

Nonoperational structures, such as analyte-specific signal elements, that are so disposed would be undetectable by standard means.

First, nonoperational structures 40 that are disposed upon the air-incident, laser-proximal first surface of a typical CD-type optical disc are not only laser-proximal to, but are also outside, the focal plane that is being interrogated by the reader. These nonoperational structures would have to be in the range of the beam size at the incident surface (800 $\mu$m) to be detectable. And finally, if so large, these structures 40 may, by virtue of their interposition between the laser and reflective surface 114, interfere with reading operational structures encoded in the reflective surface 114. It is for this latter reason that substantial efforts are undertaken during disc manufacture to ensure that the laser-proximal first surface of the disc is substantially free of imperfections, in part by keeping surfaces on stampers and masters clean and clear of dust.

Thus, to adapt standard optical disc technology to the purposive detection of nonoperational structures, including analyte-specific signal elements, there is a need for new optical discs and disc manufacturing techniques that overcome these problems. There is a need for optical disc geometries and tracking schemes that permit disc tracking and other operational signals to be acquired concurrently with and discriminated from signals generated by nonoperational structures disposed upon a surface of an optical disc.

Single Data Layer Discs

A first series of embodiments of discs built in accordance with the principles of the present invention, herein collectively termed "single data layer" embodiments, solves these problems by exploiting several novel approaches.

First, I recognized that the problem of achieving focus simultaneously on the disc's operational and nonoperational structures would be solved if the nonoperational structures could be placed substantially in the operational focal plane, that is, substantially confocal with the trackable structures. It will be appreciated that the nonoperational structures and the operational structures need not be in the identical focal plane - it suffices that the nonoperational and operational structures are sufficiently confocal as to permit the disc reader's optical head to detect them both.

Because the beam radius at the operational focal plane is substantially smaller than that at the disc's first surface - a consequence of refraction by transparent substrate 112 - use of nonoperational features of submicron dimension is permitted.

The difficulty, however, is that the nonoperational structures, to be detectable, should be laser-proximal to reflective layer 114: unless reflective layer 114 is significantly transmissive (i.e., only partially reflective, see below), nonoperational structures placed laser-distal to reflective layer 114 would be no more detectable than is the label applied to protective layer 116 on a standard CD. With existing discs and manufacturing processes, the nonoperational structures would have to be placed between transparent substrate 112 and reflective layer 114 in order to place them both laser-proximal to and yet substantially confocal with reflective layer 114. Such a solution, which obligates individualized application of reflective layer 114 after the disposition of nonoperational structures, is untenable in practice for a disc intended in part for rapid analyte-specific assay.

In a novel solution to this problem, I reasoned that flipping the physical orientation of a standard, single data-layer, CD-type optical disc (in other words, placing it upside-down in the reader) would present what would otherwise be a laser-distal surface as the laser-proximal surface of the disc.

As schematized in FIGS. 5A and 5B, flipping a conventional CD-type disc over would present protective layer 116 as the laser-proximal first surface of the disc. Were protective layer 116 removed, nonoperational structures 136 could then be placed both substantially confocal with and laser-proximal to reflective layer 114.

Yet simple physical flipping of the disc - geometrically, a rotation of the disc 180° about a tangential line drawn in the radial plane (as those terms are herein defined) - effects two significant changes.

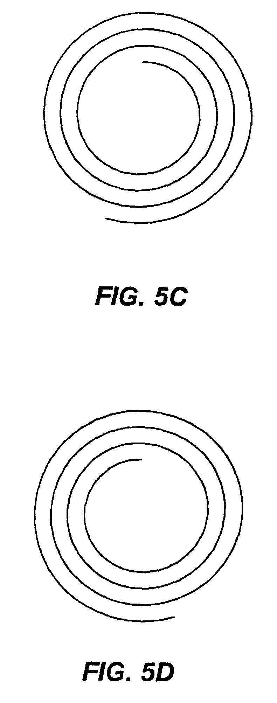

The first is a physical inversion: structures that are laser-proximal in a standard disc placed properly for reading in the disc reader (i.e., plane "A") become laser-distal (i.e., are moved to plane "B"), and those that are laser-distal in a standard disc placed properly for reading in the disc reader (i.e., plane "B") become laser-proximal (i.e., are moved to plane "A") (schematized in FIGS. 5A - 5B). The second is a "logical", or "image", inversion: from the perspective of the disc drive's optical pickup (objective assembly), the geometric form created by the disc's operational structures appears as its mirror image - that is, as if reflected across a tangential line (as herein defined) drawn in the radial plane (schematized in FIGS. 5C and 5D).

The physical inversion presents little difficulty: as further discussed below, I have discovered that a dye-free wobbled "groove" that accords with CD-R standard can quite readily be tracked whether the wobbled "groove" is presented in either laser-proximal or in laser-distal relief.

However, when the geometric form created by the operational (particularly, tracking) structures is nonsuperimposable upon its mirror image (i.e., chiral), the additional "image" inversion renders the information unreadable in a conventional disc reader. This latter problem may readily be exemplified by the spiral conventionally used for tracking in CD formats.

Thus, a conventional optical disc reader spins the disc counterclockwise, as viewed from the perspective of the drive's optical pickup and tracks the spiral from the disc's inner diameter ("i.d.") to the disc's outer diameter ("o.d."). The tracking spiral thus appears, from the perspective of the optical pickup, as schematized in FIG. 5C. When the disc is flipped over and viewed from the opposite side, effectively reflecting the image of the spiral over a tangential line in the radial plane, the spiral appears as schematized in FIG. 5D, and can no longer be tracked from i.d. to o.d. in a conventional drive.

For purposes of further discussion, the phrase "forward image" is used herein to refer to the conventional orientation, in the radial plane, of the geometric form created by a disc's operational structures, as seen from the perspective of the drive's optical pickup. In particular, the phrase is used herein to refer to the conventional orientation, in the radial plane, of the geometric form created by a disc's trackable structures, as seen from the perspective of the drive's optical pickup. When applied to a disc, the phrase refers to the form created by the trackable structures per se or to a projected image thereof.

The phrase "reverse image" refers to the opposite orientation - that is, to the orientation obtained by reflecting the forward image over a tangential line drawn in the radial plane.

Analogously, the phrase "positive relief" will refer herein to the conventional physical orientation of the operational structures in the direction of the optical axis (as between planes "A" and "B" of the information layer), as viewed from the perspective of the drive's optical pickup. In particular, the phrase "positive relief" refers to the conventional physical orientation of the operational structures that are tracked during disc reading, as viewed from the perspective of the drive's optical pickup. When applied to a disc, the phrase refers to the structures per se.

The phrase "negative relief" will refer to the opposite physical orientation.

As used herein, the phrase "standard master" refers to a master disc with image and relief as typically used to produce standard discs in a conventional process. The phrase "reverse master" refers to a master with image, but not relief, reversed from convention.

The present invention is based in part upon the novel discovery that nonoperational structures may readily be disposed confocally with the operational structures of an optical disc, and yet laser-proximal to a previously applied reflective layer. This is accomplished by manufacturing discs in which the patterned surface of a disc's solid substrate (that is, the substrate surface that contributes to the disc's information layer), is presented as the substrate's most laser-proximal surface (hereinafter, "inverted discs").

I have found that such discs may be manufactured by using a conventional mother part as stamper, thus generating forward image inverted discs with operational structures presented in positive relief ("Process 1"). A second manufacturing process, in which a father or son part is used as stamper, is also described. In this second process ("Process 2"), the master has an image reversed from convention; the resulting forward image inverted discs have operational structures presented in negative relief.

Although the above-described novel approaches solve the optical problem of establishing focus concurrently on the operational and nonoperational structures, they do not of themselves necessarily permit the concurrent detection of such structures. First, these approaches do not necessarily solve the problem of maintaining tracking, focus and synch (speed control) in the presence of such confocally disposed nonoperational structures. Second, nonoperational structures that are disposed confocally with the operational features (e.g., pits) may cause signals that are insufficiently distinguishable from the operational (and data-encoding) signals as to prevent their discrimination therefrom.

I have now discovered that the electrical signals generated during disc reading have a far greater informational content than has previously been understood. That is, the electrical signals that were designed to provide two specific types of information - the information necessary for disc operation and the information that is digitally encoded on the disc - may in fact be queried and measured in a variety of ways to reveal a previously untapped wealth of information about the physical structure of the disc.

Furthermore, I have invented approaches that permit the required operational components of these electrical signals to be segregated, freeing the remainder of the signal to be used for such nonoperational measurements without interference with successful drive operation. In one embodiment of this aspect of the invention, novel discs were manufactured in which the electrical signals required for disc operation, particularly the signals required for disc tracking, are segregated during reading from that portion of the signal used to report the response by nonoperational structures on the disc, allowing the concurrent and discriminable detection of nonoperational structures on an inverted optical disc.

Thus, in a first series of embodiments of this aspect of the invention, discs are presented that permit tracking signals to be "segregated" from the HF (RF, quad-sum) signal, freeing the HF signal to report information on nonoperational structures disposed thereon. This purposive segregation of tracking signals from the HF signal is accomplished using a tracking scheme that is intended by existing disc standards to be ignored during disc reading, the wobble "groove" specified in CD and DVD writeable and rewriteable standards.

The wobble groove was first added to the optical disc standard to permit user-directed recording (writing) to CD (and later DVD) media. As set forth in the relevant standard, colloquially termed the "Orange Book", the wobble is detected by the recording device solely during the user's writing of data to the disc; thereafter, tracking is accomplished by detecting the data so written (mastered) along the spiral. The standard, and all existing implementations of the standard, thus contemplate and teach that the wobble becomes redundant, and thus ignored, after writing.

Although intended by existing standards to be ignored during reading, the wobble groove presents several significant advantages as a tracking scheme for use on the inverted discs of the present invention.

In contrast to a spiral of pits, the wobble provides a relatively low frequency signal in the HF. Because the nonoperational structures (such as analyte-specific signal elements), exemplified herein by structures in the 0.5 - 10 micron size range, occasion much higher frequency events in the HF signal, use of the wobble as a tracking structure permits a frequency-based segregation of nonoperational from tracking signals.

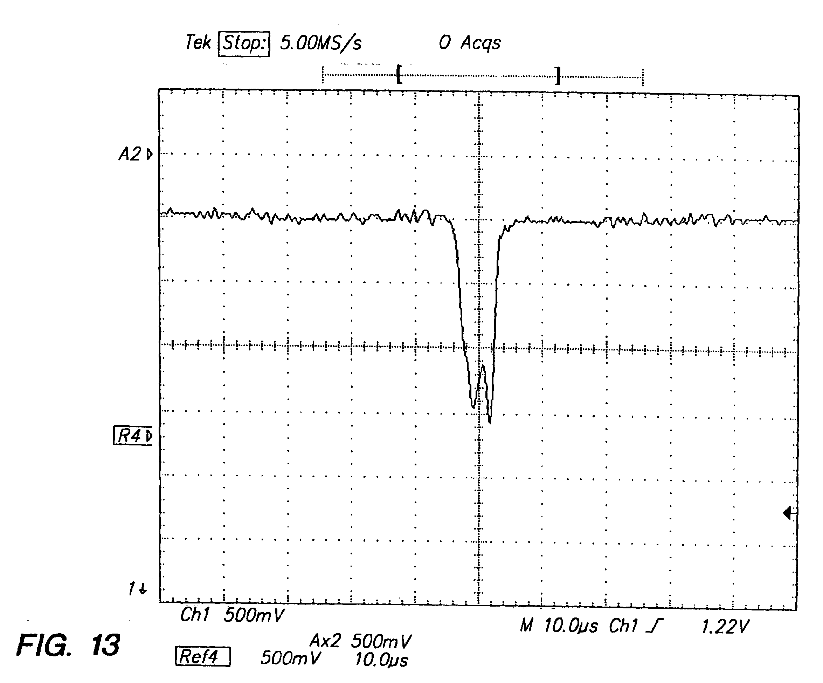

One result is that the higher frequency HF events occasioned by nonoperational structures can readily be detected and characterized. By way of example, FIG. 13 is a digital oscilloscope tracing showing the perturbation in HF (quad-sum, RF) signal obtained during trackable scanning over a red blood cell immunospecifically adherent to the laser-proximal first surface of a forward image, positive relief inverted disc of the present invention, with the X axis displaying time and Y axis displaying the magnitude of the quad sum signal.

A second, converse, result of such frequency-based segregation is that the much higher frequency signals occasioned by such nonoperational signals are of sufficiently short duration as to prevent loss of the tracking lock. Furthermore, a low-pass or notch filter can be used to remove such high frequency events from the signal reported by detector 18, further ensuring correct tracking. It will be appreciated that such a filter is omitted from that portion of the incident signal used to detect the nonoperational signals (such as analyte-specific signals).

A third major advantage of a wobble groove as tracking scheme for optical discs of the present invention is that the wobble signal can be used by the drive to maintain a constant linear scanning velocity at all points on the disc. Given a known wobble frequency, dimensional information about the high frequency nonoperational event can thus readily be calculated, as shown in Example 3 and further discussed below. Conversely, the disc can be mastered with a groove having one or more chosen wobble frequencies, permitting the linear velocity of the disc to be dictated for any given point in the radial plane.

In addition, an additional signal, known as a bi-phase mark signal, is encoded on top of the wobble signal on CD-R discs. The bi-phase mark signal provides address information that can be used to determine a location on the disc. This address information may be useful for spatially-addressable aspects of the analyte-specific assay; the utility of such spatial addressability is further described in commonly owned and copending applications 09/120,049, filed July 21, 1998 and 08/888,935, filed July 7, 1997, the disclosures of which are hereby incorporated by reference. In DVD-R formats, similar information is provided using a "land pre-pit" encoding, whereby pre-stamped notches in the land areas (i.e., between the wobble grooves) encode address information. In either CD or DVD format used for the present invention, the biphase mark or land prepit coding may optionally be left out of the assay area.

Although particularly described with respect to segregation of nonoperational signals from operational signals, the present invention contemplates discs that can have information that is digitally encoded according to CD and/or DVD standards; the approaches set forth herein allow such digitally encoded data to be recovered concurrently with reading of the nonoperational structures.

And although particularly described with respect to frequency segregation within the HF signal, the present invention contemplates that other types of signal segregation and combinations of signals from the detector other than the quad-sum (such as the tracking error signal) can be used to detect and characterize nonoperational structures.

At present only optical disc writers (reader/writers) include the ability to detect the wobble. Because the wobble is typically detected only during writing, a process that is unnecessary to most implementations of the present invention and that causes laser pulsing at amplitudes that might interfere with detection of nonoperational structures, a reader/writer specially designed for quality control purposes in CD manufacture was used in Examples 2 and 3. This device is capable of detecting and tracking the wobble without obligate pulsing of the laser at the energies required for disc writing. It will be understood, however, that any drive able to detect such tracking structures, whether or not capable of writing, can be used in the practice of the present invention.

Examples 2 and 3 presented herein below demonstrate the successful use of single data-layer, forward image, positive relief inverted discs of the present invention to (1) detect IgG in human blood by immunoassay, and (2) detect and characterize human erythrocytes captured upon the surface of an optical disc by specific immunologic reaction, using a minimally-modified optical disc reader. Example 7 demonstrates the adaptation of a nucleic acid-based assay to the detection principles herein described.

Single Data Layer Disc Manufacture

A first process for manufacturing single data layer, forward image discs of the present invention ("Process 1"), will now be described with reference to FIGS. 3A - 3D. Process 1 results in discs having operational structures in positive relief.

Transparent disc substrate 112 can be manufactured by an injection molding process, in which molten polycarbonate is injected into a mold cavity having a "stamper". The stamper is made from a master of the disc by electroforming, which will be more fully described below. The injection molding process typically takes 5 to 10 seconds per disc.

FIG. 3A schematizes three steps in a standard electroforming and matrixing process, followed by a final injection molding (stamping) step, for creating solid substrate 112 of a single data layer disc with wobble groove, such as a CD-R or CD-RW disc (for further details see Williams, The CD-ROM and Optical Disc recording Systems, Oxford University Press, 1994, incorporated herein by reference). Master 510, father 520, mother 530, son 540 and disc substrate 112 are shown in side cross-sectional partial view.

Briefly, the process can begin with the creation of master disc 510 (made from glass, plastic, etc.), the steps of which precede those shown in FIG. 3A. In step 505, master disc 510 is placed in a galvanic nickel electrolyte bath, where it serves as the cathode of an electric circuit. A nickel anode is used to deposit a layer of nickel on the surface of the master disc, creating nickel "father" 520. Next, nickel father 520 is separated from master 510, typically (but not always) destroying master 510 in the process. As a result, father 520 is embossed with a reverse image, in negative relief, of master 510.

Although father 520 may be used directly as a stamper in injection molding process 535, it has proven more efficient in the art to generate multiple identical copies of father 520, termed "sons" 540. The creation of a family of electroformed parts from one original nickel part is termed "matrixing".

Thus, father 520 is typically used in step 515 galvanically to generate, in series, numerous identical "mothers" 530. Mothers 530 have a forward image presented in positive relief. The multiple identical mothers 530, in turn, are used in step 525 to generate numerous sons 540, identical in image orientation and relief to "father" 520, and which thus have a reverse image presented in negative relief as compared to master disc 510. In step 535, son 540 is used as a stamper in the injection molding of disc substrate 112. The disc so manufactured has a forward image presented in positive relief.

FIG. 3C shows CD-R disc 11 with substrate 112 as manufactured according to FIG. 3A, with wobble groove 118, reflective layer 114, and protective layer 116. The optical path and laser focal spot on the wobble "groove" is shown by dotted line. As can be seen, substrate 112 in a typical disc is presented with its planar surface laser-proximal to its patterned surface.

FIG. 3B shows a process, according to the present invention (hereinafter, "Process 1"), for creating single data layer inverted discs of the present invention having forward image of the operational structures presented in positive relief. The process differs from the standard process shown in FIG. 3A in that mother 530 is used, in step 625, directly to stamp the disc substrate 132. As set forth in Examples 1 and 5, the discs used in the experiments reported herein were generated at EXIMPO S.R.O. (Prague, Czech Republic) using such a modified matrixing procedure.

An advantage of Process 1 is that a standard master - such as a CD-R master or a CD-RW master - or alternatively a master created readily using existing techniques and apparatus, can be used to manufacture the forward image inverted discs of the present invention.

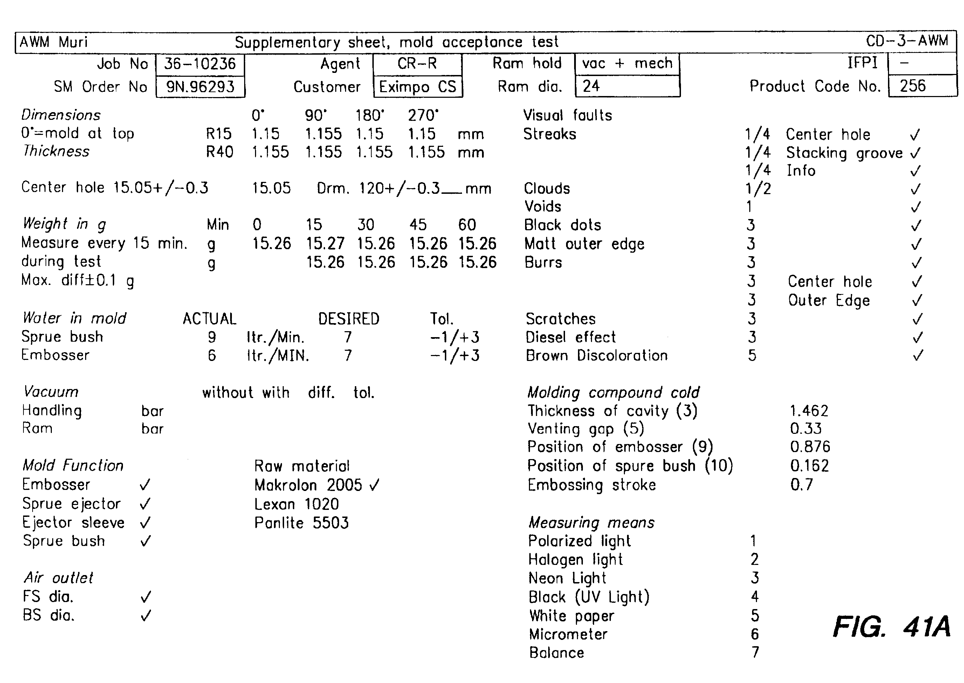

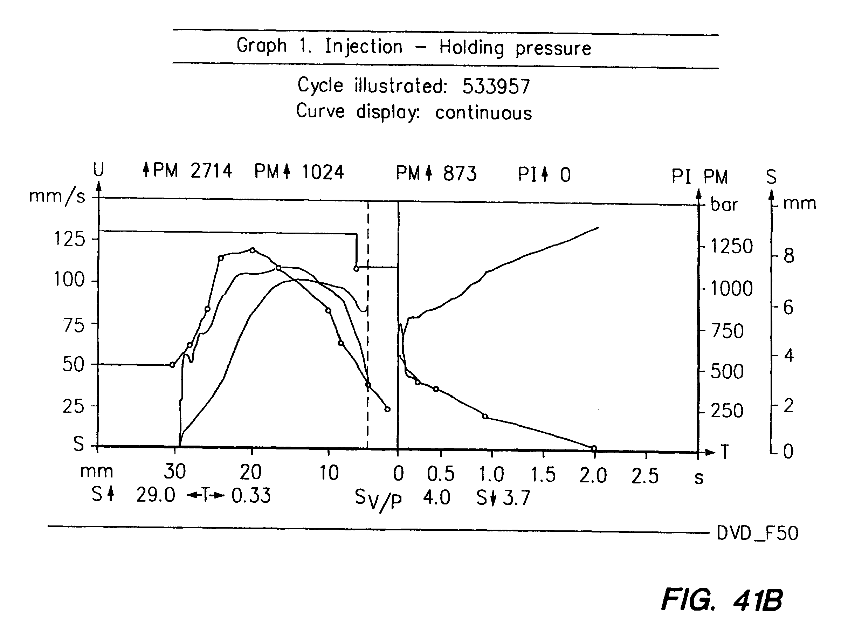

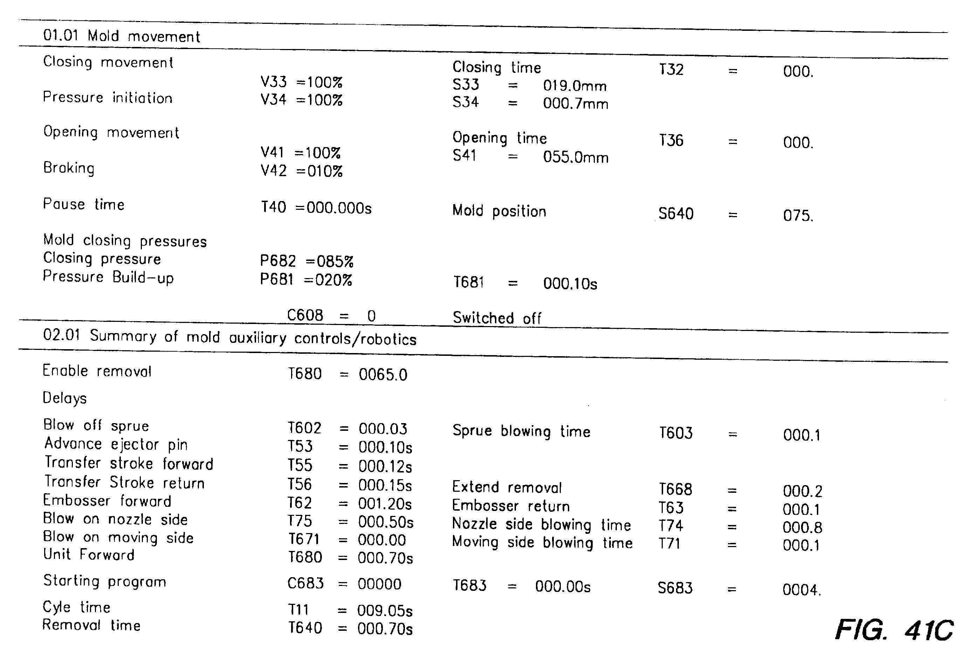

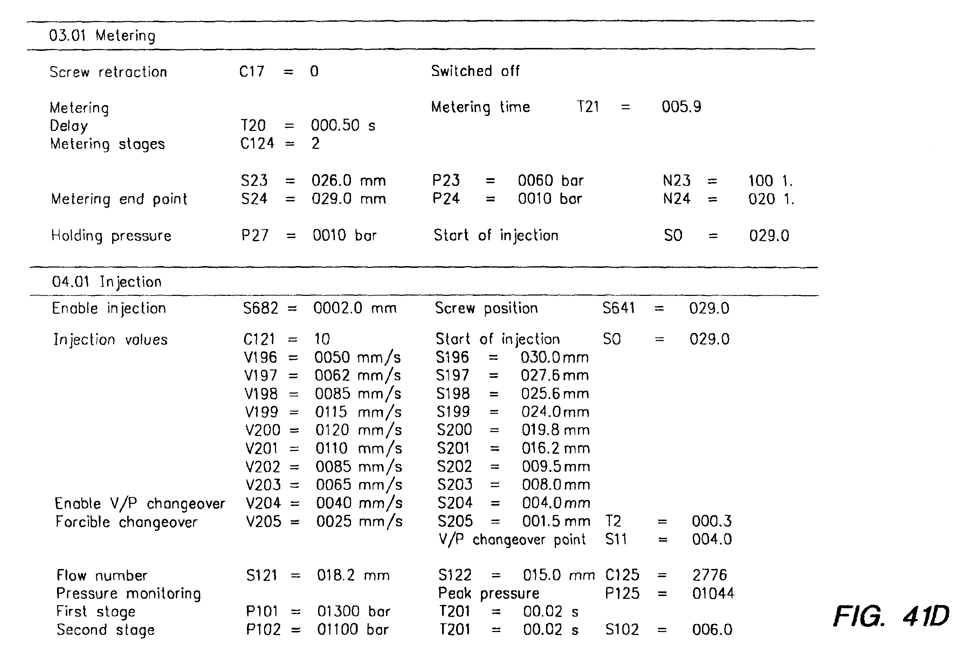

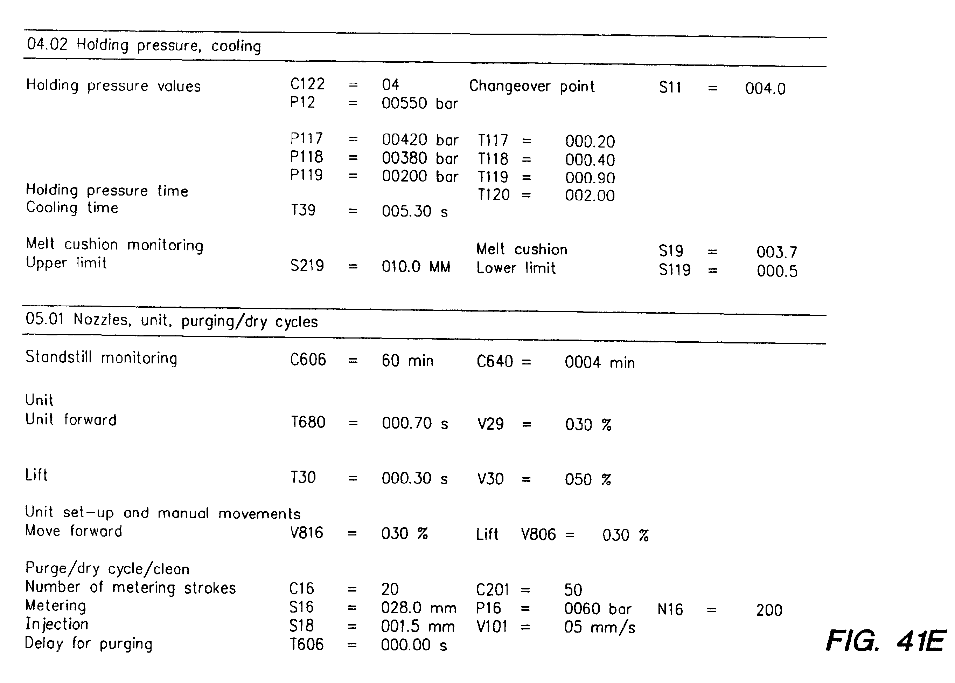

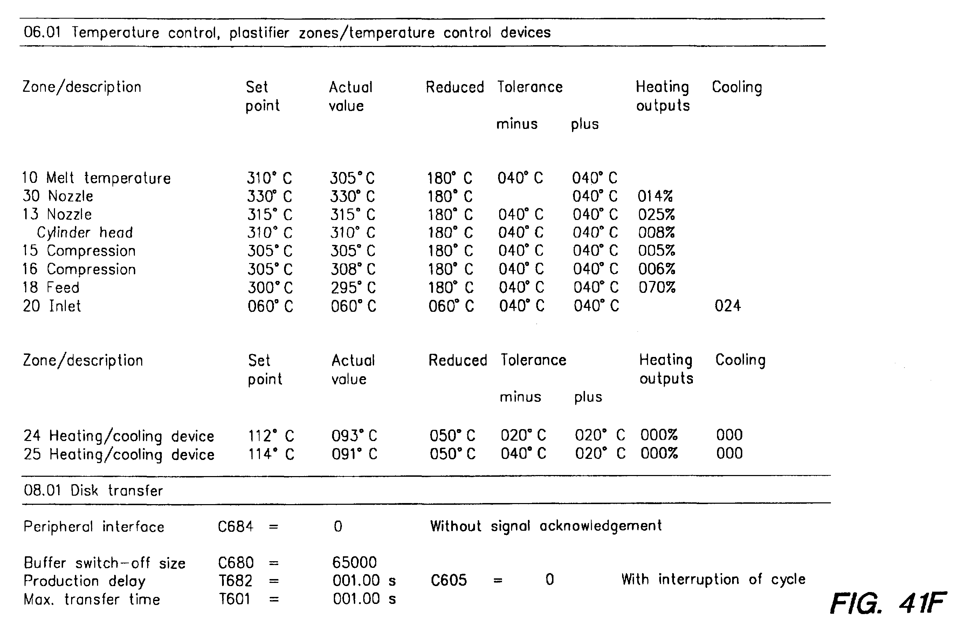

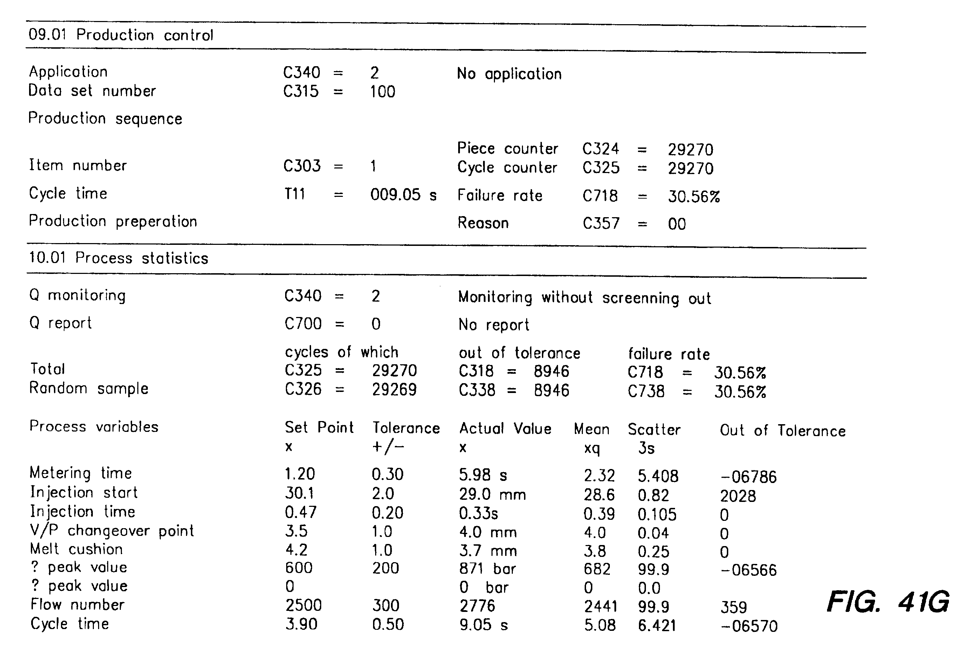

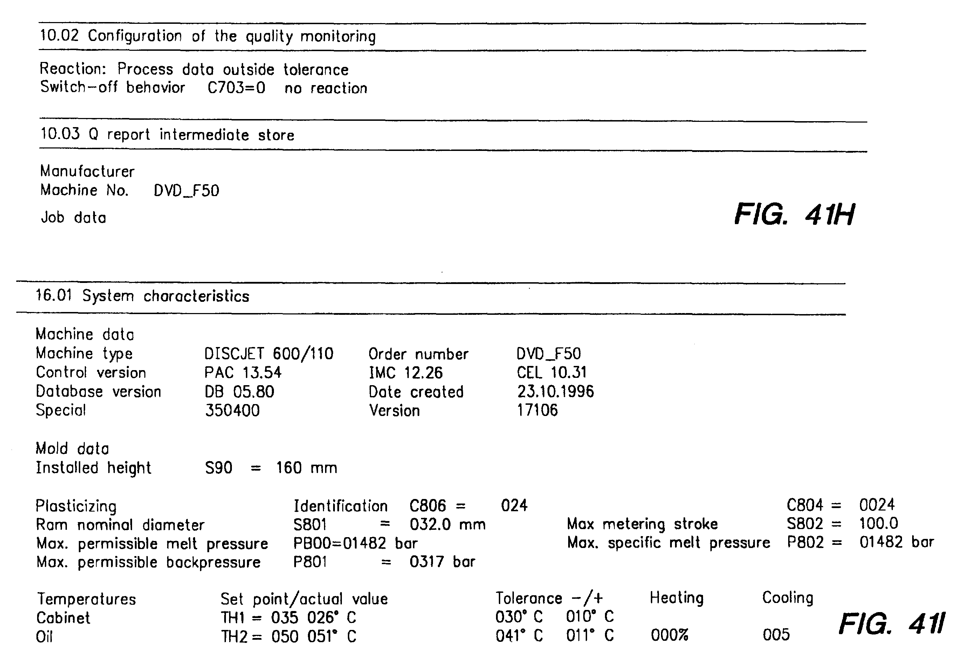

In Process 1, as schematized in FIG. 3B and used in Examples 1 and 5, the use of a mother part directly in the injection molding process occasioned some initial difficulty with venting in a standard injection molding machine. Various parameters of the injection molding machine, as will be apparent to the skilled artisan, were adjusted so that molten polycarbonate flowed over the mold properly. For example, the temperature at which the polycarbonate was injected was raised to ensure that the molten polycarbonate was less viscous. Though this increased temperature may alter the optical properties (e.g., birefringence) of the polycarbonate, the optical properties of polycarbonate layer 132 are immaterial to the performance of single data layer inverted discs of the present invention, inasmuch as the laser never passes through this layer. FIGS. 41A - 41I present the mold settings used in the manufacture of the discs manufactured as set forth in Example 5.

FIG. 3D shows a disc resulting from Process 1, with nonoperational structures 136 applied confocally with, and laser-proximal to, reflective layer 134. As can be seen, substrate 132 in a single data layer inverted disc of the present invention is presented with its patterned surface laser-proximal to its planar surface. As can also be seen, the disc so manufactured has a forward image presented in positive relief.

It will of course be understood that the so-called "planar" surface of the inverted disc need not be strictly planar, since it does not lie in the optical path. Thus, this surface will herein also be termed the "additional" surface of the disc substrate.

In both a standard disc and a forward image/positive relief inverted disc of the present invention, the structure being tracked - the wobble "groove" - is in plane "A" of the information layer, that is, in the laser-proximal plane of the information layer, as shown, respectively, in FIGS. 3C and 3D.

In a standard disc, however, plane "A" is the plane of the information layer that is most proximal to the substrate's planar surface. By contrast, in a forward image/positive relief disc of the present invention, plane "A" is the plane of the information layer most distal from the substrate's planar surface. As a consequence of this latter structural orientation, and notwithstanding the colloquial use of the term "groove" to describe the tracking structure, I have found that nonoperational structures 136 disposed upon the reflective layer of a single data layer forward image/positive relief disc tend to center themselves adjacent to, rather than falling within, the tracking structure itself, as shown in FIG. 3D.

A second process for manufacturing single data layer, forward image inverted discs of the present invention (hereinafter, "Process 2"), will now be described. Discs manufactured using Process 2 have forward image with the operational structures presented in negative relief.

In Process 2, a master disc is created having an image of the requisite operational structures that is reversed from convention. Following a conventional electroforming and matrixing process, essentially as shown in FIG. 3A, the disc substrate, when presented for reading with its patterned surface laser-proximal to its planar surface (i.e., inverted), has a forward image with operational features in negative relief.

Thus, in contrast to both standard discs (shown in FIG. 3C) and discs of the present invention manufactured according to Process 1 (as shown in FIG. 3D), discs manufactured according to Process 2 (shown in FIG. 3E) have the tracking structure in plane "B", that is, in the laser-distal plane of the information layer. Plane "B" in these inverted discs is the plane of the information layer most proximal to the disc substrate's planar surface. As a result, nonoperational structures disposed upon the reflective surface will often center over the tracking feature. This should desirably increase the signal over that obtainable from the same nonoperational structure centered adjacent to the track.

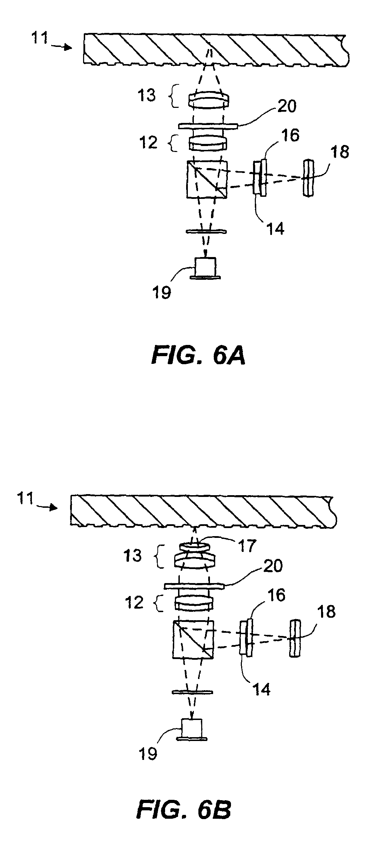

With either the forward image/positive relief inverted discs (process 1) or forward image/negative relief inverted discs (process 2) of the present invention, it should be apparent that with reflective layer 134 now presented as the first surface of the disc, there is no transparent substrate layer 112 present to assist the laser focus, as in a standard disc. FIG. 6A illustrates the problem with a forward image/positive relief inverted disc.

One simple solution, shown in FIG. 6B, is to add an extra focus correction lens 17 to the disc reader's optical head pickup. The reader used to produce the data presented in Examples 2 and 3 herein was so modified. Alternatively, or in addition, the distance between the optical pickup and the disc's first surface may be adjusted so that the laser will focus correctly on the first surface of the disc.

Yet another alternative, a preferred embodiment further described below, adjusts the disc itself, rather than the reader. In this preferred embodiment, a nonintegral or integral laser-refracting member is attached as a cover to the laser-proximal side of the disc to create a disc assembly. This cover serves to refract, and thus further to focus, the incident light onto the disc's operational plane. By convention, that operational plane would now be counted the second surface of the disc. Although a nonintegral member is presently preferred, an integral cover, hingeably or otherwise modifiably attached can also be used.

In either Process 1 or Process 2, use of a standard CD-R mold - whether stamped with a standard mother part 530 as in Process 1 or a reverse image father 520 or son 540 as in Process 2 - produces a disc substrate 1.2 mm in thickness. Addition of a cover then increases the depth of the disc assembly beyond the nominal 1.2 mm thickness specified in the standards. Although the experiments presented herein demonstrate that disc assemblies as deep as 2.4 mm can still be read, it would nonetheless be desirable to decrease the thickness of substrate 132 in circumstances in which a cover is intended to be added.

In a novel approach, the depth of substrate 132 can be reduced by using a DVD-R mold in the final step of Process 1 or Process 2. As would be appreciated, the CD-R format stamper (mother 530 in Process 1, reverse image father 520 or son 540 in Process 2) must be manufactured to fit a DVD-R mold, and the mold settings must be adjusted to ensure proper stamping. The substrate that results is 0.6 mm; with a 1.2 mm thick cover, the combined disc assembly thickness is thus be 1.8 mm.

Whichever solution or combination of solutions is used to readjust focus, it should be apparent that the geometry of the single data layer inverted discs of the present invention eliminates optical constraints on the composition chosen for substrate 132, relative to the optical constraints above-described for transparent substrate 112. That is, since layer 132 of the present single data layer inverted discs of the present invention is not used to refract the incident laser light, in contrast to layer 112 of a standard disc, the transparency, index of refraction and thickness of layer 132 may be adjusted without regard to these optical parameters. This presents advantages in manufacture not readily achievable with standard discs. However, given the installed base of existing disc manufacturing devices, it is presently preferred to manufacture the single data layer discs of the present invention using polycarbonate, as described below.

To demonstrate that these principles may be used to construct a trackable optical disc with concurrently readable nonoperational structures, single data-layer, forward image/positive relief inverted discs were manufactured as set forth in detail in Example 1. Each disc substrate 132, composed of injection-molded polycarbonate, contained a forward image of a wobbled groove with 1.6 $\mu$m pitch and the wobble frequency approximating that set forth in the CD-R standard. A gold layer was deposited on the laser-proximal surface thereof to form reflective layer 134.

In a first series of experiments, reported in detail in Example 2, an assay site specific for human immunoglobulin G (IgG) was constructed on a small portion of the air-incident gold surface of the disc.

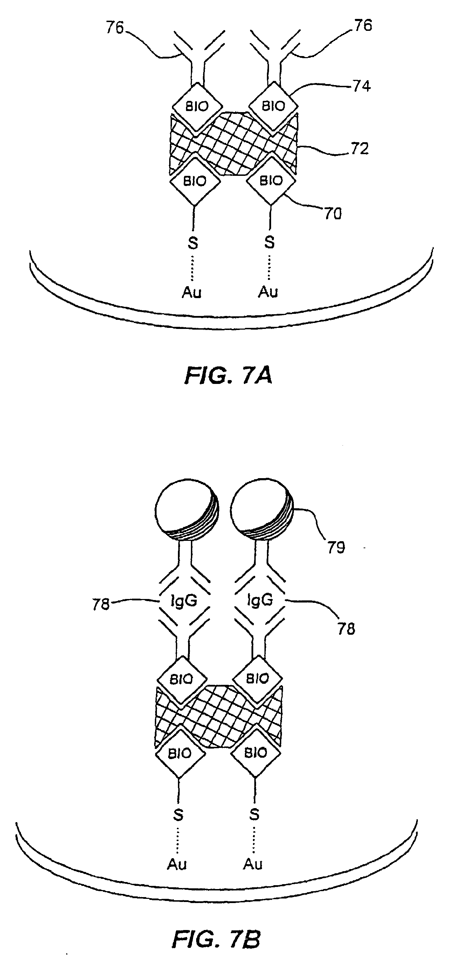

As schematized in FIG. 7A, the assay site was constructed as a three-layer sandwich; as would be understood by those skilled in the art of clinical assays, the purpose of such sandwich is to present the final sandwich layer, antibody 76, for analyte capture and detection. As would also be understood by those skilled in the art, the assay site itself contains many such trimolecular sandwiches, only one of which is schematized in FIG. 7.

In the first series of experiments, antibody 76 was chosen for its specificity for human immunoglobulin G (IgG), which is found at a concentration of approximately 1.1 g/dl in normal human blood.

A sample of human blood, drawn from an adult volunteer, was applied to the assay site of the disc and briefly incubated thereon. The disc was washed, and then "developed" by application of 3 $\mu$m latex spheres, each of which had previously been coated with antibodies specific for human IgG. The disc was then washed again. As schematized in FIG. 7B, the result of such a process is the IgG-mediated specific adherence of the latex spheres 79 to the disc. Absent IgG in the blood sample, the latex spheres would be removed during wash.

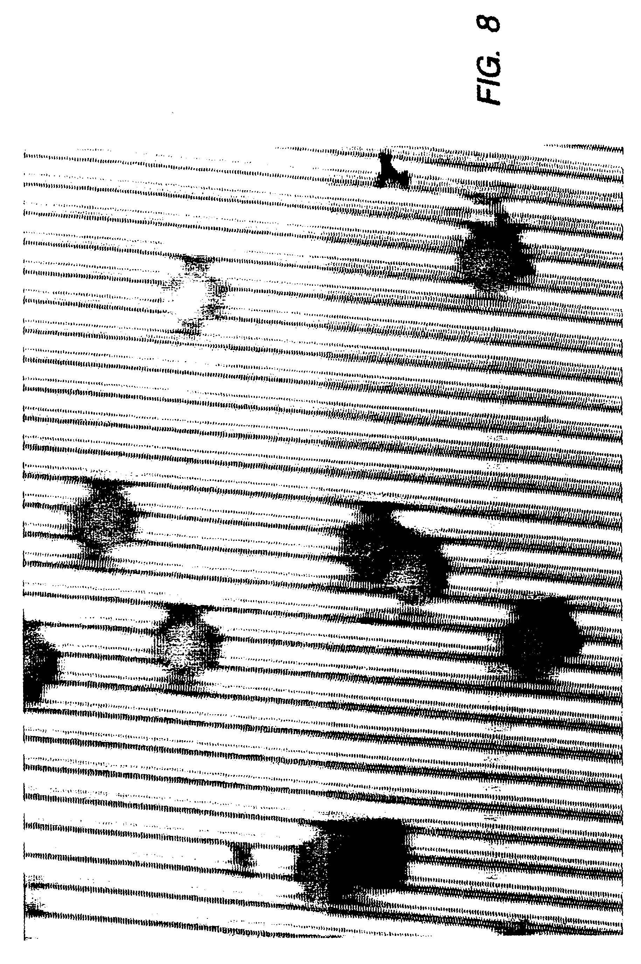

FIG. 8 is a video image captured from a light microscopic examination of a portion of the IgG-specific disc following application of human blood and antibody-conjugated latex spheres. The latex spheres are readily apparent, as is the wobble groove itself. In this video capture image, the darker areas are the structures being tracked. Magnification precludes the continuity of this "groove" from being observed. The video capture image suggests that many, if not all, of the latex spheres are positioned adjacent to the wobble groove on this forward image/positive relief disc.

It should be readily apparent that the size of the signaling moiety relative to the width of the groove may advantageously be adjusted to facilitate positioning of nonoperational structures. Example 4 presents a calculation of an optimized relationship of the signaling moiety's size to groove width, in circumstances in which forward image/negative relief inverted discs are used. Similarly, the size of the molecular tether at the assay site, here a trimolecular biotin-streptavidin-biotin sandwich, may advantageously be adjusted to facilitate a moderate, albeit circumscribed, movement of such signaling moieties to allow such positioning. Polymeric backbones of varying length that prove useful for signaling moieties are described in commonly owned and copending U.S. patent application serial nos. 09/120,049, filed July 21, 1998 and 08/888,935 filed July 7, 1997, the disclosures of which are hereby incorporated by reference. Furthermore, the shape of the groove itself may be adjusted, within the CD and DVD specifications, to facilitate such positioning.

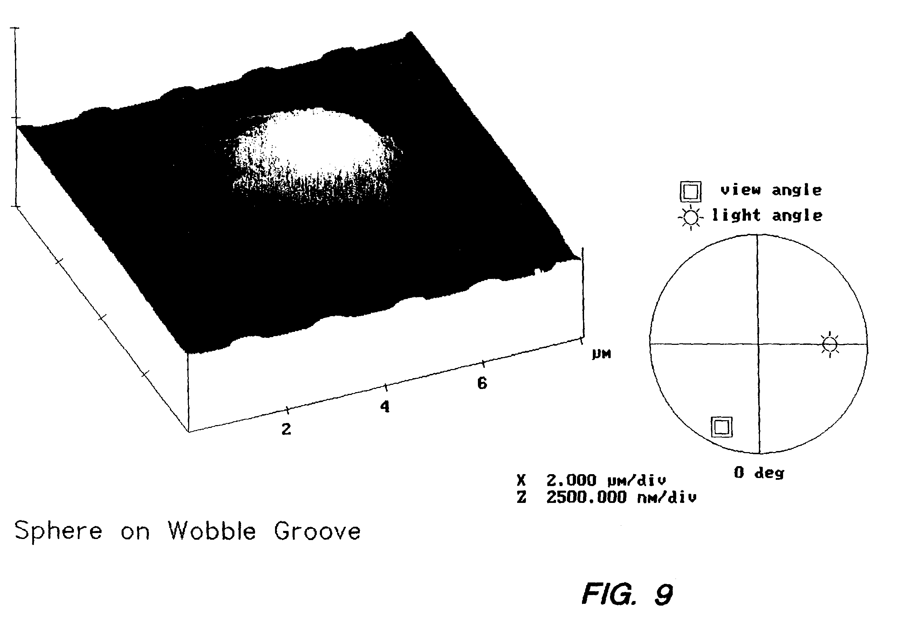

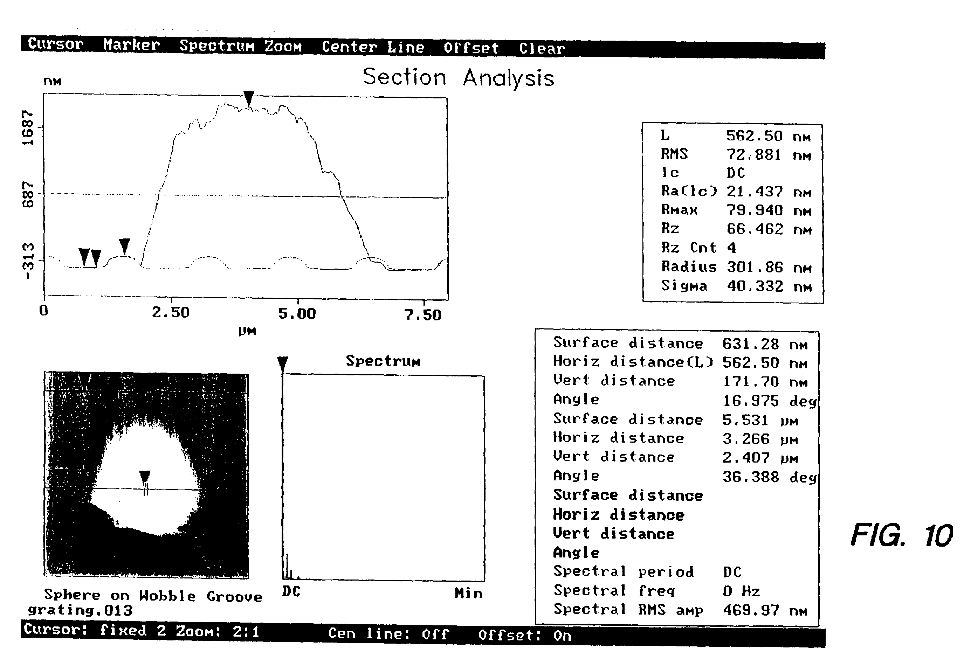

FIGS. 9 and 10 are atomic force microscope (AFM) images of a single latex sphere adherent to the disc, at somewhat higher magnification than that used in FIG. 8. Readily evident in FIG. 9 is the wobble groove itself and a single latex sphere centered adjacent to one turn of the groove. FIG. 10 presents AFM-acquired quantitative data. The groove measures about 171.70 nm deep. The height of the latex sphere above the bottom of the groove is 2.407 $\mu$m.

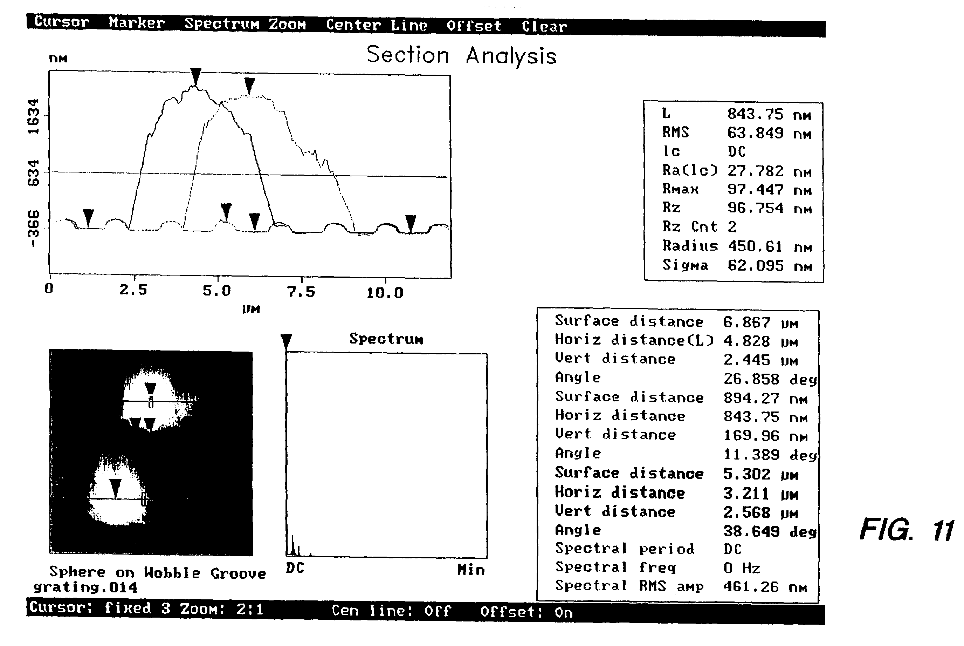

FIG. 11 is an atomic force microscope image of two latex spheres in a single microscopic field. The quantitative sectional analysis illustrates the uniformity of the latex spheres used to develop this anti-IgG immunoassay. In addition, the quantitative sectional analysis identifies the horizontal distance between the center of the land and the center of the adjacent groove as 843.75 nm (0.84 $\mu$m), in excellent agreement with the desired track pitch of 1.6 $\mu$m.

A second series of experiments, reported in Example 3, demonstrates that such nonoperational structures may reliably be detected by a minimally-modified CD-R device as high frequency, high amplitude changes in the HF signal. That is, the above-described single data layer, forward image/positive relief first surface assay disc with wobble groove permits tracking signals to be acquired concurrently with and discriminated from signals generated by nonoperational structures disposed upon a surface of an optical disc.

As further described in Example 3, discs were prepared as set forth in Example 1. An assay site was prepared essentially as in Example 2, but substituting an anti-glycophorin antibody for the anti-IgG antibody 76 used in Example 2. Glycophorin is a protein that appears on the surface of all human erythrocytes (red blood cells, RBCs).

A heparinized sample of human blood (10 μl) was applied to the assay site, and the disc was then rinsed briefly.

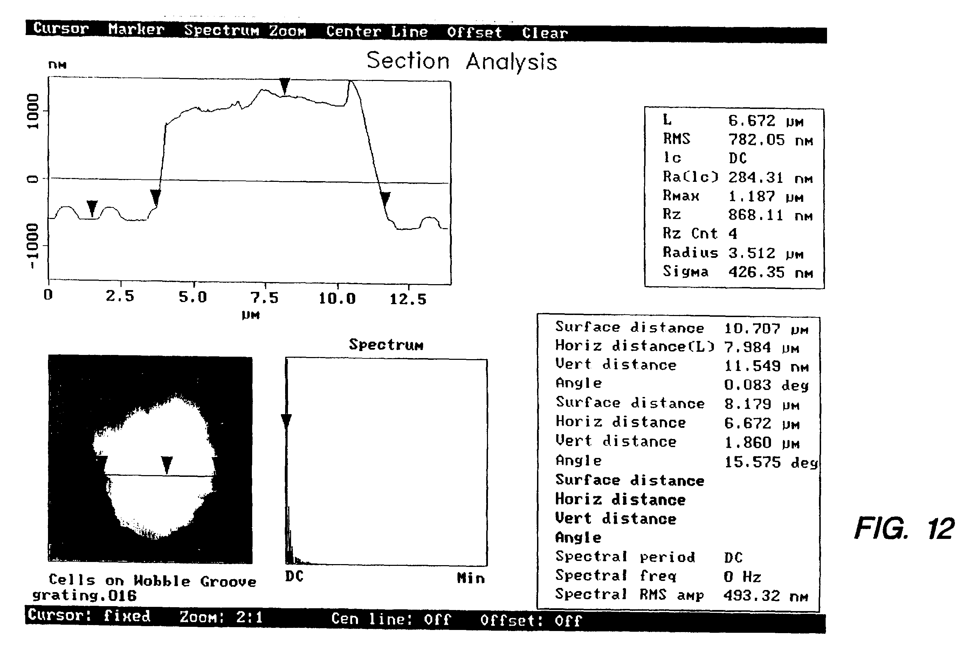

FIG. 12 is an atomic force microscopic image confirming the immunospecific adherence of RBCs to the assay site of the disc. As noted in the quantitative analysis, the RBC's horizontal size is given as 7.984 μm, in agreement with the known diameter of red blood cells (8 μm); this size is clearly different from the uniform 3 μm diameter of the latex spheres used and observed in Example 2. The height of the RBC above the bottom of a groove is observed to be 1.8 μm.

As further described in Example 3, a CD-R device manufactured by CD Associates, Inc. (Irvine, CA) for quality control use in the optical disc industry was used to read the disc. The drive's CD-R wobble tracking system (model RSL100) was modified by addition of lens 17 to the optical pickup 10 to adjust focus in the absence of a refractive layer 112 on the disc; the height of the spindle was also raised. The HF (i.e., RF or quad sum) signal was amplified by the electronic circuitry in the RSL100 so that an oscilloscope display could be provided without adversely affecting the performance of the wobble tracking device. FIG. 13 presents a representative tracing, with the X axis displaying time and the Y axis displaying the magnitude of the quad sum signal.

FIG. 13 demonstrates that the red blood cell is directly visible as a high frequency, high amplitude event in the HF signal of a CD-R reader; for an analyte the size of a mammalian cell, no latex sphere or other exogenous signaling moiety is required to generate an analyte-specific signal.

Also evident from the oscilloscope tracing in FIG. 13 is that the deviation from the HF baseline is a double peak. Although red blood cells are well known to have a characteristic biconcave shape, we have observed this dual peak when latex spheres are used, as in Example 2, to report the presence of analytes. The dual peak appears to result from reproducible changes in reflectance as the laser traverses a sphere. Such reproducible electronic signatures may advantageously be used to identify and discriminate signals from variously dimensioned nonoperational structures.

A further observation readily apparent from the oscilloscope tracing in FIG. 13 is that the baseline on either side of the signaling event is steady; that is, tracking of the wobble groove does not itself cause significant change in the quad sum signal.

The optical reader, in accordance with CD-R standard, maintained a constant linear velocity irrespective of the location being read on the disc, modifying spindle speed to lock a constant wobble frequency. Based upon the known linear velocity of the disc and the time increments marked on the oscilloscope tracing, each division on the oscilloscope tracing may be shown to correspond to a linear distance on the disc of 13 μm. As measured on the tracing shown in FIG. 13, the deviation in the quad sum signal baseline thus gives 10 μm as the approximate uncorrected size of the object in the direction of the tracking groove.

The actual size of the object is smaller. Prior calibration of the reader and oscilloscope using 3 μm latex spheres had given oscilloscope peaks reporting an apparent size of 5 μm, 2 μm wider than the actual object. This likely is accounted for by the 1.5 μm laser focus diameter at the first surface of the assay disc.

Taking into account the 2 μm difference between measured and actual size occasioned by the diameter of the laser at the disc surface, the event captured on the oscilloscope tracing in FIG. 13 as a high frequency, high amplitude deviation in quad sum signal reports an object size of 8 μm, in excellent agreement with the known 8 μm diameter of a human erythrocyte.

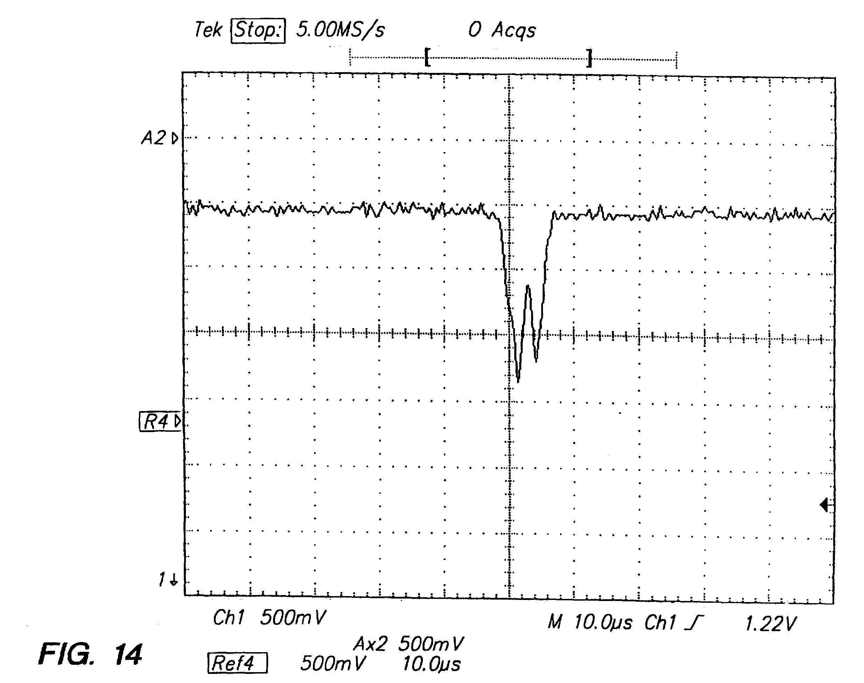

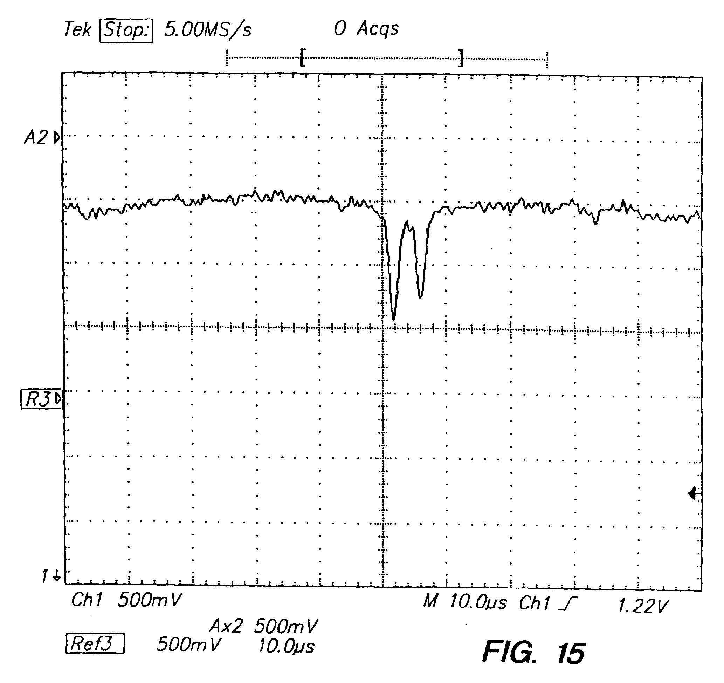

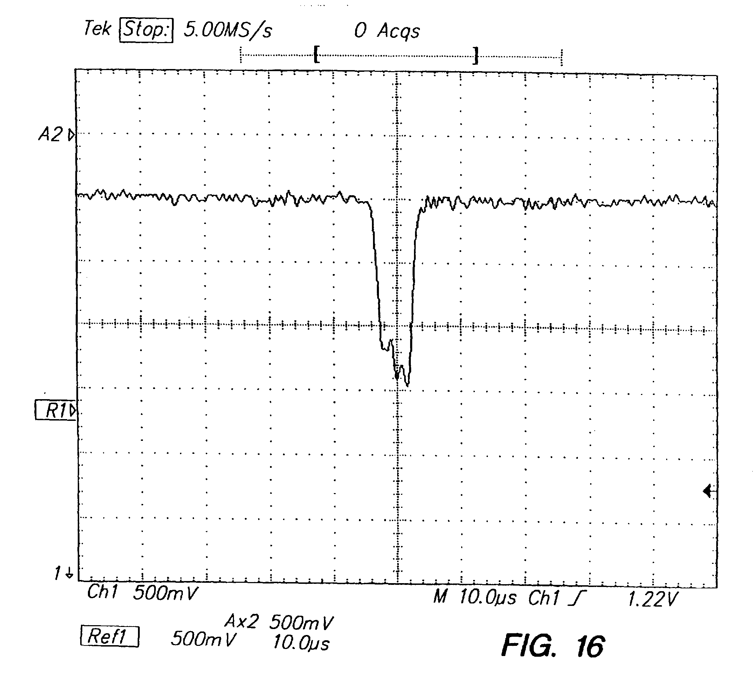

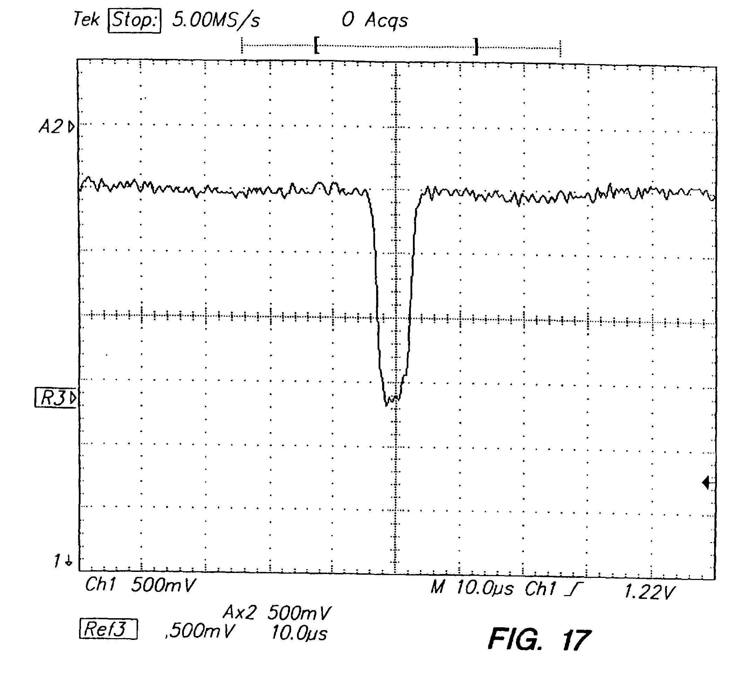

FIG. 14 presents another oscilloscope tracing of the HF event signaled by detection of a separate red cell on the same disc. The biphasic peak is more pronounced. FIGS. 15 - 17 are additional examples.

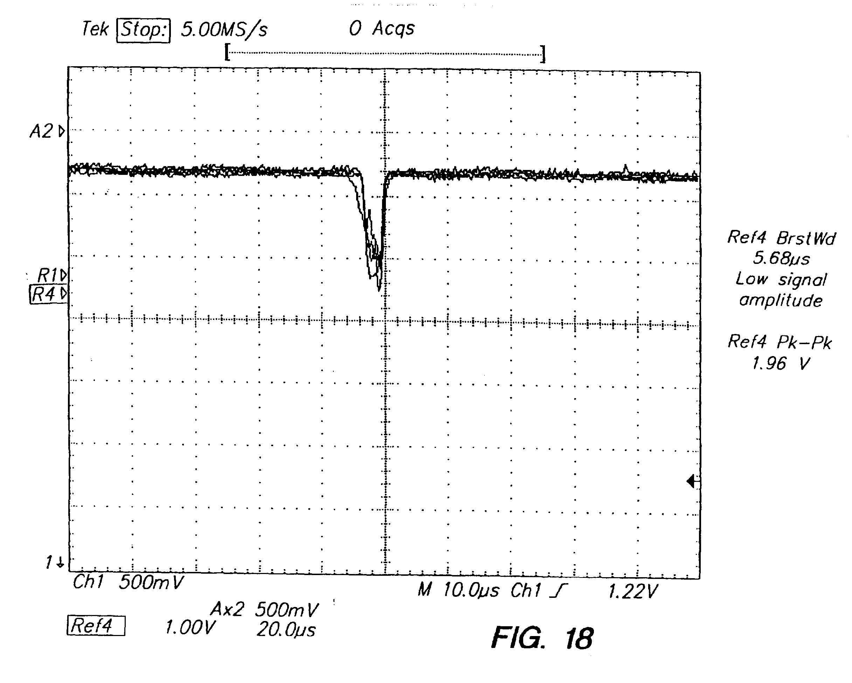

FIG. 18 is a digital superimposition of multiple events acquired from various areas of the same disc, demonstrating the reproducibility of the size and shape measurements over several different red blood cells immunospecifically adherent to the disc.

In summary, Examples 1 - 3 demonstrate that micron-sized nonoperational structures disposed upon the first surface of a single-layer inverted optical disc constructed according to the principles described herein may be detected, measured, and characterized by a minimally-modified standard optical disc reader/writer. The operational structures of the disc, including tracking structures, are detected concurrently with and readily discriminated from nonoperational structures using a single optical pickup. Example 2 particularly demonstrates that immunoassays for small molecule analytes may readily be adapted to detection using this system; Example 3 demonstrates that cell counting and cellular analysis are also readily accomplished.

Example 7, in turn, demonstrates that assays based upon nucleic acid hybridization may similarly be adapted to detection using the trackable optical discs of the present invention.

As set forth in detail in Example 7, solution phase hybridizations were performed in parallel at various concentrations of target nucleic acid in the presence of constant amounts of: (1) a single-stranded nucleic acid probe complementary in sequence to a first portion of the target ("3' probe") and (2) a single-stranded nucleic acid probe complementary in sequence to a second portion of the target ("5' probe"). The 3' probe was further conjugated to a paramagnetic bead and the 5' probe was further conjugated to biotin: the paramagnetic bead serves to permit magnetic separation and purification of the partially duplexed target, and further permits direct detection by an optical disc reader; the biotin moiety of the 5' probe permits capture of the partial duplex by streptavidin applied to the metallic surface of a first surface disc of the present invention.

FIG. 36 schematizes the assay site at the time of visualization. Directly adherent to the gold surface of the trackable optical disc is a coating of streptavidin, bound by van der Waal's forces and by sulfur-gold bonds formed between free sulfyhydryls of the streptavidin protein and the gold surface of the disc. The streptavidin captures the biotin moiety of the 5' probe. The 5' probe, in turn, captures the target nucleic sequence by Watson-Crick complementarity with 14 nucleotides at the 3' end of the target. The target, in turn, captures the 3' probe through Watson-Crick complementarity of 14 nucleotides at its 5' end, thus tethering the Dynabead® to the disc.

FIG. 37 presents light microscopic images taken separately of assay discs 1 - 3, each disc at two magnifications: adherent spheres and the wobble grooves are clearly visible in the higher magnification panels of all three. Increasing numbers of adherent beads are clearly seen with increasing amounts of nucleic acid target, with disc 3 (FIG. 37C) showing complementarity-driven adherence of spheres to the disc surface at 20 zeptomoles ($20 \times 10^{-21}$ moles; $12 \times 10^3$ molecules) nucleic acid target, with disc 2 (FIG. 37B) showing complementarity-driven adherence of spheres to the disc surface at 20 attomoles ($20 \times 10^{-18}$ moles; $12 \times 10^6$ molecules) nucleic acid target, and disc 1 (FIG. 37A) showing complementarity-driven adherence of spheres to the disc surface at 20 femtomoles ($20 \times 10^{-15}$ moles; $12 \times 10^9$ molecules) of nucleic acid target. No beads were observed on the surface of either control disc (not shown). It will be appreciated that FIG. 37 presents, in each image, only a portion of the assay field.

Example 7 thus demonstrates that nucleic acid hybridization-based assays may readily be adapted for detection using the trackable optical discs of the present invention. Among the nucleic acid hybridization-based assays that may readily be adapted for detection using the optical discs of the present invention are hybridizations to nucleic acid arrays, such as are described in U.S. Patent Nos. 5,143,854; 5,405,783; 5,445,934; 5,510,270; 5,800,992; 5,556,752; 5,599,695; 5,744,305; 5,770,722; 5,837,832; 5,843,655; International Patent Publication No. WO 98/12559 (Demers), and further in Nature Genetics 21(Suppl.): 1-60 (1999), the disclosures of which are incorporated hereby by reference in their entireties.

Example 7 further demonstrates that magnetic beads, long used for separation and purification in molecular biology, may now additionally be used directly for signaling, providing an efficient system for separation, purification, and detection without the obligate further labeling of the nucleic acid with radionuclides, fluorophores, enzymes, chemical moieties, or the like.

In each of the aforementioned uses, the optical discs of the present invention permit detection of individual, spatially resolvable events.

<u>Single data-layer disc variants</u>

As will be understood by one skilled in the art, numerous variations of the single data-layer analyte-specific optical disc 130, with or without a removable cover, may be manufactured. A nonlimiting plurality of embodiments are discussed below.

<u>Holographic Operational Structures</u>

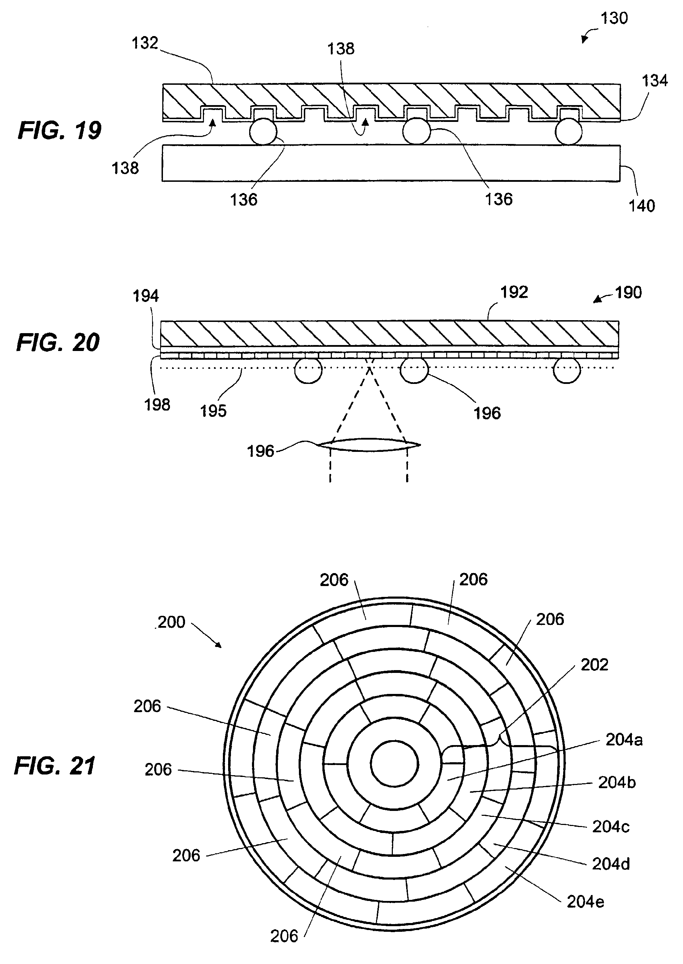

Referring now to FIG. 20, one single data layer embodiment is shown. In this embodiment, the operational structures of the disc are encoded in a reflective hologram rather than by physical impression in the disc substrate. Use of a reflective hologram permits the physical plane of the operational structures to be removed from the physical plane occupied by nonoperational structures. Multiple data layer (information layer) discs, as described further below, present alternative approaches to physical segregation of operational and nonoperational structures.

Disc 190 comprises disc substrate 192, hologram 194, and transparent protective coating 198. Hologram 194 is a reflective hologram containing the operational structures required by disc 190. Specifically, when a laser is reflected from hologram 194, it will appear as though a wobble groove of correct orientation is present at hologram image plane 195.

In a preferred embodiment, the hologram image plane 195 is laser-proximal to the hologram physical plane 194 and is substantially confocal with nonoperational structures 196 disposed upon the first surface of the assay disc. The laser is focused, as before, on the plane shared by the nonoperational structures and the operational structures (here, an image of a wobble groove), permitting concurrent and discriminable acquisition of operational data (specifically, tracking data) and analyte-specific data.

It should be apparent, of course, that optimizing laser focus on the image plane of the hologram - confocal with the nonoperational structures - necessitates that the laser be less tightly focused on the hologram's physical plane. Yet the very nature of holographic imaging not only tolerates such "error" but benefits therefrom. As is well known in the optical arts, each portion of hologram's physical surface can generate the entirety of the image that is interferometrically encoded thereon; however, as the illuminated portion decreases in size, the resolution degrades. Conversely, the larger the portion of the hologram illuminated, the better the image. Thus, the larger the illuminating laser spot, the better the image of the disc's operational structures - in preferred embodiments, a wobble groove - will be.

As would be understood by the skilled artisan, the hologram image plane may also usefully be projected so that it is no longer exactly confocal with the nonoperational structures, so long as the operational structures, such as a wobble groove, are concurrently detectable with the analyte-specific signals. Thus, the image may be projected not only laser-proximal to the hologram's physical plane, but also laser-distal thereto.

Furthermore, although shown as integral to disc 190, hologram 194 may be removable. This permits hologram 194 to be mass-produced using existing highspeed holographic printing processes. Furthermore, depending on the application, hologram 194 can also be reversibly attachable to disc substrate 192, potentially permitting reuse of substrate 192. The holographic single data layer embodiments of the trackable assay discs of the present invention permit low cost mass-production of discs readable by the wide installed base of optical readers.

As in the other, physically embossed, embodiments of the single data layer discs of the present invention, disc substrate 192 need not meet the optical requirements of standard transparent disc substrate 112, inasmuch as disc substrate 192 lies laser-distal to the data planes.

Also as in the embodiments above-described in which the operational structures are embossed and reflectively coated, the holographic embodiments may usefully include a laser-proximal, nonintegral cover that assists in focus. In the holographic embodiments, the focus is thereby adjusted onto the hologram image plane.

Zoned CLV

Both the physically-impressed and holographically-encoded single data layer discs described herein above may usefully employ tracking schemes other than a CD-R standard wobble groove. In particular, optical discs of the present invention can be built in accordance with the principles of the present invention with a "Zoned Constant Linear Velocity" (ZCLV) format for laying out regions of the disc. Briefly described here, the ZCLV format, as is well known in the art, is detailed in various industry standards, including the DVD-RAM specification (see, e.g., ECMA 272, incorporated herein by reference in its entirety).

As shown in FIG. 21, a top side view, ZCLV disc 200 has data area 202 that is divided into multiple zones 204a-204e. Although only five zones are shown, actual ZCLV format discs may have different numbers of zones. The DVD-RAM ZCLV format, for example, has 24 zones within its rewriteable data area.

Each of zones 204a-204e is divided into multiple sectors 206. Inner zones have fewer sectors than outer zones, since the radius of inner zones is less than the radius of outer zones. The layout of the disc is arranged so that header information for each block of data on each track (i.e., each turn of the spiral) aligns radially within each sector. This permits an embossed, non-wobble header area to be used for each block of data, followed by a "wobbled land and groove" area in which data may be written.

In use, the optical disc reader may rotate a ZCLV disc at a constant rate within each zone, and still maintain a substantially constant data rate within a zone. For inner zones, the disc must be rotated quickly to maintain an overall substantially constant data rate, while for outer zones, the disc may be rotated at a lower rate.

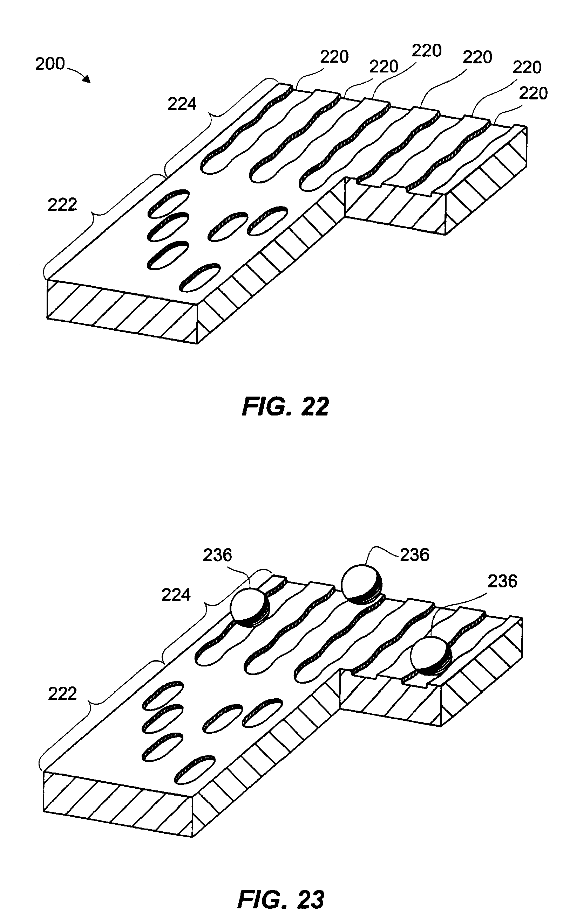

FIG. 22 shows an enlarged perspective view of a portion of one of the sectors of ZCLV disc 200. As can be seen, multiple tracks 220 are arranged radially within the sector, so that each track has header information for a block of data embossed in "pre-groove" area 222. Data for each track may then be recorded both within the wobble grooves, and on the wobbled land areas between the grooves within "wobbled land and groove" area 224.

For use as an assay disc in accordance with the present invention, nonoperational structures 236 may be deposited within wobbled land and groove area 224 of sectors on the disc, as shown in FIG. 23. Since, within each sector, wobbled land and groove area 224 forms a continuous region, an assay disc using a ZCLV format can use each of the sectors to perform a different assay. The embossed header information in pre-groove area 222 can be used to store information identifying the assay within the wobbled land and groove area. The wobbled lands and grooves within the wobbled land and groove area, and the embossed data tracks in the pre-groove areas, satisfy the functional requirements of an optical disc reader.

As suggested above, aspects of the various digital versatile disc (DVD) standards may usefully be employed in the practice of the single data layer embodiments of the present invention. The present invention is, therefore, not limited to existing CD-type discs or CD standards. In addition to the specific utility of the ZCLV format for multiassay discs discussed above, it will be readily apparent that the smaller structure size and lower wavelength laser specified in the DVD standards permit a higher density of nonoperational structures to be detected with higher spatial discrimination than is possible using CD standards. Another significant advantage of adapting features of the DVD-RAM standard to the forward image inverted discs of the present invention is its land-groove tracking feature (see ECMA 272), which doubles the tangential resolution available for detecting and characterizing nonoperational structures on the disc. Furthermore, the dual data layer DVD format offers unique advantages, further discussed in sections below.

Disc covers

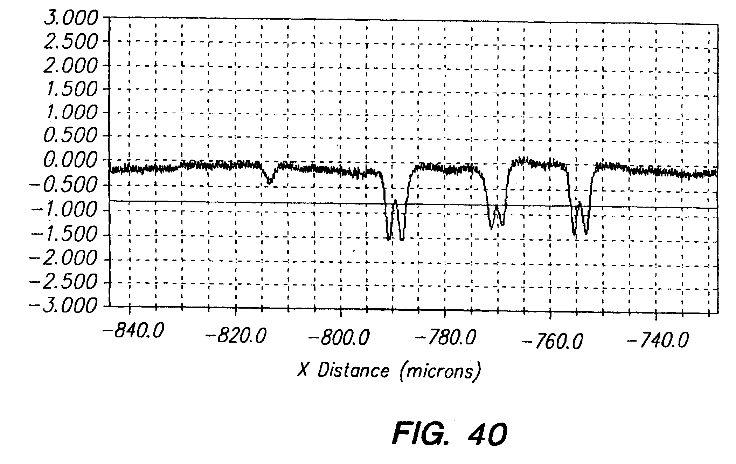

The CD-R reader used in Examples 2 and 3 herein had been modified by addition of focusing lens 17 to adjust the drive's focus to account for the absence of a laser-proximal refractive substrate as the first surface of the analyte-specific disc. An alternative approach, which will often be preferred, adjusts the disc itself, rather than the disc reader. In this latter approach, a laser-refracting member is attached to the laser-proximal side of the disc as a cover; the cover serves to refract, and thus to focus, the incident light on the disc's reflective surface. Suitably designed, the cover obviates alteration in the drive's focusing optics. The data presented in FIG. 40 were obtained, without assistance of a further focusing lens 17, using such a cover.

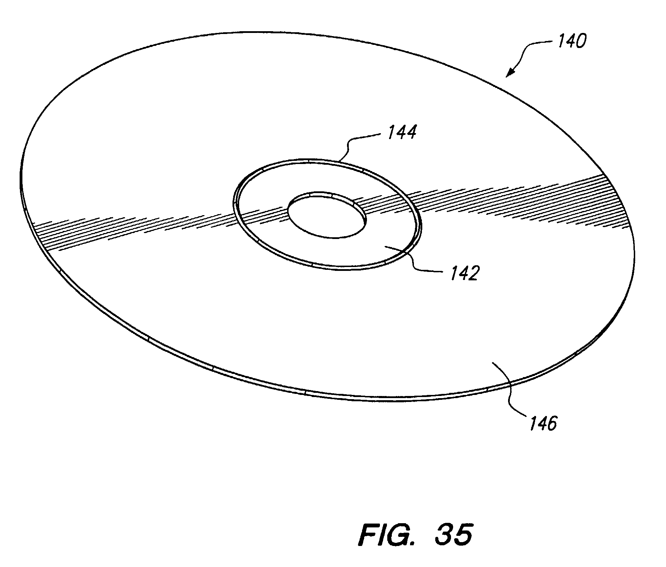

Such an approach is depicted in FIG. 19. By convention herein, laser light is incident from below in this side cross-sectional view. Disc 130 comprises disc substrate 132 and reflective layer 134, upon which nonoperational structures 136 are disposed. Wobble groove 138, impressed in substrate 132 and coated by reflective layer 134, is indicated. Also shown is nonintegral cover 140. One embodiment of such a cover is further shown in top perspective view in FIG. 35.

Preferably, the disc assembly (disc plus attached cover) is so dimensioned as to approximate the size standard for a unitary optical disc, that is, 1.2 mm in depth and either 80 mm or 120 mm in diameter. However, it is also contemplated that the disc assembly can vary from this size. In these latter cases, despite variance from the physical size specifications of the optical disc standards, the assembly must still prove capable of meeting the necessary optical and mechanical requirements of the drive: among other requirements, the laser must correctly focus on the disc's operational plane, the disc assembly must clamp properly onto the spindle, and the disc assembly must not vary so far from standard weight that the drive's motor cannot maintain proper rotational speed.

Example 6 presented herein below describes the manufacture of polycarbonate covers approximately 1.17 mm thick, but otherwise dimensioned identically to a standard 120 mm disc. The covers were manufactured from polycarbonate to take advantage of the well known optical qualities of polycarbonate and to take advantage of the ready availability of devices adapted to its molding. As further discussed below, however, other plastics may advantageously be used in constructing disc covers.

The single data layer discs manufactured as in Example 5 are 1.2 +/- 0.05 mm thick; the covers manufactured as in Example 6 are about 1.17 mm thick. Assembled, the two approximate 2.4 mm in depth, outside the maximal physical thickness provided by the Red Book standard (1.1 - 1.5 mm for all layers combined). Although this does not present an optical problem - the optical path remaining within specification - it seemed possible that this increased physical depth might present difficulties in the clamping of the disc assembly in the drive. Furthermore, the assembled disc and cover exceeded the weight of standard, unitary discs.

Empirically, however, we found unexpectedly that the assembly both clamped and spun without problem. The data presented in FIG. 40 were obtained using discs manufactured according to Example 5 and assembled, before reading in an optical disc drive, with a cover manufactured in accordance with Example 6. The cover provided sufficient assistance to focusing to obviate addition of a further focusing lens 17 to the drive's optical pickup in producing the data set forth in FIG. 40.

In a separate series of experiments (not shown), we removed the clamping ring from the disc before attaching the cover, permitting the drive to engage the disc assembly by clamping the 1.2 mm thick cover alone. And as discussed above, the disc itself may be reduced in thickness by stamping in a DVD-R mold.

Although a nonintegral member is presently preferred as a laser refracting disc cover, an integral cover, hingeably or otherwise moveably attached, or even an integral member that cannot be moved, can also be used. Nonintegral covers may be reversibly (removably) or irreversibly attachable to the disc, depending on desired usage.

To generate the data presented in FIG. 40, a nonintegral polycarbonate cover manufactured as in Example 6 was affixed irreversibly to discs manufactured according to Example 5. Two to three small drops of methylethylketone (MEK), which partially dissolves the polycarbonate and renders it tacky, were applied to the disc's clamping ring 142. A commercially available paint stripping grade was used. The cover was then pressed gently against the disc for about 30 seconds. The MEK permanently affixes the cover to the disc at the clamping ring; at the outer diameter of the assembly, the disc and cover remain closely apposed but unattached.

The optical and mechanical requirements of the system require that the disc and cover be assembled in close radial registration to prevent the disc from going out of round; eccentricity during rotation could prevent the servo from locking the tracking signal.

To ensure proper registration, the disc of the present invention and matching nonintegral cover will preferably have structural structures that intermesh and/or interlock. In one preferred approach, the cover will circumferentially overlap the edge of the disc. The prototypical covers manufactured according to Example 6, lacking such engineered structures, were centered on the disc as follows.

In initial efforts, a plastic tray from a CD holder ("jewel case") was used to immobilize the single data layer forward image, positive relief inverted optical disc. MEK was applied with dropper to the disc's clamping ring and the cover was then placed on top and pressed into place. The deformable spindle in the jewel case held disc and cover in sufficiently close registration to permit successful assembly. Subsequent to these efforts, a simple, dedicated, device was fashioned to accomplish the registration.

The disc and cover manufactured according to Examples 5 and 6, respectively, each have a stacking ring 144 that delimits the clamping ring 142 from data area 146. The stacking ring, which protrudes from one side of the disc (and cover) but not the other, is designed to keep adjacent discs, when stacked, from approaching one another closely enough to scratch. Accordingly, the disc and cover were assembled with stacking rings facing away from one another.

MEK was used in the experimental examples herein because it conveniently and quickly permits attachment of polycarbonate structures. Other glues may also be used, and may be required where plastics other than polycarbonate are used for the cover and/or disc. Furthermore, MEK frosts the polycarbonate surface; although its application to the clamping ring 142 presents no optical problems, lying as it does outside the data area, MEK cannot be used as readily if bonding is desired within the data area, closer to the disc's outer diameter. For those purposes, glues that are more optically suitable would likely be preferred; among such glues, those typically used to adhere the separate laminae in DVD discs (see below) may prove preferable.

Polycarbonate was chosen for the covers exemplified herein to take advantage of the well known optical qualities of polycarbonate and the ready availability of devices adapted to its molding. However, other plastics may advantageously be used in constructing disc covers. Such plastics include polymethylacrylic, polyethylene, polypropylene, polyacrylate, polymethylmethacrylate, polyvinylchloride, polytetrafluoroethylene, polystyrene, polycarbonate, polyacetal, polysulfone, celluloseacetate, cellulosenitrate, nitrocellulose, or mixtures thereof. Glass can also be used.

As noted above, the nonoperational structures are preferably disposed confocally with the operational structures of the disc in the single data layer discs of the present invention. This permits the laser to focus concurrently on the nonoperational structures and operational structures of the disc. Furthermore, when signal elements fall directly into the operational structures - in the discs exemplified herein, into the wobble groove - signal is maximized.

It will be understood, however, that the nonoperational structures and the operational (particularly, tracking) structures need not be in the identical focal plane- it suffices that the nonoperational structures and operational structures be sufficiently confocal as to permit the disc reader's objective assembly concurrently to detect them both.

Thus, nonoperational structures may be disposed upon the laser-distal (that is, disc-proximal) side of the cover rather than, or in addition to, on the disc surface itself. This approach presents several significant advantages.

First, disposing the nonoperational structures on the plastic increases dramatically the chemistries that may be used to affix the nonoperational structures, such as analyte-specific signal elements, to the surface. Although gold-sulfur bonds prove widely adaptable - as demonstrated by the adherence of antibodies (Example 2), adherence of cells (Example 3), and attachment of nucleic acids (Example 7) - plastic presents a far wider selection of available attachment chemistries.

Second, although the gold surface may be patterned to present discrete sites for such attachment, plastic surfaces may even more readily be derivatized to present chemically reactive groups in spatially defined patterns; these patterns of reactive groups, in turn, facilitate the application of nonoperational structures in spatially addressable patterns.

Among the advantages discussed therein is the ability to array signal elements in patterns that report analyte concentrations across a wide dynamic range.

Other spatially-defined and spatially-addressable patterns readily suggest themselves. For example, the utility of arraying nucleic acids in spatially addressable formats on other substrates, such as silicon chips or glass slides, is well known.

Furthermore, analyte-specific elements placed closer to the inner diameter of the disc are read at the outset of disc motion; analyte-specific elements placed progressively further from the inner diameter are read after progressively greater rotational delay. In nonequilibrium analyses, such patterning readily permits kinetic assays to be performed, with earlier reaction time points thus reported by assay sites disposed more peripherally on the disc.

Third, plastic surfaces may also readily be derivatized to present a desired degree of hydrophilicity, presenting further advantages over metal surfaces when the surface must uniformly be wet with an aqueous sample. In addition, the surface may be patterned with areas that present varying degrees of hydrophilicity and hydrophobicity.

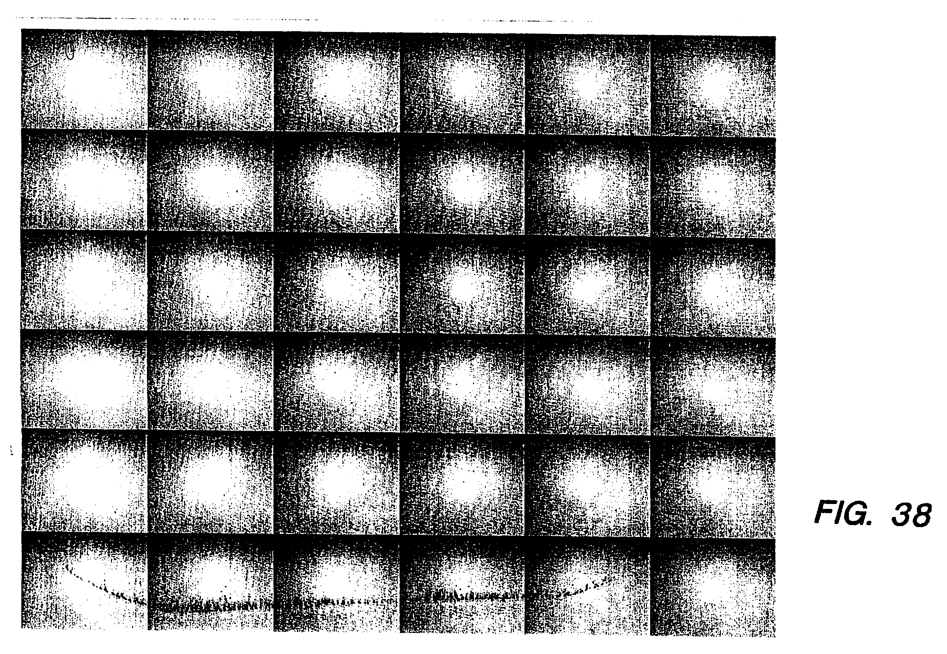

Fourth, we have observed that the flow of fluids across the surface of the disc is influenced by, and at times impeded by, the wobble groove itself. This is demonstrated in FIG. 38, in which applied microbeads were easily caused to align along the groove. The flat surface of a disc cover presents no such impediment to the uniform flow of fluids across its surface.

Fifth, microfluidic components may readily be engineered into a plastic cover.

And yet another advantage of disposing nonoperational structures on a plastic cover is that, when the cover is both nonintegral and removable from the disc assembly, the trackable disc itself may be reused.

The cover - whether integral or nonintegral, removable or affixed permanently, with or without nonoperational structures disposed thereon - serves other advantageous functions as well. It should be apparent that the reflective surface of discs of the present invention is exposed to air, in contrast to the reflective layer 114 of a standard disc. For this reason, nonoxidizable metals, such as gold, are preferably used in their manufacture, although aluminum or oxidizable metals may be used if covered by a thin layer of plastic. Being exposed, the reflective layer 134 of a first surface analyte-specific assay disc of the present invention is subject to abrasion, dust, and the like, that may degrade the signal obtainable therefrom. A plastic cover usefully protects the reflective surface, and the information thereon, from environmental degradation.

In addition, the cover serves to isolate infectious and other pathogenic agents from the user, a significant benefit in immunoassays for viral agents, such as HIV.

From an operational standpoint, application of removable cover 140 after nonoperational structures 136 have been deposited on reflective layer 134 may compress the nonoperational structures and drive them into wobble groove 138, further approximating the signal elements to the operational structures of the disc, increasing signal.

Among plastics useful in construction of laser-refracting covers, polystyrene proves particularly useful: many current clinical assays are conducted on polystyrene surfaces. Standard microtiter dishes, used in enzyme-linked immunosorbent assays (ELISA) and radioimmunoassay (RIA), are made of polystyrene. A wealth of experience attends the conduct of clinical assays on polystyrene surfaces; such assays can thus readily be adapted to the present platform. Additionally, precision molding of polystyrene is presently practiced and readily accomplished.

Furthermore, the cover can also profitably be composed of glass, rather than plastic, or other substantially transparent super cooled fluids, liquid crystals, or crystalline materials, including silicon.

As would of course be understood, the thickness of cover 140 would have to be adjusted to account for differences in the refractive index of the chosen plastic in order to focus the laser correctly on the disc's operational structures. Such adjustments are well within the skill of the optical disc artisan.

As would also be understood, detecting nonoperational structures through a cover - that is, performing second surface rather than first surface detection - will on occasion benefit from the presence in the drive of gain control circuitry, as is found on the vast majority of CD-RW drives.

Although described as of uniform composition, possibly with surface patterning, the cover can also have a nonuniform composition, either in the radial plane, in the direction of the optical axis, or in both.

It is also possible to achieve many of the advantages that are conferred by disposing nonoperational structures on a plastic cover by coating the reflective surface of the disc with a thin, transparent layer of plastic, the nonoperational structures then applied thereupon (i.e., on the most laser-proximal surface of this multilaminate structure). Polystyrene resin may readily be used for this purpose and then cured in situ. The resin is applied by vacuum deposition or by spin coating, then cured with UV light; the process is presently practiced in the art with polymethylacrylic, widely known as the "2P" process.

This latter approach confers the aforementioned advantages of disposing nonoperational structures, such as analyte-specific signal elements, on plastic. Furthermore, it eliminates the boundary condition that otherwise exists between the cover and gold surface of the disc, permitting return from the disc operational plane of a more coherent light. However, because the layer is designed to be sufficiently thin as to place the signal elements substantially confocal with the disc's operational structures, the layer is alone insufficient fully to assist in focusing. A cover, suitably dimensioned, may then additionally be used.

Furthermore, such a coating may profitably be composed of a thin layer of glass, rather than plastic, or other substantially transparent super cooled fluids, liquid crystals, or crystalline materials, such as silicon.

As noted above, adding a laser refracting cover to the disc to create a disc assembly restores second surface characteristics to the disc, permitting extra lens 17 to be removed from the optical pickup. The data presented in FIG. 40 were obtained using discs manufactured as in Example 5, with cover manufactured as in Example 6, read by a Ricoh 6200S CD-RW drive without the additional focusing lens required to assist focusing in Examples 2 and 3.

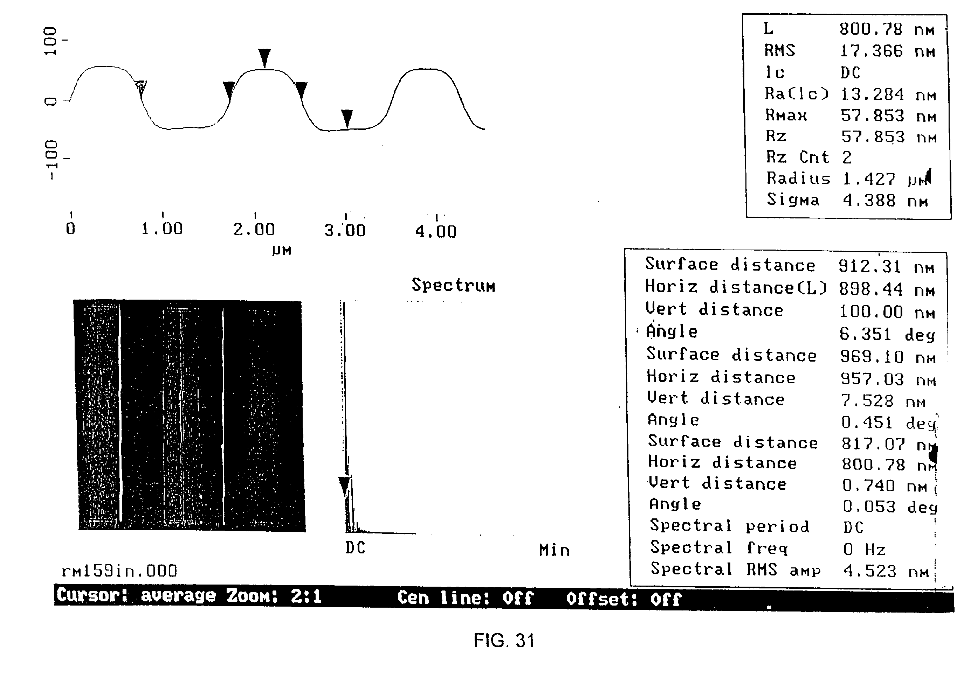

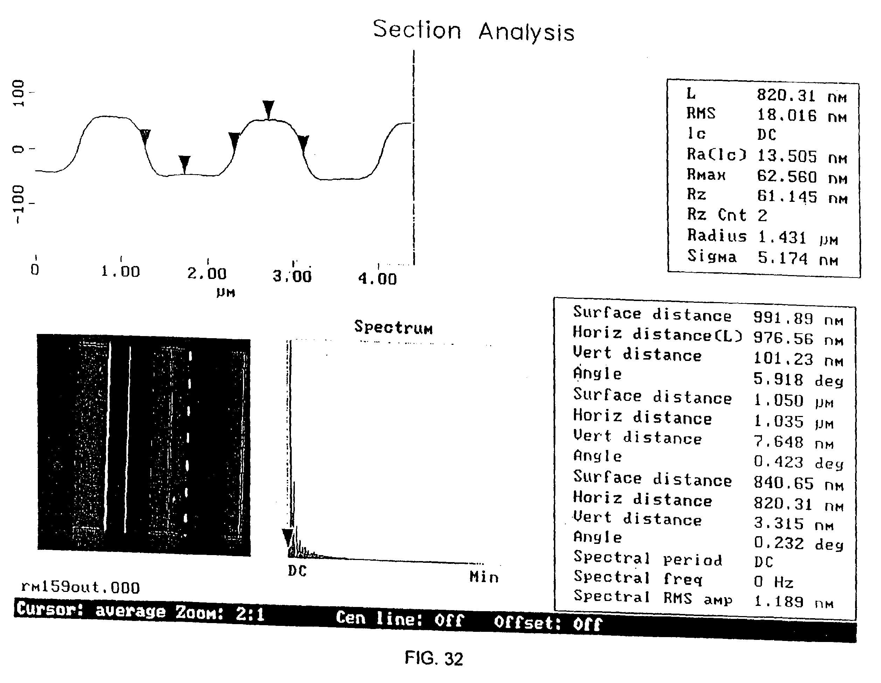

As shown in FIGS. 31 and 32, the discs manufactured in Example 5 and used to generate the data shown in FIG. 40 had groove depths of approximately 100 nm, near the optimum for first surface detection. Even with cover, the 100 nm groove depth permitted ready discrimination between signal and background, as evidenced by the electronic tracings shown in FIG. 40, demonstrating that the present approach to constructing single data layer trackable discs with concurrently readable nonoperational structures is remarkably robust.

Cover 140 is optionally not present while assay sites are being prepared on the disc, sample applied, and further assay steps, as needed to develop the assay, are performed. Thereafter, to prepare the disc for reading, cover 140 is placed over reflective layer 134 and signal elements 136.

Wobble Detection

As discussed above, the wobble groove, which proves particularly advantageous as a tracking structure for the concurrent and discriminable detection of operational and nonoperational signals in the single data layer embodiments of the present invention, was first added to the optical disc standard to permit user-directed recording of CD (and later DVD) media. As set forth in the relevant standard, colloquially termed the Orange Book, the wobble is detected by the recording device during writing of data to the disc; thereafter, tracking is accomplished by detecting the data so written. Certain optical disc devices, which have been manufactured primarily for quality control purposes, have the ability to detect a wobble tracking structure without writing to the disc. Examples of such devices include those manufactured by CD Associates, Inc., of Irvine, California and Audio Development AB, of Malmö, Sweden. Thus, except for use in these specialized quality control devices, the standard, and many existing implementations of the standard, generally contemplate that the wobble is redundant after writing.

Because the wobble is typically detected only during writing, a process that is unnecessary to most implementations of the present invention (and that causes laser pulsing at amplitudes that might interfere with detection of analyte-specific signals) a reader/writer specially designed for quality control purposes in CD manufacture was used in Examples 2 and 3; this device detects and tracks the wobble without obligate pulsing of the laser at the energies required for disc writing. The Ricoh 6200S CD-RW drive without additional focusing lens that was used to generate the data in FIG. 40 was adapted to read the wobble without writing to the disc.

Signal processing

In Example 3, described briefly above and in detail below, the analogue HF signal was fed to a digital oscilloscope to generate the real-time tracings shown in FIGS. 13 - 18. In contrast, the data in FIG. 40 were first acquired, digitized, stored on computer magnetic disc, and only thereafter displayed on a computer monitor by appropriate interpretive software.

Multiple data layer discs

A second series of embodiments of the present invention takes advantage of the multiple data layer structures specified in the recently-developed Digital Versatile Disc (DVD) format. As discussed in detail below, the DVD format is particularly well-suited to providing optical disc geometries and tracking schemes that permit disc tracking signals to be acquired concurrently with and discriminated from signals generated by nonoperational structures.

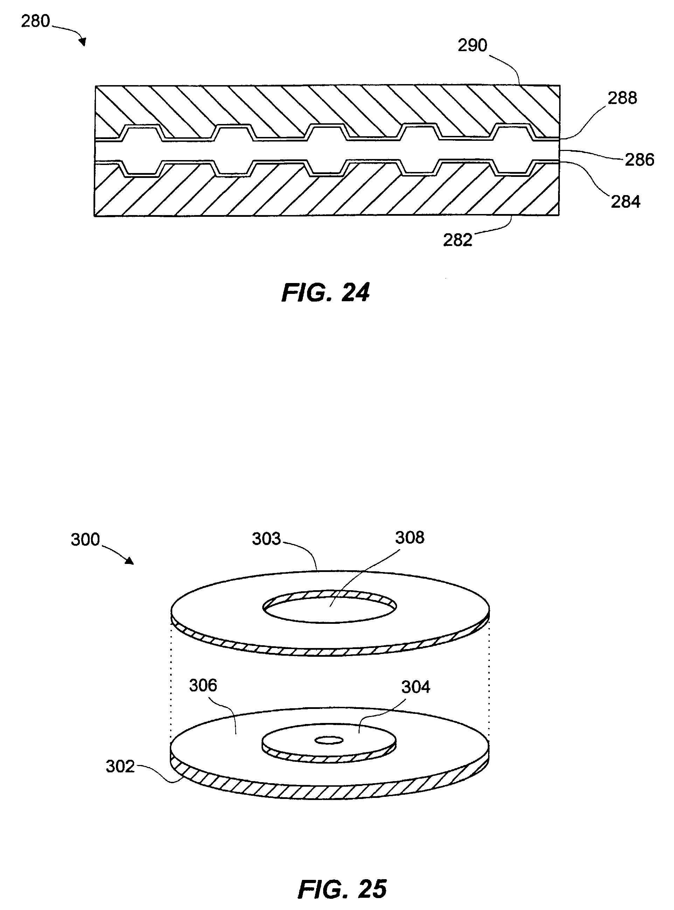

Referring now to FIG. 24, a side cross-sectional view of a typical dual layer DVD format disc is shown. By convention herein, laser light is incident from below. Disc 280 comprises laser-proximal substrate 282, semi-reflective layer 284, spacer layer 286, reflective layer 288, and laser-distal substrate 290.

Proximal substrate 282 comprises a transparent optical material, such as polycarbonate, having an index of refraction chosen to assist in focusing a laser beam onto either one of the two layers of data. Proximal substrate 282 may be manufactured by an injection molding process similar to the process described above for manufacturing CD-Recordable format discs. Proximal substrate 282 is typically embossed with data arranged along a spiral track. These data are typically referred to as residing in "layer 0" of a two layer disc.

The data-bearing surface of proximal substrate 282 is coated with semi-reflective layer 284. Semi-reflective layer 284 comprises a very thin coating of a material such as silicon, gold, aluminum, silver, copper or alloys thereof, that reflects some light and transmits some light. Semi-reflective layer 284 typically has a reflectivity of approximately 30%, although a range of reflectivity may be accommodated. Thus, semi-reflective layer 284 may have a reflectivity of about 20% - 40%, more preferably 25% - 35%, most preferably about 30%.

Distal substrate 290 comprises a material such as polycarbonate that can be molded with a spiral data track. Since the laser beam will not pass through distal substrate 290, its optical characteristics are unimportant. Distal substrate 290 may be manufactured by an injection molding process, such as described herein above.

Distal substrate 290 is embossed with data in a spiral data track that may run parallel with the spiral data track of layer 0 (i.e., from the inner portion of the disc to the outer portion), or in the opposite direction of the spiral data track of layer 0 (i.e., from the outer portion of the disc to the inner). The data embossed in distal substrate 290 is referred to as residing in "layer 1" of the two layer disc.

The data-bearing surface of distal substrate 290 is coated with reflective layer 288, which may comprise a thin layer of any reflective material, such as gold, aluminum, silver, or copper. Reflective layer 288 typically has a reflectivity that is designed to be as close as possible to the reflectivity of layer 0. This is done to obviate readjustment by the automatic gain control when switching reading from one to the other layer; such changes in the gain may adversely affect tracking. For this reason, layer 1 of a dual layer disc most often has a reflectivity far lower than 70%.

Spacer layer 286 provides 40 to 70 microns of space between layer 0 and layer 1 of the two layer disc, and also serves to bind proximal substrate 282 and semi-reflective layer 284 to distal substrate 290 and reflective layer 288. Spacer layer 286 typically comprises an optical adhesive having an index of refraction that is close to the index of refraction of the material from which proximal substrate 282 is manufactured.

In use, a DVD reader can focus its laser either on semi-reflective layer 284, to read the data in layer 0, or on reflective layer 288, to read the data in layer 1. The multilayer nature of DVD discs and the concomitant dual-focus of DVD readers make DVD particularly well-suited for use in the present invention: the plane occupied by the operational structures of the disc may, in these embodiments, be segregated physically from the plane occupied by analyte-specific elements, facilitating concurrent discriminable acquisition of both types of data.

Thus, in one embodiment, nonoperational structures are placed confocally with data layer 0; the disc's tracking and other operational structures are positioned at data layer 1. In another embodiment, conversely, nonoperational structures are placed confocally with data layer 1, and the disc's tracking and other operational structures are positioned at data layer 0. In yet another alternative, assay elements are disposed in spacer layer 286, substantially confocal with either of the two data layers.

Several of these principles are demonstrated by reference to the embodiment shown in FIG. 25. FIG. 25 presents an exploded side perspective view of DVD-type dual data layer assay disc 300. The disc disassembles substantially along the plane that is defined in a typical dual layer DVD disc by spacer layer 286.

Disc 300 comprises two portions: main portion 302 and cover portion 303. The portions may be permanently affixed to one another, may be separate and assemblable, or may be separate and reversibly assemblable. In any of these configurations, prior to reading of the disc the cover portion 303 is assembled over outer assay area 306 of main portion 302. Opening 308 and area 304 are so dimensioned as to permit a snug and reliable fit of the two pieces.

Outer assay area 306 of main portion 302 comprises a single data layer area upon which are disposed nonoperational structures. Analogously to the single data layer embodiments presented herein above, outer assay area 306 is embossed with a wobble groove (not shown), or other appropriate tracking structures, for use in providing tracking information to an optical disc reader. Pursuant to DVD standards, and in contrast to the single-layer embodiments presented above, the wobble groove may be either a forward image or reverse image groove. As mentioned, a ZCLV format can be used.

Main portion 302 also comprises inner data area 304. Inner data area 304 is formatted in a manner similar to any normal dual layer DVD disc. Programs and data may be stored on layer 0 and/or layer 1 of this area of the disc.

In particular, inner data area 304 preferably contains instructions that direct the optical disc reader to adjust its focus to the correct data layer to read the analyte-specific signals present in assay area 306. Furthermore, inner data area 304 may store data used to adjust the firmware or "flash" components of the drive chipset, as needed to permit the drive correctly to read and interpret the analyte-specific signals.

Cover portion 303 preferably comprises a transparent optical material, such as polycarbonate, polymethyl acrylic, or glass, selected so as to optimize the detection of the operational structures (e.g. the wobble groove) of disc 300, as well as the detection of the signal elements.

As will be apparent, variations well within the skill in the art include disposing the nonoperational structures at either layer 0 or layer 1 in area 306, or at both such layers, segregating tracking structures physically from the assay plane, which may itself lack tracking structures, or combinations thereof. Further, the assay may be performed on cover portion 303, by depositing the signal elements on the laser-distal surface of cover portion 303 before assembly of the disc.

It will be apparent to one skilled in the art that there are many minor variations that could be made in this embodiment. For example, if large amounts of data or programming are needed to interpret the results of an assay, inner data area 304 could have data written both on layer 0 and on layer 1, without altering the wobble groove and assay results (i.e., signal elements) of layer 0 of outer assay area 306.

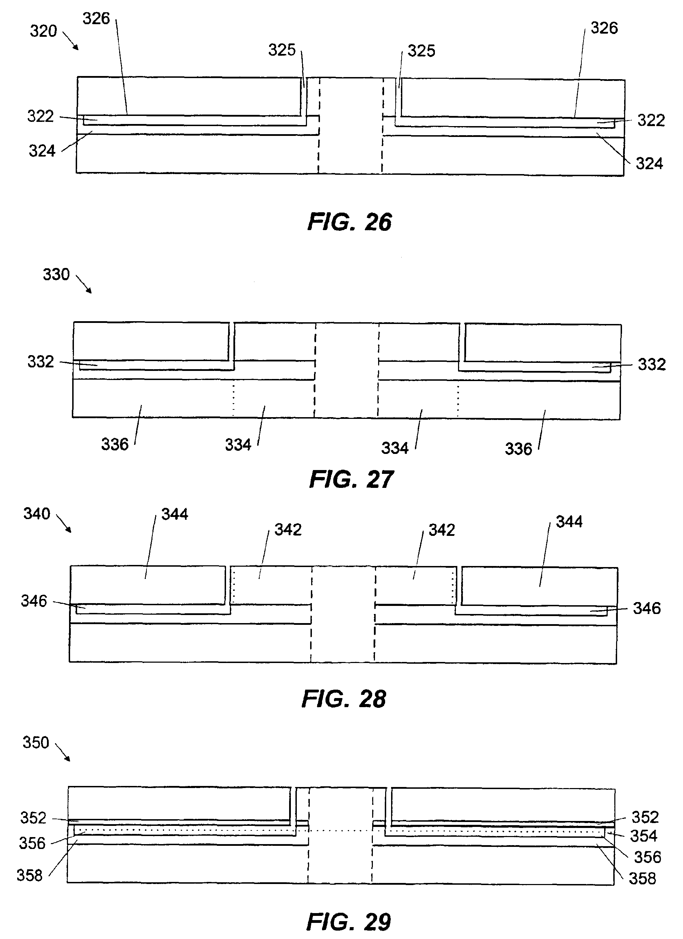

Another set of advantages of the multi-layer DVD format may be seen by reference to FIG. 26, a side cross-sectional view of another multi-layer embodiment of an assay disc built in accordance with the present invention. By convention herein, laser light is incident from below.

Disc 320 comprises channels 322 located in spacer layer 324. Assays may be performed by introducing materials to be tested into channels 322 through openings 325 that lie on the laser-distal side of the disc. When the assay is performed, signal elements are deposited on reflective layer 326 of layer 1 of disc 320.

Layer 1 of disc 320 is embossed with a wobble groove, providing the minimal operational needs of an optical disc reader. Layer 0 of disc 320 contains data and programming necessary to read the assay disc, and to interpret the results.

As will be apparent to one skilled in the art, multiple assays may be performed on a single disc by using multiple separate channels 322, each designed to handle a different assay. Additionally, it will be apparent that the location of channels 322 within spacer layer 324 may vary. For example, channel 322 could be adjacent to layer 0 instead of layer 1, or could be roughly centered within spacer layer 324. In either of these cases, the signal elements that are placed within channels 322 as a result of performing an assay may be detected in the return path of a laser focused on the operational structures present in layer 1 of disc 320.

FIG. 27 shows a side cross-sectional view of an assay disc similar to disc 320 of FIG. 26. Laser light would be incident from below. In disc 330 of FIG. 27, channels 332 are located towards the outer portion of the disc, leaving a central portion of disc 330 as a "standard" two layer disc. Layer 0 of disc 330 is divided into two sections. Section 334 of layer 0 stores data or programs, as described hereinabove. Section 336 of layer 0 comprises a transparent material having optical properties that may be different from the optical properties of section 334. In a preferred embodiment, the optical properties of section 336 of layer 0 are optimized for focusing a laser beam onto the operational structures of the disc, and for detecting the signal elements in channels 332.

Referring to FIG. 28, another dual layer embodiment of an assay disc built in accordance with the principles of the present invention is shown in similar side cross-sectional view. Disc 340 is usable in either a DVD reader, or in a CD-Recordable reader. Layer 0 of disc 340 is arranged according to the DVD format. Data encoded on layer 0 of disc 340 may be read by a standard DVD player. Layer 1 of disc 340 is encoded according to the CD-Recordable format, and therefore uses a wider track pitch, and a lower density arrangement of data. Data may be encoded in central portion 342 of layer 1. Assay portion 344 of layer 1 is embossed with a wobble groove to satisfy the operational requirements of an optical disc reader, and is adjacent to channels 346, which are used for performing assays, as described hereinabove.

FIG. 29 shows another alternative embodiment of a two-layer disc. On disc 350, the data and operational structures of layer 1 of the two layer disc are provided by hologram 352. Hologram 352 is similar to hologram 194 of FIG. 20, so that the operational structures and data encoded on hologram 352 appear to the optical disc reader to be located at image plane 354, which may be either laser distal or laser proximal relative to hologram 352. Channels 356 are used for performing assays, so the signal elements may be disposed within spacer layer 358 of disc 350. These signal elements are detectable in the return path of a laser beam that is focused on the operational structures of hologram 352.

It will be apparent to one skilled in the art that a hologram similar to hologram 352 may be used to provide layer 1 in nearly any of the foregoing dual layer discs. As shown, image plane 354 is laser proximal relative to the surface of hologram 352, so the signal elements will appear to be placed directly on the surface of layer 1, or within the wobble groove that is simulated by hologram 352.

It will further be apparent to one skilled in the art that many of the foregoing embodiments shown with reference to a two layer disc could be easily extended to use in a multi-layer disc having more than two layers. For example, channels for use in performing assays could be located between each of the layers of a multi layer disc, with each of the layers (except layer 0) providing any operational structures needed by the optical disc reader.

The following examples are offered by way of illustration and not by way of limitation.

EXAMPLE 1

Manufacture of a Trackable, Forward Image Positive Relief Inverted Optical Disc Suitable for Analyte-Specific Assay

An unpunched father part containing an image of a CD-R format wobble groove, manufactured by Cinram (Anaheim, California), was matrixed to form a CD-R mother part by standard procedures. Briefly, the electroforming was performed in a nickel sulfamate bath in an electroforming system manufactured by Digital Matrix, Inc. (Hempstead, New York).

The mother part was cleaned, polished and punched, then used directly as a stamper to manufacture inverted discs having a forward image spiral groove with operational structures in positive relief. A NETSTAL molding machine, manufactured by Netstal Machinery Ltd. (Naefels, Switzerland), and a CD-R mold created by AWM, of Switzerland were used to generate the discs at EXIMPO S.R.O. (Prague, Czech Republic). The molding parameters of the injection molding machine were adjusted to facilitate high venting in the mold, to accurately reproduce a groove. The polycarbonate used to mold the discs was produced by Bayer Plastics.

The polycarbonate disc substrates were then metalized with gold, using a metalizer manufactured by First Light Technologies (Saco, Maine).

As shown in the AFM measurements of FIGS. 10 - 12, the groove depth of these discs was approximately 170 nm with a track pitch of approximately 1.6 $\mu$m.

EXAMPLE 2

Construction of An IgG-Specific Immunoassay Site on A Trackable Optical Disc

A single data layer, first surface, forward image/positive relief wobble disc was manufactured according to Example 1. The gold surface of the disc was then derivatized as follows to construct an assay site specific for and capable of detecting human IgG in a blood sample.

An aliquot of 2 mg of N-[6-(biotinamido)hexyl]-3'-(2'-pyridyldithio)propionamide ("Biotin-HPDP") (Pierce, Rockford, IL; lot number 97032461) was dissolved in 2 ml of dimethylformamide. Onto each of four intended assay sites, each located at the same radius from the center of the disc, 10 $\mu$l of biotin-HPDP solution was pipetted. The disc was incubated for 2 hours at room temperature, and then washed with 50 mM phosphate buffer (pH 7).

Next, 10 $\mu$l of streptavidin solution (Monobind, Costa Mesa, CA; Lot 96-001/MF; 2 mg/ml) was pipetted onto the same assay spots. The disc was incubated one hour at RT, and then washed with 50 mM phosphate buffer.

Biotinylated goat anti-human IgG was obtained from Chemicon International, Inc. (Temecula, CA; affinity purified, lot 47797017). An aliquot of 5 $\mu$l was pipetted onto each of the four assay sites. The disc was incubated one hour at RT, then washed with 50 mM phosphate buffer (pH 7).

The geometry of the completed assay site is schematized in FIG. 7A. Biotin-HPDP 70 forms the first molecular layer above the disc surface, bonded to the disc's gold surface (Au) by a gold-sulfur dative (coordinate) bond. Streptavidin, 72, each molecule of which can bind four molecules of biotin at high affinity, forms the next layer. Biotinylated goat anti-human IgG 76, which confers analyte specificity upon the assay site, is then bound to the immobilized streptavidin 72 by its biotin moiety 74. The goat anti-human IgG is biotinylated at a location that permits its immobilization without interfering with antigen (human IgG) binding.

The disc, as so derivatized, was then used to assay for the presence of IgG in human blood.

A 100 $\mu$l sample of human blood was drawn from a normal volunteer. A 10 $\mu$l aliquot of the blood sample was diluted 10-fold using phosphate-buffered saline ("PBS"). Two further 1:10 serial dilutions in PBS were identically performed. A ten microliter (10 $\mu$l) aliquot of each one of the samples - that is, an aliquot of undiluted blood and an aliquot of each of the three serially-diluted blood samples - was separately and individually placed on one of the four disc assay sites.

The disc was incubated under nitrogen in a closed humidified chamber for 2 hrs at room temperature. The disc was then washed with PBS.

To develop the IgG-specific assay, that is, to render it suitable to report the presence of IgG in an applied sample, 5 $\mu$l (160 $\mu$g) of MagaBeads™ goat anti-human IgG ($F_c$) (Cortex Biochem, Inc., San Leandro, CA; lot 7A2201A) was spotted onto each of the four assay sites, and the disc incubated for 4 hours in a closed chamber. The disc was washed with 50 mM phosphate buffer (pH 7) and then with distilled water.

The geometry of the assay site after capture of IgG from blood and development with anti-human IgG Maga-Beads™ is schematized in FIG. 7B. IgG 78 that had been present in the blood sample (the analyte) is bound by the biotinylated anti-human IgG 76 immobilized at the assay site. The human IgG 78 then serves further to immobilize the anti-IgG Magabeads™ 79. Magabeads™ are spherical latex magnetizable particles that are available commercially - either preconjugated with a variety of binding moieties, such as goat anti-human IgG as here, or alternatively with reactive groups that permit custom conjugation.

The disc was dried, and its surface then visualized by light and atomic force microscopy (AFM). FIG.8 is a video image captured from a light microscopic examination of a portion of the IgG-specific first surface analyte-specific trackable assay disc after application of human blood and antibody-conjugated spheres. FIGS. 9 and 10 are AFM images of a single latex sphere immunospecifically adherent to the disc, at somewhat higher magnification than that used in FIG. 8, with summaries quantitating dimensions observed by the AFM during image acquisition. FIG. 11 is an atomic force microscope image of two latex spheres immunospecifically adherent to a first-surface trackable human IgG-specific disc and present in the same AFM field, with summary quantitating dimensions observed by the AFM during image acquisition.

EXAMPLE 3

Electronic Detection and Characterization of Human Erythrocytes On An RBC-Specific Trackable Immunoassay Optical Disc

A single data layer, first surface, forward image/positive relief wobble disc was manufactured according to Example 1. The gold surface of the disc was then derivatized as follows.

An aliquot of 2 mg of N-[6-(biotinamido)hexyl]-3'-(2.-pyridyldithio)propionamide ("Biotin-HPDP") (Pierce, Rockford, IL; lot number 97032461) was dissolved in 2 ml of dimethylformamide. Onto each of four intended assay sites, each located at the same radius from the center of the disc, 10 $\mu$l of biotin-HPDP solution was pipetted. The disc was incubated for 2 hours at room temperature, and then washed with 50 mM phosphate buffer (pH 7).

Next, 10 $\mu$l of streptavidin solution (Monobind, Costa Mesa, CA; Lot 96-001/MF; 2 mg/ml) was pipetted onto the same assay spots. The disc was incubated one hour at RT, and then washed with 50 mM phosphate buffer.

Monoclonal mouse anti-human glycophorin A antibody (Dako Co., Carpinteria, CA; lot 113) was biotinylated as follows. A 100 $\mu$l aliquot of antibody was mixed with 0.1 mg of $\alpha$-Biotin, $\omega$-N-hydroxysuccinimidyl ester of poly(ethylene glycol)-carbonate ("Bio-PEG-NHS") (Shearwater Polymers, Inc. Huntsville, AL; lot PT-028-27) in 100 $\mu$l of phosphate buffer (pH 7) and allowed to react for 1 hour. The biotin-conjugated anti-human glycophorin A was dialyzed overnight against the same buffer (dialysis MWCO = 30,000).

The dialyzed biotin-conjugated anti-human glycophorin A antibody was pipetted onto the streptavidin-coated assay spots on the disc and the disc was then incubated for 1 hour at room temperature, followed by wash using 50 mM phosphate buffer (pH 7).

The disc, as so derivatized, was then used to assay for the presence of red blood cells in human blood.

A 100 $\mu$l sample of human blood was drawn from a normal volunteer. A 10 $\mu$l aliquot of the blood sample was diluted 10-fold using phosphate-buffered saline ("PBS"). Two further 1:10 serial dilutions were identically performed. An aliquot of 10 $\mu$l undiluted blood, and a 10 $\mu$l aliquot of each of the serially diluted samples was placed individually on the four disc assay sites.

The disc was incubated under nitrogen in a closed humidified chamber for 2 hrs at room temperature. The disc was then washed with PBS.

FIG. 12 is an atomic force microscopic image confirming the immunospecific adherence of RBCs to the assay site of the disc. As noted in the quantitative analysis, the RBC's horizontal size is given as 7.984 $\mu$m, in agreement with the known diameter of red blood cells (8 $\mu$m); this size is clearly different from the uniform 3 $\mu$m diameter of the latex spheres used and observed in Example 2. The height of the RBC above the bottom of a groove is observed to be 1.8 $\mu$m.

The disc was washed with a 5% solution of glycerol, dried, and read in the CD-drive as follows.

A CD-R device manufactured for quality control use in the optical disc industry by CD Associates, Inc. (Irvine, CA) was used to read the disc. The drive's CD-R wobble tracking system (model RSL100) was modified by addition of a lens 17 to the optical pickup 10 to adjust focus in the absence of a first refractive layer on the disc; the height of the spindle was also raised. The HF (RF, quad sum) signal was amplified by the electronic circuitry in the RSL100, and the buffered HF signal input to a digital oscilloscope.

FIG. 13 presents a representative tracing, with the X axis displaying time and the Y axis displaying the magnitude of the quad sum signal. FIG. 13 demonstrates that the red blood cell is directly visible as a high frequency, high amplitude event in the HF signal of a CD-R reader; for an analyte the size of a mammalian cell, no latex sphere or other exogenous signaling moiety is required to generate an analyte-specific signal.

Also evident from the oscilloscope tracing in FIG. 13 is that the deviation from the HF baseline is a double peak. Although red blood cells are well known to have a characteristic biconcave shape, we have observed this dual peak when latex spheres are used, as in Example 2, to report the presence of analytes. The dual peak appears to result from reproducible changes in reflectance as the laser traverses a sphere in the groove.

A further observation readily apparent from the oscilloscope tracing in FIG. 13 is that the baseline on either side of the signaling event is steady; that is, tracking of the wobble groove (here manufactured as an inverse image wobble groove) does not itself cause significant change in the quad sum signal.

The optical reader, in accordance with CD-R standard, maintained a constant linear velocity irrespective of the location being read on the disc, modifying spindle speed to lock a constant wobble frequency. Based upon the known linear velocity of the disc and the time increments marked on the oscilloscope tracing, each division on the oscilloscope tracing may be shown to correspond to a linear distance on the disc of 13 $\mu$m. As measured on the tracing shown in FIG. 13, the deviation in the quad sum signal baseline thus gives 10 $\mu$m as the approximate uncorrected size of the object in the direction of the tracking groove.

The actual size of the object is smaller. Prior calibration of the reader and oscilloscope using 3 $\mu$m latex spheres had given oscilloscope peaks reporting an apparent size of 5 $\mu$m, 2 $\mu$m wider than the actual object. This likely is accounted for by the 1.5 $\mu$m laser focus diameter at the first surface of the assay disc.

Taking into account the 2 $\mu$m difference between measured and actual size occasioned by the diameter of the laser at the disc surface, the event captured on the oscilloscope tracing in FIG. 13 as a high frequency, high amplitude deviation in quad sum signal reports an object size of 8 $\mu$m, in excellent agreement with the known 8 $\mu$m diameter of a human erythrocyte.

FIG. 14 presents another oscilloscope tracing of the HF event signaled by detection of a separate red cell on the same disc. The biphasic peak is more pronounced. FIGS. 15 - 17 are additional examples.

FIG. 18 is a digital superimposition of multiple events acquired from various areas of the same disc, demonstrating the reproducibility of the size and shape measurements over several different red blood cells immunospecifically adherent to the disc.

EXAMPLE 4

Calculation of optimal signal element sizes

Analyte-specific signals can be optimized by adjusting the size of spherical signal elements relative to the size of the tracking groove, as follows.

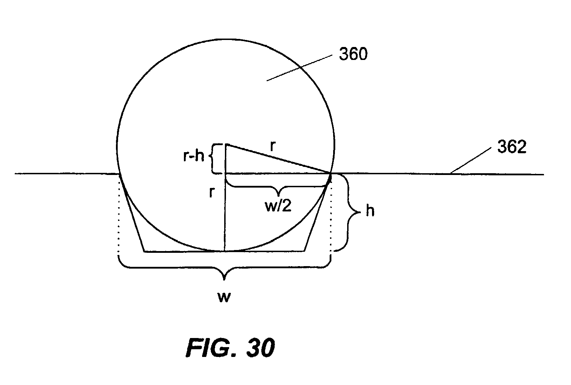

FIG. 30 illustrates a calculation of the size for a spherical signal element 360 to fit into a groove on disc 362 such that the signal element is bound to the groove at three points: one point at the bottom of the groove, and a point at each edge of the groove. In the following formulae, r is the radius of the spherical signal element, w is the width of the groove, and h is the depth of the groove.

By the Pythagorean theorem, the relationship between the radius of the sphere and the width and depth of the groove is:

$$r^2 = (r-h)^2 + \left(\frac{w}{2}\right)^2 \tag{1}$$

Solving for r yields:

$$r = \frac{4h^2 + w^2}{8h} \tag{2}$$

Since the depth of a groove is preferably $\lambda/8$, where $\lambda$ is the wavelength of light used to read the disc, one can express the radius as:

$$r = \frac{4\dfrac{\lambda^2}{64} + w^2}{\lambda} \tag{3}$$

Simplifying this yields:

$$r = \frac{\lambda}{16} + \frac{w^2}{\lambda} \tag{4}$$

Applying equation (4), if the wavelength of the light used to read the disc is $0.65\mu$m (*i.e.*, 650nm, which is used for DVD), and the groove width is $0.8\mu$m (the track pitch for DVD), then the radius of the spherical signal elements should be approximately $1.03\mu$m.

EXAMPLE 5

Manufacture of Single Data Layer Optical Discs With Forward image/Positive Relief Wobble Groove Optimized For First Surface Detection

A CD-R mother part was fabricated to order at CINRAM, essentially as set forth in Example 1, to serve directly as a stamper to produce trackable, single data-layer, forward image/positive relief wobble groove discs. The mother part was used to stamp about 5000 polycarbonate discs, which were then metalized with gold and stored for subsequent use. The disc molding was performed at EXIMPO S.R.O. (Prague, Czech Republic). Mold settings are set forth in FIGS. 41A - 41I.

The discs fabricated in Example 1 (and used in Examples 2 and 3 to generate the data presented in FIGS. 8 - 18), had groove depths of approximately 170 nm, reported as "vertical distance" in the dimensional summary provided by atomic force microscope, reproduced in FIG. 10. The discs manufactured here, by contrast, were designed with groove depths approximating the first surface theoretical optimum of 1/8 the 780 nm wavelength of the intended incident laser.

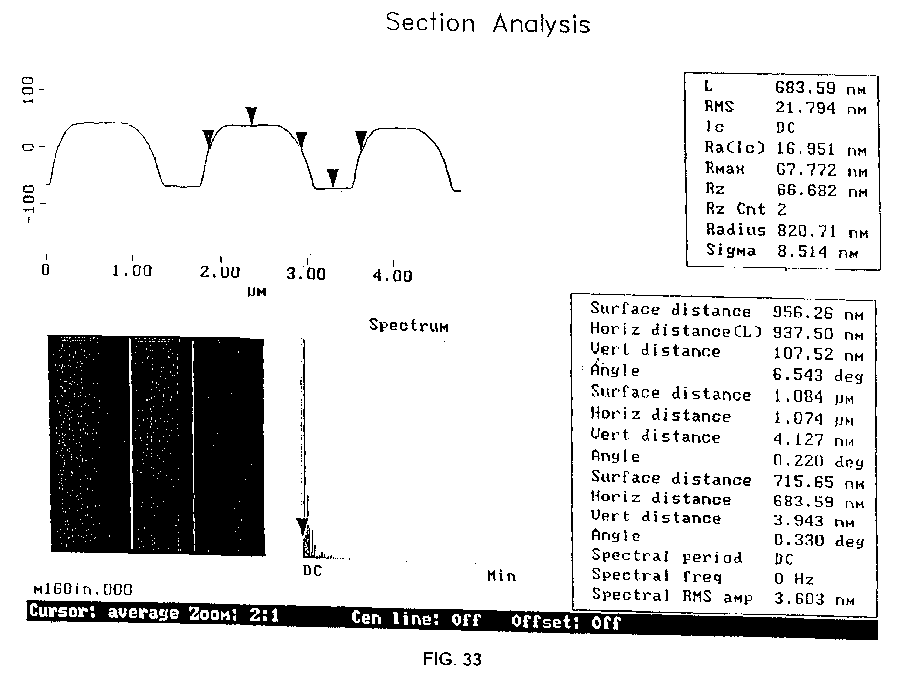

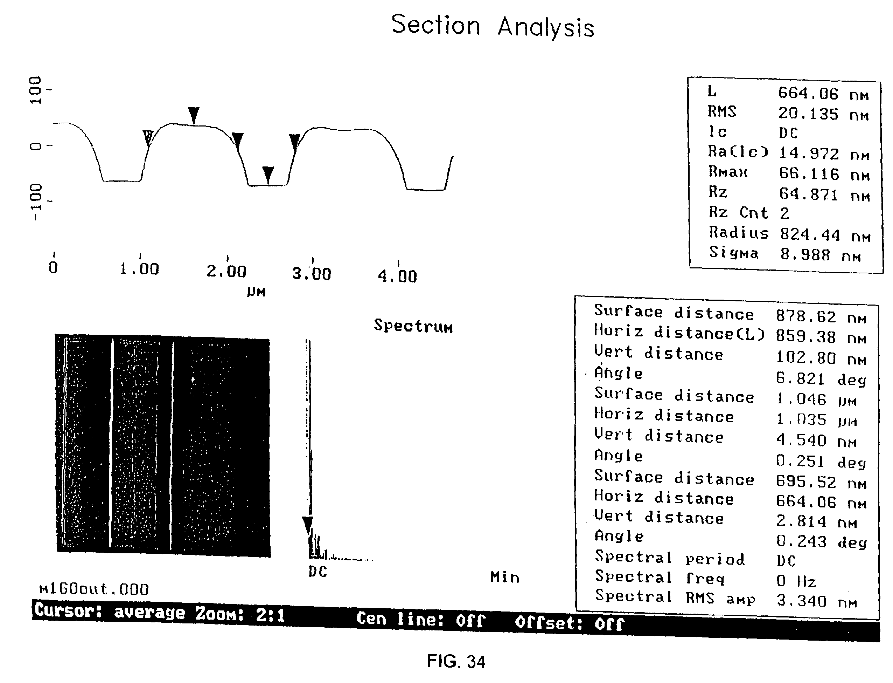

FIG. 31 presents data from atomic force microscopic examination of the inner diameter of one of the discs. The dimensional summary reports a groove depth of approximately 100 nm. FIG. 32 presents similar data from atomic force microscopic examination of the outer diameter; as is typical of disc manufacture, the groove depth is slightly greater at the outer diameter (here, 101.23 nm), to accommodate the somewhat increased travel of the outer portion of the disc in the direction of the optical axis. FIG. 33 presents analogous data from atomic force microscopic examination of the inner diameter of the mother part, and FIG. 34 presents data from atomic force microscopic examination of the outer diameter of the mother part.

### EXAMPLE 6

Manufacture of Laser-Refracting Polycarbonate Covers

Laser refracting polycarbonate covers, one of which is shown in top perspective view in FIG. 35 and further schematized in FIG. 19 in side sectional view (as assembled to a single data layer analyte-specific disc), were manufactured as follows.

A nickel disc stamper intended for manufacture of a standard CD, but too thick for effective mounting on a molding machine, was placed in a standard stamper polisher. The data surface of the stamper was polished to smoothness, producing a stamper about 260 $\mu$m - 330 $\mu$m thick with two polished faces. The stamper was mounted in a standard CD-R mold and settings were adjusted to give a polycarbonate cover approximately 1.17 mm thick, but otherwise dimensioned identically to a standard 120 mm disc.

The single data layer discs manufactured in Example 5 are about 1.2 +/- 0.05 mm thick; the cover is about 1.17 mm thick. Together, the two create an assembly that is approximately 2.4 mm thick, outside the maximal physical thickness provided by Red Book standard (1.1 - 1.5 mm for all layers combined). Empirically, we found that the increased thickness of the disc assembly presented neither optical nor mechanical problems. The data presented in Figure 40 were obtained using discs manufactured according to Example 5 and assembled, before reading, with a cover manufactured in accordance with this Example. The cover provided sufficient assistance to focusing to obviate addition of a further focusing lens 17 to the drive's optical pickup.

### EXAMPLE 7

High Sensitivity Nucleic Acid Sequence-Driven Adherence of Signal Elements to Trackable Optical Discs

Single data layer, first surface forward image/positive relief wobble discs were manufactured according to Example 5. The gold surface of the discs was then derivatized as follows. Manipulations were performed in a laminar flow hood in a clean room.

On each of six discs was placed a single spot of 15 $\mu$L streptavidin solution (2 mg/mL). The discs were incubated 1 hour, then rinsed in a stream of distilled $H_2O$ (d$H_2O$). An aliquot of 10 $\mu$L 2-mercaptoethylamine (137 $\mu$g/mL) was added to each spot to block non-specific binding (the solution had been stored at 4°C for a time sufficient to oxidize the solution). The discs were incubated for 3 minutes, then rinsed with d$H_2O$. The discs were not dried before use.

Nucleic acid probes were synthesized to order by Keystone Laboratories (Foster City, CA) with amine-modified 3' or 5' termini as follows:

5'-TCGGGTGTACTCAC-amine-3' (SEQ ID NO:1)

5'-amine-TCCAAGAAAGGACC-3' (SEQ ID NO:2)

Each probe was then independently conjugated to biotin through its amine-modified terminus as follows.

A stock solution of biotin-PEG-NHS ($\alpha$-Biotin, $\omega$-N-hydroxysuccinimidyl ester of poly(ethylene glycol)-carbonate) (MW=3400,Shearwater Polymers, Inc. Huntsville, AL; lot PT-028-27) was prepared by dissolving solid in phosphate buffered saline containing azide as a preservative (PBSAz, pH 7.45) to a final concentration of 23.5 nmol/$\mu$L (4.7 mg biotin-PEG-NHS in 58.82 $\mu$L).

The 3' aminated probe (SEQ ID NO:1) ("3' probe") was dissolved in PBSAz to a final concentration of 1 nmol/$\mu$L (473 nmol in 473 $\mu$L). Twenty $\mu$L (20 mol) of the 3' probe solution was then added to 10 $\mu$L biotin-PEG-NHS stock solution to yield a final nucleic acid concentration of 660 pmol/$\mu$L. In parallel, the 5' aminated probe (SEQ ID NO:2) ("5' probe") was dissolved in PBSAz to a final concentration of 2 nmol/$\mu$L (84 nmol in 42 $\mu$L), and 10 $\mu$L (20 nmol) of this 5' probe solution was then added to 10 $\mu$L biotin-PEG-NHS stock to yield a final nucleic acid concentration of 1 nmol/$\mu$L. The solutions were separately incubated at room temperature (RT) for 2 hours.

The 3' probe was then conjugated to the surface of monodispersed superparamagnetic beads (uniformly 2.8 $\mu$m in diameter) via the biotin moiety. To a 1 mg aliquot (100 $\mu$L, 10 mg/ml) of streptavidin-coated Dynabeads® (Dynal Inc., Lake Success, NY; cat. no. M-280) were added ten successive 10 $\mu$L aliquots of 1:10 diluted 3' biotinylated probe prepared as above (66 pmol/$\mu$L at 1:10 dilution). A 10 minute incubation at room temperature was performed between the first and second addition of probe solution to the beads, 5 minutes between second and third, and two minutes between the remaining additions.

The 3' probe-conjugated beads were then rinsed twice with 200 $\mu$L PBSAz and 200 $\mu$L hybridization buffer

(923 mM $Na_2HPO_4$, 75 mM $NaH_2PO_4$, 1 mM EDTA, pH 7.34). Beads were recovered quantitatively from the rinse solutions using magnetic separation (Dynal). The beads were resuspended in 1 mL hybridization buffer. Assuming complete conjugation of nucleic acid, the 3' probe is present in this conjugated bead solution at an average concentration of 198 fmol/$\mu$L.

The 5' biotinylated probe (20 $\mu$L at 1 nmol/$\mu$L) was diluted to 1 mL with hybridization buffer (final concentration 20 pmol/$\mu$L).

Target nucleic acid was synthesized to order by Keystone Laboratories as follows:
5'-GTGAGTACACCGGAATTGCCAGGACGACCGGGTCCTTTCTTGGA-3' (SEQ ID NO:3).
Target was dissolved in PBSAz to a final concentration of 100 $\mu$M. Thereafter, four 1,000-fold (1 $\mu$L to 1 mL) serial dilutions were performed with hybridization buffer, yielding target test solutions at concentrations of 100 nM, 100 pM, 100fM and 100 aM.

Six fluid-phase hybridization reactions were set up in parallel solutions. In each reaction, 2 $\mu$L bead-conjugated 3' probe (396 fmoles nucleic acid) and 1 $\mu$L biotinylated 5' probe (20 pmoles) were incubated with target DNA (SEQ ID NO:3) as follows:

| | |
|---|---|
| reaction 1 | 1$\mu$L 100 nM target = 100 fmoles target |
| reaction 2 | 1$\mu$L 100 pM target = 100 amoles target |
| reaction 3 | 1$\mu$L 100 fM target = 100 zmoles target |
| reaction 4 | 1$\mu$L 100 aM target = 100 ymoles target |
| reaction 5 | 1$\mu$L hybridization buffer (control) |
| reaction 6 | 1$\mu$L water (control) |

Each tube was incubated at room temperature for 2 hours on a shaker, 300 RPM.

After hybridization was complete, each of the six hybridization reactions was rinsed twice with 100 $\mu$L PBSAz, with the beads recovered quantitatively using magnetic separation, and resuspended in 10 $\mu$L PBSAz. For each of the six reactions, 2 $\mu$L of bead suspension was then applied to the streptavidin assay spot on a separate one of the discs, yielding target amounts as follows:

| | |
|---|---|
| disc 1 | 20 fmoles (20 x $10^{-15}$ moles) target |
| disc 2 | 20 amoles (20 x $10^{-18}$ moles) target |
| disc 3 | 20 zmoles (20 x $10^{-21}$ moles) target |
| disc 4 | 20 ymoles (20 x $10^{-24}$ moles) target |
| disc 5 | 0 (hybridization buffer control) |
| disc 6 | 0 (water control) |

The beads were incubated 10 minutes on the disc, which was then rinsed with a stream of water. The discs were dried, then visualized by light microscopy.

FIG. 36 schematizes the assay site at the time of visualization. Directly adherent to the gold surface of the trackable optical disc is a coating of streptavidin, bound by van der Waal's forces and by sulfur-gold bonds formed between free sulfyhydryls of the streptavidin protein and the gold surface of the disc. The streptavidin captures the biotin moiety of the 5' probe. The 5' probe, in turn, captures the target nucleic sequence by Watson-Crick complementarity with 14 nucleotides at the 3' end of the target. The target, in turn, captures the 3' probe through Watson-Crick complementarity of 14 nucleotides at its 5' end, thus tethering the Dynabead® to the disc.

FIG. 37 presents light microscopic images taken separately of assay discs 1 - 3, each disc at two magnifications: adherent spheres and the wobble grooves are clearly visible in the higher magnification panels of all three. Increasing numbers of adherent beads are clearly seen with increasing amounts of nucleic acid target, with disc 3 (FIG. 37C) showing complementarity-driven adherence of spheres to the disc surface at 20 zeptomoles (20 x $10^{-21}$ moles; 12 x $10^3$ molecules) nucleic acid target, with disc 2 (FIG. 37B) showing complementarity-driven adherence of spheres to the disc surface at 20 attomoles (20 x $10^{-18}$ moles; 12 x $10^6$ molecules) nucleic acid target, and disc 1 (FIG. 37A) showing complementarity-driven adherence of spheres to the disc surface at 20 femtomoles (20 x $10^{-15}$ moles; 12 x $10^9$ molecules) of nucleic acid target. No beads were observed on the surface of either control disc (not shown).

All patents, patent publications, and other published references mentioned herein are hereby incorporated by reference in their entirety as if each had been individually and specifically incorporated by reference herein. While preferred illustrative embodiments of the present invention are described, it will be apparent to one skilled in the art that various changes and modifications may be made therein without departing from the invention, and it is intended in the appended claims to cover all such changes and modifications that fall within the true spirit and scope of the invention.

**Claims**

1. A trackable optical disc (190; 200; 280) having a readable nonoperational structure (196; 236), said disc comprising:

   an information layer including a trackable structure (194; 224; 352) that is followed by a read beam of an optical disc reader, said trackable structure providing a holographically-projected image; and
   at least one nonoperational structure (196; 236), said nonoperational structure and said trackable structure are concurrently readable by a single optical pickup.

2. The optical disc according to claim 1 wherein said holographic image is projected in a plane (195) confocal with said nonoperational structure (196; 236).

3. The optical disc according to claim 1 or 2 wherein said trackable structure (224) is an image of a wobble groove.

4. The optical disc according to any one of claims 1 to 3 wherein said nonoperational structure (196; 236) is an analyte-specific signal element.

5. An optical disc according to any one of claims 1 to 4 wherein said information layer includes a first reflective layer (288), and wherein said nonoperational structure is disposed on a predetermined side of a second reflective layer (284).

6. The optical disc according to claim 5 wherein said second reflective layer (284) is semireflective.

7. The optical disc according to claim 6 wherein said nonoperational structure is disposed confocally with a surface of said first reflective layer (288) and/or said semireflective layer (284).

8. The optical disc according to claim 7 wherein said nonoperational structure is disposed on a laser-proximal side of said first reflective layer (288), or on a laser-distal side of said first reflective layer (288), or between said first reflective layer (288) and said semireflective layer (284).

9. The optical disc according to any one of claims 6 to 8 wherein said reflective layer (288) and semireflective layer (284) are reversibly separable.

10. An optical disc assembly (300) having a readable nonoperational structure, said disc assembly comprising:

    a trackable optical disc according to any one of claims 1 to 9, and
    a cover (303) focusing an incident laser beam on said disc's information layer.

11. The optical disc assembly according to claim 10 wherein said cover (303) is nonintegral to said disc and attachable thereto, wherein said cover (303) is in particular reversibly attached to said disc, or moveably attached to said disc, or hingeably attached to said disc.

12. The optical disc assembly according to claim 10 or 11 wherein said cover (303) consists essentially of a material selected from the group consisting of plastic and/or glass, and in particular said cover consists essentially of polystyrene or polycarbonate.

13. The optical disc assembly according to any one of claims 10 to 12 wherein said assembly has a diameter in a radial plane between 110 - 130 mm and a depth between 1.1 - 1.3 mm.

14. The optical disc assembly according to any one of claims 10 to 13 wherein said nonoperational structure is disposed upon a disc-proximal side of said cover (303).

**Patentansprüche**

1. Abtastbare Bildplatte (190; 200; 280) mit einer lesbaren nichtbetrieblichen Struktur (196; 236), wobei die genannte Platte Folgendes umfasst:

eine Informationsschicht mit einer abtastbaren Struktur (194; 224; 352), der ein Lesestrahl eines Bildplattenlesers folgt, wobei die genannte abtastbare Struktur ein holografisch projiziertes Bild bereitstellt; und wenigstens eine nichtbetriebliche Struktur (196; 236), wobei die genannte nichtbetriebliche Struktur und die genannte abtastbare Struktur von einem einzigen optischen Aufnehmer gleichzeitig gelesen werden können.

**2.** Bildplatte nach Anspruch 1, wobei das genannte holografische Bild in einer Ebene (195) konfokal mit der genannten nichtbetrieblichen Struktur (196; 236) projiziert wird.

**3.** Bildplatte nach Anspruch 1 oder 2, bei die genannte abtastbare Struktur (224) ein Bild einer Wobbelrille ist.

**4.** Bildplatte nach einem der Ansprüche 1 bis 3, bei der die genannte nichtbetriebliche Struktur (196; 236) ein analytspezifisches Signalelement ist.

**5.** Bildplatte nach einem der Ansprüche 1 bis 4, bei der die genannte Informationsschicht eine erste reflektierende Schicht (288) aufweist und wobei die genannte nichtbetriebliche Struktur auf einer vorbestimmten Seite einer zweiten reflektierenden Schicht (284) angeordnet ist.

**6.** Bildplatte nach Anspruch 5, bei der die genannte zweite reflektierende Schicht (284) teilreflektierend ist.

**7.** Bildplatte nach Anspruch 6, bei der die genannte nichtbetriebliche Struktur konfokal mit einer Oberfläche der genannten ersten reflektierenden Schicht (288) und/oder der genannten teilreflektierenden Schicht (284) angeordnet ist.

**8.** Bildplatte nach Anspruch 7, bei der die genannte nichtbetriebliche Struktur auf einer laserproximalen Seite der genannten ersten reflektierenden Schicht (288) oder auf einer laserdistalen Seite der genannten ersten reflektierenden Schicht (288) oder zwischen der genannten ersten reflektierenden Schicht (288) und der genannten teilreflektierenden Schicht (284) angeordnet ist.

**9.** Bildplatte nach einem der Ansprüche 6 bis 8, bei der die genannte reflektierende Schicht (288) und die genannte teilreflektierende Schicht (284) reversibel trennbar sind.

**10.** Bildplattenbaugruppe (300) mit einer lesbaren nichtbetrieblichen Struktur, wobei die genannte Plattenbaugruppe Folgendes umfasst:

eine abtastbare Bildplatte nach einem der Ansprüche 1 bis 9, und
eine Abdeckung (303), die einen einfallenden Laserstrahl auf der Informationsschicht der genannten Platte fokussiert.

**11.** Bildplattenbaugruppe nach Anspruch 10, wobei die genannte Abdeckung (303) nicht einstückig mit der genannten Platte ausgebildet ist und daran angebracht werden kann, wobei die genannte Abdeckung (303) insbesondere reversibel an der genannten Platte angebracht ist oder beweglich an der genannten Platte angebracht ist oder gelenkig an der genannten Platte angebracht ist.

**12.** Bildplattenbaugruppe nach Anspruch 10 oder 11, wobei die genannte Abdeckung (303) im Wesentlichen aus einem Material besteht, das ausgewählt ist aus der Gruppe bestehend aus Plastik und/oder Glas, und die genannte Abdeckung insbesondere im Wesentlichen aus Polystyrol oder Polycarbonat besteht.

**13.** Bildplattenbaugruppe nach einem der Ansprüche 10 bis 12, wobei die genannte Baugruppe einen Durchmesser in einer radialen Ebene zwischen 110 - 130 mm und eine Tiefe zwischen 1,1 - 1,3 mm hat.

**14.** Bildplattenbaugruppe nach einem der Ansprüche 10 bis 13, wobei die genannte nichtbetriebliche Struktur auf einer plattenproximalen Seite der genannten Abdeckung (303) angeordnet ist.

**Revendications**

**1.** Disque optique pouvant être suivi (190 ; 200 ; 280) ayant une structure non opérationnelle lisible (196 ; 236), ledit disque comprenant :

une couche d'informations comportant une structure pouvant être suivie (194 ; 224 ; 352) qui est suivie par un faisceau de lecture d'un lecteur de disque optique, ladite structure pouvant être suivie fournissant une image projetée holographiquement ; et

au moins une structure non opérationnelle (196 ; 226), ladite structure non opérationnelle et ladite structure pouvant être suivie sont lisibles simultanément par une même tête de lecture optique.

2. Disque optique selon la revendication 1, dans lequel ladite image holographique est projetée dans un plan (195) ayant un foyer commun avec ladite structure non opérationnelle (196 ; 236).

3. Disque optique selon la revendication 1 ou 2, dans lequel ladite structure pouvant être suivie (224) est une image d'une spirale sinusoïdale (wobble).

4. Disque optique selon l'une quelconque des revendications 1 à 3, dans lequel ladite structure non-opérationnelle (196 ; 236) est un élément de signal spécifique à une substance à analyser.

5. Disque optique selon l'une quelconque des revendications 1 à 4, dans lequel ladite couche d'informations comporte une première couche réflective (288), et dans lequel ladite structure non opérationnelle est disposée sur un côté prédéterminé d'une deuxième couche réflective (284).

6. Disque optique selon la revendication 5, dans lequel ladite deuxième couche réflective (284) est semi-réflective.

7. Disque optique selon la revendication 6, dans lequel ladite structure non opérationnelle est disposée avec un foyer commun avec une surface de ladite première couche réflective (288) et/ou de ladite couche semi-réflective (284).

8. Disque optique selon la revendication 7, dans lequel ladite structure non opérationnelle est disposée sur un côté proche d'un laser de ladite première couche réflective (288), ou sur un côté distant d'un laser de ladite première couche réflective (288), ou entre ladite première couche réflective (288) et ladite couche semi-réflective (284).

9. Disque optique selon l'une quelconque des revendications 6 à 8, dans lequel lesdites couche réflective (288) et couche semi-réflective (284) sont séparables de manière réversible.

10. Ensemble de disque optique (300) ayant une structure non opérationnelle lisible, ledit ensemble de disque comprenant :

un disque optique pouvant être suivi selon l'une quelconque des revendications 1 à 9, et
un couvercle (303) focalisant un faisceau laser incident sur ladite couche d'informations du disque.

11. Ensemble de disque optique selon la revendication 10, dans lequel ledit couvercle (303) ne fait pas partie intégrante dudit disque et peut être fixé à celui-ci, dans lequel ledit couvercle (303) peut en particulier être fixé de manière réversible au disque, ou être fixé de manière mobile au disque, ou être fixé de manière articulée au disque.

12. Ensemble de disque optique selon la revendication 10 ou 11, dans lequel ledit couvercle (303) consiste essentiellement en une matière sélectionnée dans le groupe consistant en plastique et/ou verre, et en particulier ledit couvercle consiste essentiellement en polystyrène ou polycarbonate.

13. Ensemble de disque optique selon l'une quelconque des revendications 10 à 12, dans lequel ledit ensemble a un diamètre dans un plan radial entre 110 - 130 mm et une profondeur entre 1,1 - 1,3 mm.

14. Ensemble de disque optique selon l'une quelconque des revendications 10 à 13, dans lequel ladite structure non opérationnelle est disposée sur un côté dudit couvercle (303) proche du disque.

**FIG. 1A**

FIG. 1B

FIG. 1C

**FIG. 2A**

**FIG. 2B**

**FIG. 3A**

## FIG. 3B

**FIG. 3C**

Laser Beam

**FIG. 3D**

Laser Beam

**FIG. 3E**

Laser Beam

**FIG. 4**

**FIG. 5A**

**FIG. 5B**

**FIG. 5C**

**FIG. 5D**

**FIG. 6A**

**FIG. 6B**

**FIG. 7A**

**FIG. 7B**

FIG. 8

view angle

light angle

X 2.000 µm/div
Z 2500.000 nm/div

0 deg

Sphere on Wobble Groove

*FIG. 9*

EP 1 125 136 B1

## Section Analysis

nM

1687

687

-313

0          2.50          5.00          7.50

μM

| | | |
|---|---|---|
| L | 562.50 | nM |
| RMS | 72.881 | nM |
| lc | DC | |
| Ra(lc) | 21.437 | nM |
| Rmax | 79.940 | nM |
| Rz | 66.462 | nM |
| Rz Cnt | 4 | |
| Radius | 301.86 | nM |
| Sigma | 40.332 | nM |

**Spectrum**

Sphere on Wobble Groove
grating.013

DC                          Min

| | | |
|---|---|---|
| Surface distance | 631.28 | nM |
| Horiz distance(L) | 562.50 | nM |
| Vert distance | 171.70 | nM |
| Angle | 16.975 | deg |
| Surface distance | 5.531 | μM |
| Horiz distance | 3.266 | μM |
| Vert distance | 2.407 | μM |
| Angle | 36.388 | deg |
| Surface distance | | |
| Horiz distance | | |
| Vert distance | | |
| Angle | | |
| Spectral period | DC | |
| Spectral freq | 0 Hz | |
| Spectral RMS amp | 469.97 | nM |

*FIG. 10*

EP 1 125 136 B1

FIG. 11

## Section Analysis

nm

| L | 6.672 | µm |
|---|---|---|
| RMS | 782.05 | nm |
| lc | DC | |
| Ra(lc) | 284.31 | nm |
| Rmax | 1.187 | µm |
| Rz | 868.11 | nm |
| Rz Cnt | 4 | |
| Radius | 3.512 | µm |
| Sigma | 426.35 | nm |

**Spectrum**

| Surface distance | 10.707 | µm |
|---|---|---|
| Horiz distance(L) | 7.984 | µm |
| Vert distance | 11.549 | nm |
| Angle | 0.083 | deg |
| Surface distance | 8.179 | µm |
| Horiz distance | 6.672 | µm |
| Vert distance | 1.860 | µm |
| Angle | 15.575 | deg |
| Surface distance | | |
| Horiz distance | | |
| Vert distance | | |
| Angle | | |
| Spectral period | DC | |
| Spectral freq | 0 Hz | |
| Spectral RMS amp | 493.32 | nm |

Cells on Wobble Groove
grating.016

DC                Min

*FIG. 12*

EP 1 125 136 B1

FIG. 13

Tek [Stop:] 5.00MS/s          0 Acqs

A2 ▷

R4 ▷

1 ↓

Ch1  500mV                              M  10.0μs  Ch1 ∫      1.22V

**FIG. 14**          [Ref4]    Ax2  500mV
                              500mV   10.0μs

EP 1 125 136 B1

EP 1 125 136 B1

Tek Stop: 5.00MS/s          0 Acqs

Ch1  500mV                              M 10.0μs  Ch1 ⌐    1.22V

Ax2  500mV
Ref3     500mV     10.0μs

**FIG. 15**

FIG. 16

EP 1 125 136 B1

*FIG. 17*

Tek [Stop:] 5.00MS/s          O Acqs

A2 ▷

R3 ▷

1 ↓

Ch1  500mV                    M 10.0μs  Ch1 ⌐   1.22V

                    Ax2  500mV
[Ref3]    ,500mV    10.0μs

FIG. 18

EP 1 125 136 B1

**FIG. 19**

**FIG. 20**

**FIG. 21**

**FIG. 22**

**FIG. 23**

**FIG. 24**

**FIG. 25**

**FIG. 26**

**FIG. 27**

**FIG. 28**

**FIG. 29**

**FIG. 30**

| | |
|---|---|
| L | 800.78 nm |
| RMS | 17.366 nm |
| lc | DC |
| Ra(lc) | 13.284 nm |
| Rmax | 57.853 nm |
| Rz | 57.853 nm |
| Rz Cnt | 2 |
| Radius | 1.427 µm |
| Sigma | 4.388 nm |

Spectrum

| | |
|---|---|
| Surface distance | 912.31 nm |
| Horiz distance(L) | 898.44 nm |
| Vert distance | 100.00 nm |
| Angle | 6.351 deg |
| Surface distance | 969.10 nm |
| Horiz distance | 957.03 nm |
| Vert distance | 7.528 nm |
| Angle | 0.451 deg |
| Surface distance | 817.07 nm |
| Horiz distance | 800.78 nm |
| Vert distance | 0.740 nm |
| Angle | 0.053 deg |
| Spectral period | DC |
| Spectral freq | 0 Hz |
| Spectral RMS amp | 4.523 nm |

rm159in.000

**Cursor: average Zoom: 2:1     Cen line: Off     Offset: Off**

FIG. 31

EP 1 125 136 B1

## Section Analysis

| | | |
|---|---|---|
| L | 820.31 | nM |
| RMS | 18.016 | nM |
| lc | DC | |
| Ra(lc) | 13.505 | nM |
| Rmax | 62.560 | nM |
| Rz | 61.145 | nM |
| Rz Cnt | 2 | |
| Radius | 1.431 | µM |
| Sigma | 5.174 | nM |

Spectrum

| | | |
|---|---|---|
| Surface distance | 991.89 | nM |
| Horiz distance(L) | 976.56 | nM |
| Vert distance | 101.23 | nM |
| Angle | 5.918 | deg |
| Surface distance | 1.050 | µM |
| Horiz distance | 1.035 | µM |
| Vert distance | 7.648 | nM |
| Angle | 0.423 | deg |
| Surface distance | 840.65 | nM |
| Horiz distance | 820.31 | nM |
| Vert distance | 3.315 | nM |
| Angle | 0.232 | deg |
| Spectral period | DC | |
| Spectral freq | 0 | Hz |
| Spectral RMS amp | 1.189 | nM |

DC                    Min

rm159out.000

**Cursor: average Zoom: 2:1          Cen line: Off    Offset: Off**

FIG. 32

EP 1 125 136 B1

# Section Analysis

| | | |
|---|---|---|
| L | 683.59 | nm |
| RMS | 21.794 | nm |
| lc | DC | |
| Ra(lc) | 16.951 | nm |
| Rmax | 67.772 | nm |
| Rz | 66.682 | nm |
| Rz Cnt | 2 | |
| Radius | 820.71 | nm |
| Sigma | 8.514 | nm |

Spectrum

| | | |
|---|---|---|
| Surface distance | 956.26 | nm |
| Horiz distance(L) | 937.50 | nm |
| Vert distance | 107.52 | nm |
| Angle | 6.543 | deg |
| Surface distance | 1.084 | µm |
| Horiz distance | 1.074 | µm |
| Vert distance | 4.127 | nm |
| Angle | 0.220 | deg |
| Surface distance | 715.65 | nm |
| Horiz distance | 683.59 | nm |
| Vert distance | 3.943 | nm |
| Angle | 0.330 | deg |
| Spectral period | DC | |
| Spectral freq | 0 | Hz |
| Spectral RMS amp | 3.603 | nm |

DC                    Min

m160in.000

Cursor: average Zoom: 2:1          Cen line: Off     Offset: Off

FIG. 33

EP 1 125 136 B1

## Section Analysis

| L | 664.06 nm |
|---|---|
| RMS | 20.135 nm |
| lc | DC |
| Ra(lc) | 14.972 nm |
| Rmax | 66.116 nm |
| Rz | 64.871 nm |
| Rz Cnt | 2 |
| Radius | 824.44 nm |
| Sigma | 8.988 nm |

Spectrum

| Surface distance | 878.62 nm |
|---|---|
| Horiz distance(L) | 859.38 nm |
| Vert distance | 102.80 nm |
| Angle | 6.821 deg |
| Surface distance | 1.046 µm |
| Horiz distance | 1.035 µm |
| Vert distance | 4.540 nm |
| Angle | 0.251 deg |
| Surface distance | 695.52 nm |
| Horiz distance | 664.06 nm |
| Vert distance | 2.814 nm |
| Angle | 0.243 deg |
| Spectral period | DC |
| Spectral freq | 0 Hz |
| Spectral RMS amp | 3.340 nm |

DC

Min

M160out.000

**Cursor: average Zoom: 2:1        Cen line: Off    Offset: Off**

FIG. 34

EP 1 125 136 B1

FIG. 35

*FIG. 36*

FIG. 37A

20 femtomoles

FIG. 37B

20 attomoles

FIG. 37C

20 zeptomoles

FIG. 38

*FIG. 39*

*FIG. 40*

EP 1 125 136 B1

| AWM Muri | Supplementary sheet, mold acceptance test | | | CD-3-AWM |
|---|---|---|---|---|

| | | | | | | | | |
|---|---|---|---|---|---|---|---|---|
| Job No | 36-10236 | Agent | CR-R | Ram hold | vac + mech | | IFPI | - |
| SM Order No | 9N.96293 | Customer | Eximpo CS | Ram dia. | 24 | | Product Code No. | 256 |

*Dimensions*

| | | 0° | 90° | 180° | 270° | | Visual faults | | | | |
|---|---|---|---|---|---|---|---|---|---|---|---|
| 0°=mold at top | R15 | 1.15 | 1.155 | 1.15 | 1.15 | mm | Streaks | 1/4 | Center hole | ✓ |
| *Thickness* | R40 | 1.155 | 1.155 | 1.155 | 1.155 | mm | | 1/4 | Stacking groove | ✓ |
| | | | | | | | | 1/4 | Info | ✓ |
| Center hole 15.05+/−0.3 | | 15.05 | Drm. 120+/−0.3 __ mm | | | | Clouds | 1/2 | | ✓ |
| | | | | | | | Voids | 1 | | ✓ |
| *Weight in g* | Min | 0 | 15 | 30 | 45 | 60 | Black dots | 3 | | ✓ |
| Measure every 15 min. | g | 15.26 | 15.27 | 15.26 | 15.26 | 15.26 | Matt outer edge | 3 | | ✓ |
| during test | g | | 15.26 | 15.26 | 15.26 | 15.26 | Burrs | 3 | | ✓ |
| Max. diff±0.1 g | | | | | | | | 3 | Center hole | ✓ |
| | | | | | | | | 3 | Outer Edge | ✓ |
| *Water in mold* | ACTUAL | | DESIRED | | Tol. | | Scratches | 3 | | ✓ |
| Sprue bush | 9 | ltr./Min. | 7 | | −1/+3 | | Diesel effect | 3 | | ✓ |
| Embosser | 6 | ltr./MIN. | 7 | | −1/+3 | | Brown Discoloration | 5 | | ✓ |

| *Vacuum* | | without | with | diff. | tol. | | *Molding compound cold* | |
|---|---|---|---|---|---|---|---|---|
| Handling | bar | | | | | | Thickness of cavity (3) | 1.462 |
| Ram | bar | | | | | | Venting gap (5) | 0.33 |
| | | | | | | | Position of embosser (9) | 0.876 |
| *Mold Function* | | | Raw material | | | | Position of spure bush (10) | 0.162 |
| Embosser | ✓ | | Makrolon 2005 ✓ | | | | Embossing stroke | 0.7 |
| Sprue ejector | ✓ | | Lexan 1020 | | | | | |
| Ejector sleeve | ✓ | | Panlite 5503 | | | | *Measuring means* | |
| Sprue bush | ✓ | | | | | | Polarized light | 1 |
| | | | | | | | Halogen light | 2 |
| *Air outlet* | | | | | | | Neon Light | 3 |
| FS dia. | ✓ | | | | | | Black (UV Light) | 4 |
| BS dia. | ✓ | | | | | | White paper | 5 |
| | | | | | | | Micrometer | 6 |
| | | | | | | | Balance | 7 |

*FIG. 41A*

EP 1 125 136 B1

## Graph 1. Injection — Holding pressure

Cycle illustrated: 533957
Curve display: continuous

$\uparrow$PM 2714  PM$\downarrow$ 1024  PM$\downarrow$ 873  PI$\downarrow$ 0  PI PM

U mm/s
125
100
75
50
25
S
mm  30  20  10  0  0.5  1.0  1.5  2.0  2.5  s
bar
1250
1000
750
500
250
T
S mm
8
6
4
2
0

S$\downarrow$ 29.0 $\leftarrow$T$\rightarrow$ 0.33  S$_{V/P}$ 4.0  S$\downarrow$3.7

DVD_F50

## FIG. 41B

## 01.01 Mold movement

| | | | | | |
|---|---|---|---|---|---|
| Closing movement | | Closing time | T32 | = | 000. |
| | V33 =100% | S33 = 019.0mm | | | |
| Pressure initiation | V34 =100% | S34 = 000.7mm | | | |
| Opening movement | | Opening time | T36 | = | 000. |
| | V41 =100% | S41 = 055.0mm | | | |
| Broking | V42 =010% | | | | |
| Pause time | T40 =000.000s | Mold position | S640 | = | 075. |

Mold closing pressures
Closing pressure   P682 =085%
Pressure Build-up   P681 =020%    T681 = 000.10s

C608 = 0   Switched off

## 02.01 Summary of mold auxiliary controls/robotics

Enable removal   T680 = 0065.0

Delays

| | | | | | |
|---|---|---|---|---|---|
| Blow off sprue | T602 = 000.03 | Sprue blowing time | T603 | = | 000.1 |
| Advance ejector pin | T53 = 000.10s | | | | |
| Transfer stroke forward | T55 = 000.12s | | | | |
| Transfer Stroke return | T56 = 000.15s | Extend removal | T668 | = | 000.2 |
| Embosser forward | T62 = 001.20s | Embosser return | T63 | = | 000.1 |
| Blow on nozzle side | T75 = 000.50s | Nozzle side blowing time | T74 | = | 000.8 |
| Blow on moving side | T671 = 000.00 | Moving side blowing time | T71 | = | 000.1 |
| Unit Forward | T680 = 000.70s | | | | |
| Starting program | C683 = 00000 | T683 = 000.00s | S683 | = | 0004. |
| Cyle time | T11 = 009.05s | | | | |
| Removal time | T640 = 000.70s | | | | |

**FIG. 41C**

EP 1 125 136 B1

## 03.01 Metering

| | | | |
|---|---|---|---|
| Screw retraction | C17 = 0 | Switched off | |

| | | | |
|---|---|---|---|
| Metering | | Metering time    T21 = 005.9 | |
| Delay | T20 = 000.50 s | | |
| Metering stages | C124 = 2 | | |

| | | | |
|---|---|---|---|
| | S23 = 026.0 mm | P23 = 0060 bar | N23 = 100 1. |
| Metering end point | S24 = 029.0 mm | P24 = 0010 bar | N24 = 020 1. |

| | | | |
|---|---|---|---|
| Holding pressure | P27 = 0010 bar | Start of injection | SO = 029.0 |

## 04.01 Injection

| | | | |
|---|---|---|---|
| Enable injection | S682 = 0002.0 mm | Screw position | S641 = 029.0 |

| | | | | |
|---|---|---|---|---|
| Injection values | C121 = 10 | Start of injection | SO | = 029.0 |
| | V196 = 0050 mm/s | S196 = 030.0 mm | | |
| | V197 = 0062 mm/s | S197 = 027.6 mm | | |
| | V198 = 0085 mm/s | S198 = 025.6 mm | | |
| | V199 = 0115 mm/s | S199 = 024.0 mm | | |
| | V200 = 0120 mm/s | S200 = 019.8 mm | | |
| | V201 = 0110 mm/s | S201 = 016.2 mm | | |
| | V202 = 0085 mm/s | S202 = 009.5 mm | | |
| | V203 = 0065 mm/s | S203 = 008.0 mm | | |
| Enable V/P changeover | V204 = 0040 mm/s | S204 = 004.0 mm | | |
| Forcible changeover | V205 = 0025 mm/s | S205 = 001.5 mm | T2 | = 000.3 |
| | | V/P changeover point | S11 | = 004.0 |

| | | | | |
|---|---|---|---|---|
| Flow number | S121 = 018.2 mm | S122 = 015.0 mm | C125 | = 2776 |
| Pressure monitoring | | Peak pressure | P125 | = 01044 |
| First stage | P101 = 01300 bar | T201 = 00.02 s | | |
| Second stage | P102 = 01100 bar | T201 = 00.02 s | S102 | = 006.0 |

FIG. 41D

EP 1 125 136 B1

## 04.02 Holding pressure, cooling

| | | | | | | | |
|---|---|---|---|---|---|---|---|
| Holding pressure values | C122 | = | 04 | Changeover point | S11 | = | 004.0 |
| | P12 | = | 00550 bar | | | | |

| | | | | | | |
|---|---|---|---|---|---|---|
| | P117 | = | 00420 bar | T117 | = | 000.20 |
| | P118 | = | 00380 bar | T118 | = | 000.40 |
| | P119 | = | 00200 bar | T119 | = | 000.90 |
| Holding pressure time | | | | T120 | = | 002.00 |
| Cooling time | T39 | = | 005.30 s | | | |

| | | | | | | |
|---|---|---|---|---|---|---|
| Melt cushion monitoring | | | | Melt cushion | S19 | = | 003.7 |
| Upper limit | S219 | = | 010.0 MM | Lower limit | S119 | = | 000.5 |

## 05.01 Nozzles, unit, purging/dry cycles

| | | | | | | |
|---|---|---|---|---|---|---|
| Standstill monitoring | C606 | = | 60 min | C640 = | 0004 min | |

Unit

| | | | | | | |
|---|---|---|---|---|---|---|
| Unit forward | T680 | = | 000.70 s | V29 | = | 030 % |

| | | | | | | |
|---|---|---|---|---|---|---|
| Lift | T30 | = | 000.30 s | V30 | = | 050 % |

Unit set-up and manual movements

| | | | | | | |
|---|---|---|---|---|---|---|
| Move forward | V816 | = | 030 % | Lift V806 = | 030 % | |

Purge/dry cycle/clean

| | | | | | | | | |
|---|---|---|---|---|---|---|---|---|
| Number of metering strokes | C16 | = | 20 | C201 = | 50 | | | |
| Metering | S16 | = | 028.0 mm | P16 = | 0060 bar | N16 | = | 200 |
| Injection | S18 | = | 001.5 mm | V101 = | 05 mm/s | | | |
| Delay for purging | T606 | = | 000.00 s | | | | | |

*FIG. 41E*

## 06.01 Temperature control, plastifier zones/temperature control devices

| Zone/description | Set point | Actual value | Reduced | Tolerance minus | Tolerance plus | Heating outputs | Cooling |
|---|---|---|---|---|---|---|---|
| 10 Melt temperature | 310° C | 305° C | 180° C | 040° C | 040° C | | |
| 30 Nozzle | 330° C | 330° C | 180° C | | 040° C | 014% | |
| 13 Nozzle | 315° C | 315° C | 180° C | 040° C | 040° C | 025% | |
| Cylinder head | 310° C | 310° C | 180° C | 040° C | 040° C | 008% | |
| 15 Compression | 305° C | 305° C | 180° C | 040° C | 040° C | 005% | |
| 16 Compression | 305° C | 308° C | 180° C | 040° C | 040° C | 006% | |
| 18 Feed | 300° C | 295° C | 180° C | 040° C | 040° C | 070% | |
| 20 Inlet | 060° C | 060° C | 060° C | 040° C | 040° C | | 024 |

| Zone/description | Set point | Actual value | Reduced | Tolerance minus | Tolerance plus | Heating outputs | Cooling |
|---|---|---|---|---|---|---|---|
| 24 Heating/cooling device | 112° C | 093° C | 050° C | 020° C | 020° C | 000% | 000 |
| 25 Heating/cooling device | 114° C | 091° C | 050° C | 040° C | 020° C | 000% | 000 |

## 08.01 Disk transfer

| | | | | | | |
|---|---|---|---|---|---|---|
| Peripheral interface | C684 | = | 0 | Without signal acknowledgement | | |
| Buffer switch-off size | C680 | = | 65000 | | | |
| Production delay | T682 | = | 001.00 s | C605 | = 0 | With interruption of cycle |
| Max. transfer time | T601 | = | 001.00 s | | | |

*FIG. 41F*

EP 1 125 136 B1

## 09.01 Production control

| | | | | |
|---|---|---|---|---|
| Application | C340 = | 2 | No application | |
| Data set number | C315 = | 100 | | |

Production sequence

| | | | | | | |
|---|---|---|---|---|---|---|
| | | | Piece counter | C324 = | 29270 | |
| Item number | C303 = | 1 | Cycle counter | C325 = | 29270 | |
| Cycle time | T11 = | 009.05 s | Failure rate | C718 = | 30.56% | |
| Production preperation | | | Reason | C357 = | 00 | |

## 10.01 Process statistics

| | | | | |
|---|---|---|---|---|
| Q monitoring | C340 = | 2 | Monitoring without screenning out | |
| Q report | C700 = | 0 | No report | |

| | cycles of which | | out of tolerance | | failure rate | |
|---|---|---|---|---|---|---|
| Total | C325 = | 29270 | C318 = 8946 | | C718 = | 30.56% |
| Random sample | C326 = | 29269 | C338 = 8946 | | C738 = | 30.56% |

| Process variables | Set Point x | Tolerance +/− | Actual Value x | Mean xq | Scatter 3s | Out of Tolerance |
|---|---|---|---|---|---|---|
| Metering time | 1.20 | 0.30 | 5.98 s | 2.32 | 5.408 | −06786 |
| Injection start | 30.1 | 2.0 | 29.0 mm | 28.6 | 0.82 | 2028 |
| Injection time | 0.47 | 0.20 | 0.33s | 0.39 | 0.105 | 0 |
| V/P changeover point | 3.5 | 1.0 | 4.0 mm | 4.0 | 0.04 | 0 |
| Melt cushion | 4.2 | 1.0 | 3.7 mm | 3.8 | 0.25 | 0 |
| ? peak value | 600 | 200 | 871 bar | 682 | 99.9 | −06566 |
| ? peak value | 0 | | 0 bar | 0 | 0.0 | |
| Flow number | 2500 | 300 | 2776 | 2441 | 99.9 | 359 |
| Cycle time | 3.90 | 0.50 | 9.05 s | 5.08 | 6.421 | −06570 |

*FIG. 41G*

EP 1 125 136 B1

## 10.02 Configuration of the quality monitoring

Reaction: Process data outside tolerance
Switch—off behavior    C703=0    no reaction

## 10.03 Q report intermediate store

Manufacturer
Machine No.    DVD_F50

Job data

**FIG. 41H**

## 16.01 System characteristics

Machine data

| Machine type | DISCJET 600/110 | Order number | DVD_F50 |
| Control version | PAC 13.54 | IMC 12.26 | CEL 10.31 |
| Database version | DB 05.80 | Date created | 23.10.1996 |
| Special | 350400 | Version | 17106 |

Mold data
Installed height    S90  =  160 mm

Plasticizing                          Identification  C806 =    024                                              C804 =  0024
Ram nominal diameter          S801       =  032.0 mm          Max metering stroke          S802 =  100.0
Max. permissible melt pressure    PB00=01482 bar              Max. specific melt pressure  P802 =  01482 bar
Max. permissible backpressure  P801       =  0317 bar

| Temperatures | Set point/actual value | Tolerance −/+ | | Heating | Cooling |
|---|---|---|---|---|---|
| Cabinet | TH1 = 035 026° C | 030° C | 010° C | | |
| Oil | TH2 = 050 051° C | 041° C | 011° C | 000% | 005 |

**FIG. 41I**

EP 1 125 136 B1